# EUROPEAN PATENT APPLICATION

(11) **EP 4 667 343 A2**
(43) Date of publication of application: **24.12.2025**
(21) Application number: 25183160.8
(22) Date of filing: 17.06.2025
(51) Int. Cl.: B62M 6/55, B62M 11/06, B62M 25/08, B62M 9/12

(54) **MULTISPEED DRIVE UNIT FOR AN ELECTRIC BICYCLE**

(30) Priority: 20.06.2024 US 202463662286 P; 21.11.2024 US 202463723374 P; 15.06.2025 US 202519238462
(71) Applicant: SRAM, LLC., Chicago, IL 60607 (US)
(72) Inventor: Hahn, Sage, Chicago, 60607 (US); Shipman, Christopher, Chicago, 60607 (US); Jordan, Brian, Chicago, Chicago (US)
(74) Representative: Thum, Bernhard

(57) **Abstract**

A torque transmission device for a drive unit (700) of a bicycle (100) includes a shaft (880) having an opening extending through the shaft (880). The torque transmission device includes a lever having a seat (964), a foot (966), and a tooth (968). The lever is movably attached to the shaft (880), such that the seat (964) of the lever is rotatable on a surface of the shaft (880) at least partially defining the opening. The tooth (968) of the lever is engageable with internal teeth (908b) of a gear (908) disposable about the shaft (880), and the foot (966) of the lever is engageable with a cam (932) disposable within the shaft (880). The lever is movably attached to the shaft (880), such that the foot (966) of the lever is biased away from the outer circumferential surface of the shaft (880). A distance between the seat (964) and the foot (966) is greater than a distance between the tooth (968) and the seat (964).

## Description

This application claims the benefit of U.S. Provisional Patent Application 63/662,286, filed June 20, 2024, and U.S. Provisional Patent Application 63/723,374, filed November 21, 2024, the contents of which are hereby incorporated by reference in their entirety.

### Background

### 1. Field of the Disclosure

The present disclosure is generally directed to an electric bicycle, and more particularly, to a multispeed drive unit for an electric bicycle.

### 2. Description of Related Art

A bicycle with a pedal assist electric motor (e.g., an electric bicycle or an e-bike) may provide motor assistance to a rider. The electric bicycle may include a transmission to provide a comfortable pedaling cadence for varying riding conditions and speeds for the number of rider selectable support levels. The transmission may provide a plurality of gear ratios to the rider to provide the comfortable pedaling cadence for the rider.

### Summary

In one example, a torque transmission device for a drive unit of an electric bicycle includes a first shaft that is hollow and has an outer circumferential surface, an inner circumferential surface, and an opening extending from the outer circumferential surface of the first shaft, through a portion of the first shaft, to the inner circumferential surface of the first shaft. At least one wall extends from the outer circumferential surface of the first shaft, through the portion of the first shaft, to the inner circumferential surface of the first shaft and defines the opening. The torque transmission device includes a second shaft disposed within the first shaft, such that the first shaft and the second shaft are rotatable relative to each other. The second shaft has an outer circumferential surface. The torque transmission device includes a cam attached to and extending away from the outer circumferential surface of the second shaft, and a gear rotatably attached to the first shaft over the opening, the gear comprising internal teeth. The torque transmission device includes a lever having a seat, a foot, and a tooth. The lever is movably attached to the first hollow shaft, such that the seat of the lever is received and rotatable within a recess within the at least one wall of the first hollow shaft. The tooth of the lever is engageable with the internal teeth of the gear, and the foot of the lever is configured to contact the cam extending away from the outer circumferential surface of the second shaft. The lever is movably attached to the first hollow shaft, such that the foot of the lever is biased away from the outer circumferential surface of the first shaft. A distance between the seat of the lever and the foot of the lever is greater than a distance between the tooth of the lever and the seat of the lever.

In one example, a distance between the tooth of the lever and the foot of the lever is greater than the distance between the tooth of the lever and the seat of the lever.

In one example, the first shaft also has a groove extending away from the recess within the at least one wall of the first hollow shaft. The torque transmission device further includes a spring disposed within the groove. The spring has a first end and a second end opposite the first end. The first end of the spring is attached to the first shaft at a position along the groove, and the second end of the spring is attached to the lever, such that the lever is biased away from the outer circumferential surface of the first shaft.

In one example, the opening is a first opening, the cam is a first cam, the gear is a first gear, the lever is a first lever, and the internal teeth are first internal teeth. The first shaft also has a second opening extending from the outer circumferential surface of the first shaft, through the portion of the first shaft, to the inner circumferential surface of the first shaft. The second opening is adjacent to the first opening along a length of the first shaft. The torque transmission device further includes a second cam attached to and extending away from the outer circumferential surface of the second shaft, and a second gear rotatably attached to the first shaft over the second opening. The second gear includes second internal teeth. The torque transmission device further includes a second lever disposed within the second opening. The second lever has a seat and a tooth. The second lever is movably attached to the first hollow shaft, such that the seat of the second lever is received and rotatable within a recess partially forming the second opening through the portion of the first shaft. The tooth of the second lever is engageable with the second internal teeth of the second gear.

In one example, the first gear has first external teeth, and the second gear has second external teeth. A number of the first internal teeth is the same as a number of the second internal teeth. A number of the first external teeth is different than a number of the second external teeth.

In one example, the second shaft is a cam shaft. The cam shaft includes a first alignment feature at the outer circumferential surface of the cam shaft, and a second alignment feature at the outer circumferential surface of the cam shaft. The second alignment feature is offset relative to the first alignment feature in a circumferential direction of the cam shaft. The second alignment feature is different than the first alignment feature.

In one example, each of the first cam and the second cam is annular and has an inner circumferential surface and an outer circumferential surface. Each of the first cam and the second cam has a third alignment feature that corresponds to the first alignment feature of the cam shaft, and a fourth alignment feature that corresponds to the second alignment feature of the cam shaft, at the respective inner circumferential surface. The third alignment features of the first cam and the second cam, respectively, engage with the first alignment feature of the cam shaft, and the fourth alignment features of the first cam and the second cam, respectively, engage with the second alignment feature of the cam shaft.

In one example, the first alignment feature is a first groove extending along a length of the cam shaft. The first groove has a first cross-sectional shape. The second alignment feature is a second groove extending along the length of the cam shaft. The second groove has a second cross-sectional shape. The second cross-sectional shape is different than the first cross-sectional shape. The third alignment feature is a first rib extending across a height of the respective cam of the first cam and the second cam. The first rib has the first cross-sectional shape. The fourth alignment feature is a second rib extending across the height of the respective cam of the first cam and the second cam. The second rib has the second cross-sectional shape.

In one example, each of the first cam and the second cam is annular and has an inner circumferential surface and an outer circumferential surface. The first cam includes a first cam lobe having a first raised surface. The first raised surface is at a first radial distance relative to the outer circumferential surface of the first cam. The second cam includes a second cam lobe having a second raised surface. The second raised surface is at a second radial distance relative to the outer circumferential surface of the second cam. The first cam lobe and the second cam lobe are offset circumferentially relative to the second shaft. The tooth of the first lever is configured to engage with the first internal teeth of the first gear when the foot of the first lever is in contact with the first raised surface of the first cam lobe, and the tooth of the second lever is configured to engage with the second internal teeth of the second gear when the foot of the second lever is in contact with the second raised surface of the second cam lobe.

In one example, the second shaft is hollow. The torque transmission device further includes a shift motor assembly configured to rotate the second shaft relative to the first shaft. The shift motor assembly includes a shift motor including a stator and a rotor, a gear reducer engaged with the rotor of the shift motor, a printed circuit board electrically and physically connected to the stator of the shift motor, and an electrical transmitter configured to transmit electrical signals to and from the printed circuit board. At least two components of the group including the shift motor, the gear reducer, and the electrical transmitter are disposed within the hollow second shaft.

In one example, the electrical transmitter is a slipring. The shift motor, the gear reducer, and the slipring are all disposed within the hollow second shaft.

In one example, the torque transmission device further includes a plurality of additional cams attached to and extending away from the outer circumferential surface of the second shaft. The cam and the plurality of additional cams are positioned about and along the second shaft. A radially outermost surface of the cam and the plurality of additional cams is opposite and adjacent the inner circumferential surface of the first shaft, such that no cams of the cam and the plurality of additional cams contact the first shaft.

In one example, the torque transmission device further includes an inner race attached to and extending away from the outer circumferential surface of the second shaft, a first bearing positioned between the inner race and the inner circumferential surface of the first shaft, and a second bearing positioned between the second shaft and the inner circumferential surface of the first shaft. The second bearing is a distance away from the first bearing in a direction along a length of the second shaft. The second shaft is rotatable relative to the first shaft via the first bearing and the second bearing.

In one example, the second shaft is hollow. The torque transmission device further includes a shift motor assembly disposed within the second shaft. The shift motor assembly is configured to rotate the second shaft relative to the first shaft. The shift motor assembly includes a shift motor including a stator and a rotor, and a gear reducer. The gear reducer includes a housing attached to the second shaft, a plurality of gears, where a first gear of the plurality of gears is engaged with the rotor of the shift motor, and an output shaft engaged with a second gear of the plurality of gears. The output shaft is rotatable relative to the housing. The torque transmission device further includes a spring connected to the output shaft of the gear reducer and the first shaft, such that rotation of the output shaft of the gear reducer in a first rotational direction acts on the first shaft and causes the housing of the gear reducer and the second shaft to rotate relative to the first shaft in a second rotational direction. The second rotational direction is opposite the first rotational direction.

In one example, the spring is a flat coil torsion spring having an enclosed opening, a first surface at a first end of the spring, and a second surface at a second end of the spring. The first shaft has a notch at least partially defined by a first surface and a second surface extending between the outer circumferential surface and the inner circumferential surface of the first shaft. The torque transmission device further includes a drive arm attached to the output shaft of the gear reducer. The enclosed opening of the spring is disposed about the drive arm, such that rotation of the drive arm via the output shaft of the gear reducer acts on the spring. A portion of the spring is disposed within the notch, such that the first surface of the spring is in contact with the first surface of the notch and the second surface of the spring is in contact with the second surface of the notch when the output shaft of the gear reducer is stationary relative to the second shaft.

In one example, the torque transmission device further includes a shift motor assembly configured to rotate the second shaft relative to the first shaft. The shift motor assembly includes a shift motor including a stator and a rotor. The stator of the shift motor is attached to the second shaft. The shift motor assembly also includes a printed circuit board (PCB) electrically and physically connected to the stator of the shift motor. The shift motor assembly also includes a first sensor supported by and electrically connected to the PCB. The first sensor is configured to generate first data. The first data represents a number of rotations of the rotor of the shift motor. The shift motor assembly also includes a second sensor electrically connected to the PCB. The second sensor is configured to generate second data. The second data represents an absolute rotational position of the second shaft relative to the first shaft. The torque transmission device also includes a processor configured to determine a relative position of the second shaft and the rotor of the shift motor based on the generated first data and the generated second data.

In one example, the torque transmission device further includes an electrical transmitter configured to transmit electrical signals to and from the printed circuit board. The electrical transmitter includes a stator and a rotor. The rotor of the electrical transmitter is attached to the printed circuit board. The second sensor is attached to the rotor of the electrical transmitter. The torque transmission device also includes a first magnet attached to the rotor of the shift motor. The first sensor being configured to generate the first data includes the first sensor being configured to sense a rotational position of the first magnet. The torque transmission device also includes a second magnet attached to the first shaft adjacent to the second sensor. The second sensor being configured to generate the second data includes the second sensor being configured to sense an absolute rotational position of the second sensor relative to the second magnet.

In one example, a torque transmission device for a drive unit of an electric bicycle includes a jackshaft that is hollow and has an outer circumferential surface, an inner circumferential surface, and an opening extending from the outer circumferential surface of the jackshaft, through a thickness of the jackshaft. The torque transmission device also includes a camshaft disposed within the jackshaft. The jackshaft has an outer circumferential surface. The torque transmission device also includes a cam attached to and extending away from the outer circumferential surface of the camshaft, and a gear rotatably attached to the jackshaft over the opening. The gear includes internal teeth. The torque transmission device also includes a pawl having a seat, a foot, and a tooth. The pawl is disposed within the opening through the jackshaft and movably attached to the jackshaft, such that the pawl is rotatable within the opening through the jackshaft with the seat of the pawl in contact with the jackshaft. The tooth of the pawl is engageable with the internal teeth of the gear, and the foot of the pawl is configured to contact the cam extending away from the outer circumferential surface of the camshaft. A distance between the seat of the pawl and the foot of the pawl is greater than a distance between the tooth of the pawl and the seat of the pawl.

In one example, the pawl is movably attached to the jackshaft, such that the foot of the pawl is biased away from the outer circumferential surface of the jackshaft.

In one example, a torque transmission device for a drive unit of a bicycle includes a shaft that is hollow and has an outer circumferential surface, an inner circumferential surface, and an opening extending from the outer circumferential surface, through a thickness of the shaft, to the inner circumferential surface. The torque transmission device also includes a lever having a seat, a foot, and a tooth. The lever is movably attached to the shaft, such that the seat of the lever is in contact with and rotatable on a surface at least partially defining the opening. The tooth of the lever is engageable with internal teeth of a gear disposable about the shaft, and the foot of the lever is engageable with a cam disposable within the shaft. The lever is movably attached to the shaft, such that the foot of the lever is biased away from the outer circumferential surface of the shaft. A distance between the seat of the lever and the foot of the lever is greater than a distance between the tooth of the lever and the seat of the lever.

### Brief Description of the Drawings

Objects, features, and advantages of the present invention will become apparent upon reading the following description in conjunction with the drawing figures, in which:
FIG. 1 shows a side view of one example of an electric bicycle including a multispeed drive unit in accordance with the teachings of this disclosure;
FIG. 2 is a block diagram of an example of an electromechanical control system;
FIG. 3 is a block diagram of an example of an electric bicycle;
FIG. 4 is a block diagram of another example of an electric bicycle;
FIG. 5 is a block diagram of an example of an operation component; and
FIG. 6 is a perspective view of one example of a drive unit for an electric bicycle;
FIG. 7 is a front view of the drive unit of FIG. 6;
FIG. 8 is a rear view of the drive unit of FIG. 6;
FIG. 9 is a cross-section of the drive unit of FIG. 7, taken along axis 9-9;
FIG. 10 is the cross-section of a housing of the drive unit of FIG. 9;
FIG. 11 is a perspective view of a first part of the housing of FIG. 10;
FIG. 12 is a perspective view of a second part of the housing of FIG. 10;
FIG. 13 is the cross-section of a geartrain of the drive unit of FIG. 9;
FIG. 14 is a top view of the geartrain of FIG. 13;
FIG. 15 is a top view of a spindle assembly of the geartrain of FIG. 14;
FIG. 16 is a cross-section of the spindle assembly of FIG. 15;
FIG. 17 is a first cross-section of the spindle assembly of FIG. 16, taken along axis 17-17;
FIG. 18 is a second cross-section of the spindle assembly of FIG. 16, taken along axis 18-18;
FIG. 19 is a third cross-section of the spindle assembly of FIG. 16, taken along axis 19-19;
FIG. 20 is a fourth cross-section of the spindle assembly of FIG. 16, taken along axis 20-20;
FIG. 21 is a perspective view of a first example of a bearing for the spindle assembly of FIG. 15;
FIG. 22 is a perspective view of a second example of a bearing for the spindle assembly of FIG. 15;
FIG. 23 is a top view of a cadence wheel of the spindle assembly of FIG. 15;
FIG. 24 is a perspective view of a gear of an output gear cluster of the spindle assembly of FIG. 15;
FIG. 25 is a perspective view of another gear of the output gear cluster of the spindle assembly of FIG. 15;
FIG. 26 is a top view of a jackshaft assembly of the geartrain of FIG. 14;
FIG. 27 is a cross-section of the jackshaft assembly of FIG. 26;
FIG. 28 is a perspective view of a jackshaft of the jackshaft assembly of FIG. 27;
FIG. 29 is a perspective view of a first portion of the jackshaft assembly of FIG. 26;
FIG. 30 is a perspective view of a cam shaft assembly of the jackshaft assembly of FIG. 26;
FIG. 31 is a cross-section of the cam shaft assembly of FIG. 30;
FIG. 32 is a perspective view of a cam shaft of the cam shaft assembly of FIG. 30;
FIG. 33 is a perspective view of a cam of the cam shaft assembly of FIG. 30;
FIG. 34 is a top view of the cam of FIG. 33;
FIG. 35 is a cross-section of the cam shaft assembly of FIG. 31, taken along axis 35-35;
FIG. 36 is a front view of a lever of the jackshaft assembly of FIG. 29;
FIG. 37 is a first perspective view of the lever of FIG. 36;
FIG. 38 is a second perspective view of the lever of FIG. 36;
FIG. 39 is a perspective view of a second portion of the jackshaft assembly of FIG. 26;
FIG. 40 is a cross-section of the jackshaft assembly of FIG. 27, taken along axis 40-40;
FIGS. 41A-C show the cross-section of the jackshaft assembly of FIG. 40 with a lever and the camshaft assembly in different positions, respectively;
FIG. 42 is a perspective view of a third portion of the jackshaft assembly of FIG. 26;
FIG. 43 is a perspective view of a shift motor assembly of the jackshaft assembly of FIG. 42;
FIG. 44 is a cross-section of the shift motor assembly of FIG. 43;
FIG. 45 is a top view of a spring connectable to a shift motor assembly and a jackshaft of the jackshaft assembly of FIG. 42;
FIGS. 46A-C show the cross-section of the jackshaft assembly of FIG. 40 with a lever and a camshaft assembly in different positions, respectively;
FIGS. 47A-C show a cross-section of a portion of the jackshaft assembly of FIG. 42, taken along axis 47-47, corresponding to positions illustrated in FIGS. 46A-C, respectively;
FIG. 48 is a top view of a motor system of the geartrain of FIG. 14;
FIG. 49 is a cross-section of the motor system of FIG. 48;
FIG. 50 is a cross-section of motor system of FIG. 49, taken along axis 50-50;
FIG. 51 is a cross-section of the jackshaft assembly of FIG. 27, taken along axis 51-51;
FIGS. 52A-D show the cross-section of the jackshaft assembly of FIG. 40 with a camshaft assembly in different positions, respectively;
FIGS. 53A-D show a cross-section of the jackshaft assembly of FIG. 27, taken along axis 53-53, with the camshaft assembly in the different positions, respectively;
FIG. 54 is a table of example pawl positions for different gearing of the geartrain of FIG. 14;
FIGS. 55 is a schematic diagram of the drive unit of FIG. 6;
FIGS. 56-67 are schematic diagrams of the drive unit of FIG. 6, illustrating example states of the drive unit in twelve different gears, respectively;
FIG. 68 is a table illustrating examples of gear ratio for the different gears of FIGS. 56-67, respectively; and
FIG. 69 is a graph illustrating example percent changes in gear ratio when shifting from one gear to the next.

### Detailed Description of the Disclosure

A bicycle (e.g., an electric bicycle) with an electric pedal assist motor capable of driving a chainring independent of cranks is provided. The electric bicycle includes a transmission that provides a plurality of gear ratios to a rider. The plurality of gear ratios provide a comfortable pedaling cadence for varied riding conditions and speeds.

At a rider input (e.g., the pedals), the rider pedals the electric bicycle in a typical manner. The pedals drive the rear wheel through the transmission. The transmission may include multiple gears (e.g., a multi-gear transmission) to provide a desirable cadence for various speeds and conditions. The electric bicycle may also include the assist motor. The assist motor may drive the rear wheel through the multi-gear transmission. Alternatively, the assist motor may include a gear reduction to allow the assist motor to provide additional torque to the transmission or the rear wheel. A drive unit for an electric bicycle may include the assist motor and the transmission.

A multispeed drive unit (e.g., mid-ship drive unit) of the present embodiments includes a housing that supports a geartrain. The geartrain includes a spindle assembly, a jackshaft assembly, and a motor system. The spindle assembly is connectable to crank arms and a chainring of the electric bicycle. The spindle assembly is supported within and rotatable relative to the housing. The geartrain also includes a jackshaft assembly engaged with the spindle assembly. The jackshaft assembly is supported within and rotatable relative to the housing. The geartrain also includes a motor system engaged with the jackshaft assembly. Components of the motor system are supported within and rotatable relative to the housing.

The jackshaft assembly includes a jackshaft that is hollow and includes openings through the jackshaft. Pawls are supported within the openings through the jackshaft, respectively. The jackshaft assembly also includes gears positioned about the jackshaft, over the pawls, respectively. The jackshaft assembly also includes a camshaft assembly positioned within and rotatable relative to the hollow jackshaft. The camshaft assembly includes cams offset relative to each other in a circumferential direction of a camshaft of the camshaft assembly. The cams of the camshaft assembly interact with the pawls supported by the jackshaft, respectively.

The pawls are movably attached to the jackshaft, within the openings through the jackshaft with springs, respectively, such that the pawls are biased away from an outer circumferential surface of the jackshaft, respectively (e.g., out of engagement with the internal teeth of the corresponding gears of the jackshaft assembly, respectively; negatively biased). A pawl of the pawls has a seat, a foot, and a tooth. The pawl is movably attached to the jackshaft within the respective opening, with the respective spring, such that the seat of the pawl is received and rotatable within part of a wall at least partially forming the respective opening through the jackshaft. The tooth of the pawl is engageable with the internal teeth of the respective gear, and the foot of the pawl is configured to contact the respective cam. In one embodiment, a distance between the tooth of the pawl and the foot of the pawl is greater than a distance between the tooth of the pawl and the seat of the pawl. Alternatively or additionally, a distance between the seat of the pawl and the foot of the pawl is greater than the distance between the tooth of the pawl and the seat of the pawl.

A foot-tooth-seat-shaped, negatively biased pawl of the present embodiments has a distance between the foot and the seat that is greater than a distance between the tooth and the seat, such that when shifting, forces on the foot of the negatively biased pawl may be reduced compared to pawls of the prior art.

In an embodiment, pawls are configured to both rotate about an axis of the pawl, and translate relative to a shaft and about an axis of the shaft.

The camshaft assembly includes the camshaft and modular cams that may be positionable about and along the camshaft. The camshaft includes a first alignment feature and a second alignment feature at the outer circumferential surface of the camshaft. The first alignment feature and the second alignment feature extend along at least part of a length of the camshaft and are offset relative to each other in a circumferential direction of the camshaft (e.g., a circumferential distance). Each of the cams includes a third alignment feature and a fourth alignment feature that extend along at least part of a height of the respective cam. A shape and a position of the third alignment feature at the respective cam may correspond to a shape and a position of the first alignment feature at the camshaft, and a shape and a position of the fourth alignment feature at the respective cam may correspond to a shape and a position of the second alignment feature at the camshaft. For example, the circumferential distance between the first alignment feature and the second alignment feature at the camshaft may match a circumferential distance between the third alignment feature and the fourth alignment feature at the respective cam.

A shape of the first alignment feature may be different than a second alignment feature, and thus, a shape of the third alignment feature may be different than a shape of the fourth alignment feature, such that each of the cams may only be positioned on the camshaft in one orientation of the respective cam relative to the camshaft. For example, one of the first alignment feature and the second alignment feature may be a circular groove, and the other of the first alignment feature and the second alignment feature may be a rectangular groove. Correspondingly, one of the third alignment feature and the fourth alignment feature may be a circular rib, and the other of the third alignment feature and the fourth alignment feature may be a rectangular rib. More, fewer, and/or different alignment features may be provided.

In an embodiment, the first alignment feature and the second alignment feature form asymmetrical portions about a circumference of the camshaft. For example, the first alignment feature and the second alignment feature form different shapes and/or different sizes. In an embodiment, the first alignment feature and the second alignment feature are disposed about the circumference of the camshaft such that the first alignment feature and the second alignment feature avoid disposition in diametrically opposing positions about the circumference of the camshaft. For example, the first alignment feature and the second alignment feature may be offset by less than 180 degrees about a direction around the circumference of the camshaft.

The modular cams, the alignment features on the camshaft (e.g., the first alignment feature and the second alignment feature), and the alignment features on the cams (e.g., the third alignment feature and the fourth alignment feature) provide a flexible, cost-effective build-up of the camshaft assembly, a reliable and stable addition of cams to the camshaft, and a form-fitting connection of the cams and the camshaft.

The jackshaft assembly also includes a shift motor assembly configured to move (e.g., rotate) the camshaft relative to the jackshaft. The shift motor assembly includes a shift motor including a stator and a rotor, a gear reducer engaged with the rotor of the shift motor, and an electrical transmitter configured to transmit electrical signals to components within and outside of the jackshaft assembly. In one embodiment, at least two components of the shift motor, the gear reducer, and the electrical transmitter are disposed within the camshaft. In one embodiment, the shift motor, the gear reducer, and the electrical transmitter are all disposed within the camshaft.

An outermost surface (e.g., radially outermost surface) of the camshaft assembly (e.g., a radially outermost surface of the cams of the camshaft assembly) is opposite and adjacent an inner circumferential surface of the jackshaft. In other words, the camshaft assembly is not in contact with the inner circumferential surface of the jackshaft.

For example, the camshaft may include a race (e.g., an inner race) extending away from the outer circumferential surface of the camshaft. The jackshaft assembly may include a bearing positioned between the inner race of the camshaft and the inner circumferential surface of the jackshaft. The jackshaft assembly may also include a bearing positioned between the camshaft and the inner circumferential surface of the jackshaft. The camshaft may be rotatable and offset (e.g., radially) relative to the jackshaft via the rotatable connection of the camshaft to the jackshaft at the bearings.

The bearing of the camshaft against the jackshaft minimizes a friction on the cams of the camshaft assembly. In other words, providing space between outermost cam surfaces and the jackshaft by, for example, bearing the camshaft reduces shifting forces. This may allow a smaller shifting motor to be used compared to the prior art.

The shift motor assembly is configured to rotate the camshaft relative to the jackshaft. An output shaft of the gear reducer is connected to the rotor of the shift motor via gears of the gear reducer. The torque transmission device may also include a spring connected to the output shaft of the gear reducer and the jackshaft. A housing of the gear reducer is attached to an inner circumferential surface of the camshaft, such that rotation of the output shaft of the gear reducer in a first rotational direction acts on the jackshaft and causes the housing of the gear reducer and the camshaft to rotate relative to the jackshaft in a second rotational direction that is opposite the first rotational direction.

In one embodiment, the spring is a flat coil torsion spring having an enclosed opening. The jackshaft has a notch defined by opposite surfaces extending through a portion (e.g., a thickness) of the jackshaft. The flat coil torsion spring is attached to the output shaft (e.g., via a drive arm attached to the output shaft) of the gear reducer via the enclosed opening of the flat coil torsion spring. One end of the flat coil torsion spring abuts one of the opposite surfaces defining the notch in the jackshaft, and the other end of the flat coil torsion spring abuts the other of the opposite surfaces defining the notch in the jackshaft (e.g., when the output shaft is stationary relative to the camshaft).

Use of the flat coil torsion spring (e.g., a saver spring) to shift the camshaft relative to the jackshaft may help avoid damaging the shift motor when unwanted directed torque is transmitted. A shift operation may be timed to avoid a periodically upcoming strong counterforce. Such counterforce may be used as a trigger signal by storing energy of the counterforce in the saver spring, and releasing the stored energy in a pause of the counterforce.

The jackshaft may include at least two sensors to control rotation of the camshaft relative to the jackshaft. For example, the shift motor assembly also includes a printed circuit board (PCB) electrically and physically connected to the stator of the shift motor, and a first sensor is supported by and electrically connected to the PCB. A first magnet, for example, is attached to the rotor of the shift motor, and the first sensor is configured to determine a number of rotations of the first magnet, and thus the rotor of the shift motor. A second sensor is attached to the electrical transmitter of the shift motor assembly, and a second magnet is attached to the jackshaft, opposite and adjacent to the second sensor. The second sensor is configured to determine an absolute rotational position of the second sensor relative to the second magnet. In other words, the first sensor and the second sensor may be used to determine positions of the camshaft and the jackshaft, respectively, and a relative position of the camshaft and the jackshaft may thus be monitored.

A processor of the electric bicycle (e.g., of the multispeed drive unit) may control rotation of the camshaft relative to the jackshaft based on data generated by the first sensor and the second sensor. Such control sets gearing of the multispeed drive unit to be driven by the motor system of the drive unit and/or a rider via the cranks.

The motor system may include a drive motor including a rotor, a first gear attached to the rotor of the drive motor, such that the rotor of the drive motor and the first gear rotate together, and a second gear engaged with the first gear. The motor system also includes a one-way clutch connecting the second gear with a third gear. The third gear is engaged with the jackshaft assembly. The first gear and the second gear are sized, such that the second gear is configured to rotate at a rotational speed that is at least ten percent of a rotational speed of the rotor of the drive motor.

By placing the one-way clutch (e.g., motor clutch) in the vicinity of the rotor of the drive motor (e.g., an output of the drive motor), the motor clutch may be associated with a gearing element that runs with ten percent or more of a rotational speed of the drive motor. This allows a size and a cost of the motor clutch be minimized. In an embodiment, it has been identified that a clutch associated with a gearing element that runs with fifteen percent or more rotational speed is particularly beneficial. For example, a clutch associated with a gearing element that runs between twenty and thirty percent of a rotational speed of the drive motor (e.g. twenty seven, twenty eight, or twenty nine percent) has been found to be particularly advantageous.

The multispeed drive unit may be provided in a compact package. Further, the multispeed drive unit may provide improved shifting and may have smoother shifting with less free-play during shift operations compared to drive units of the prior art.

These and other objects, features, and advantages of the disclosed multispeed drive unit for an electric bicycle will become apparent to those having ordinary skill in the art upon reading this disclosure. Throughout the drawing figures, where like reference numbers are used, the like reference numbers represent the same or substantially similar parts among the various disclosed examples. Also, specific examples are disclosed and described herein that utilize specific combinations of the disclosed aspects, features, and components of the disclosure. However, it is possible that each disclosed aspect, feature, and/or component of the disclosure may, in other examples not disclosed or described herein, be used independent of or in different combinations with other of the aspects, features, and components of the disclosure.

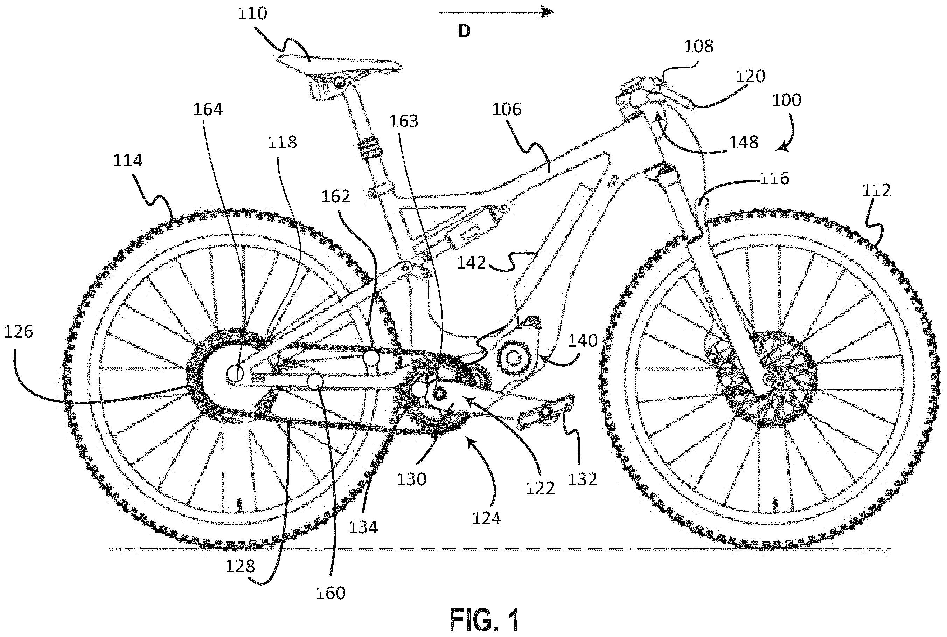

Turning now to the drawings, FIG. 1 illustrates an example bicycle 100 (e.g., e-bike or electric bicycle) that includes a frame 106, handlebars 108, and a seat 110. The bicycle 100 also includes a first or front wheel 112 and a second or rear wheel 114. A front brake 116 and/or a rear brake 118 are included to brake the front wheel 112 and the rear wheel 114, respectively. The front brake 116 and/or the rear brake 118 are controlled by at least one brake actuator 120. The bicycle 100 includes a drive train 122 (e.g., components of which form at least part of a transmission). The drive train 122 of FIG. 1 includes a crank assembly 124 operatively coupled to a rear cog or cassette 126 via a chain 128. The crank assembly 124 includes crank arms 130 and pedals 132, as well as at least one chainring 134 configured to operatively couple with the chain 128 to transmit force and/or power exerted onto the crank assembly 124 to the chain 128. This force and/or power is transmitted to the rear cog or cassette 126 by the chain 128, whereby a motivating force and/or power is transmitted to the rear wheel 114 from the rear cog 126. While the drive train 122 of one embodiment includes a single cog, in other embodiments, the drive drain may include a cassette including a plurality of cogs. Other transmissions such as an internal gear hub, a gear box, and/or a continuously variable transmission may also be applied to the bicycle 100.

The drive train 122 may also include a power assist device 140. Pedaling torque is applied to the crank assembly 124 by a rider using the pedals 132 and crank arms 130. As described below, the pedaling torque applied by the rider may be transmitted through the power assist device 140 (e.g., a multispeed drive unit) and to the rear wheel 114. The power assist device 140 may include different selectable gear ratios. The power assist device 140 is configured to assist the rotation of the rear wheel 114. In the illustrated embodiment, the power assist device 140 is configured to assist the rotation of the rear wheel 114 via a coupled connection to the crank assembly 124. The power assist device 140 includes a power assist motor 141 that is powered by a remote power source 142.

As shown in FIG. 1, the bicycle 100 also has a handlebar mounted user interface, by way of the shift actuator or electric actuator 148. All of the electric components discussed above and/or other electric components may be connected to the remote power source or remote battery 142. Additionally, all communication between an e-bike central control system or controller, and each of these electric components is achieved through wired or wireless communication. There may be discrete control with individual wires from the central controller to each component, or the system may use a controller area network ("CAN") bus designed to allow microcontrollers and devices to communicate with each other in applications.

While the illustrated bicycle 100 is a mountain bicycle and may include suspension components, such as a shock absorbing front fork, the embodiments disclosed herein may be implemented with other types of bicycles such as, for example, road bicycles. The front and/or forward orientation of the bicycle 100 is indicated by the direction of the arrow "D" in FIG. 1. As such, a forward direction of movement of the bicycle is indicated by the direction of the arrow D.

An e-bike central control system or controller (e.g., a motor controller) may be supported by a same housing as the remote power source 142. The e-bike controller may control power from the remote power source 142 to components on the bicycle 100 such as, for example, the power assist device 140. The e-bike controller may control power to other and/or different components on the bicycle 100. The e-bike controller may send signals (e.g., instructions) to and/or receive data (e.g., instructions and/or sensor data) from components on the bicycle 100 such as, for example, a shift motor of the power assist device 140, a suspension system, and/or a seat post assembly to actuate and/or control components of the bicycle 100.

In other embodiments, the e-bike controller may be located in other locations (e.g., mounted on the handlebars) on the bicycle 100 or, alternatively, may be distributed among various components of the bicycle 100, with routing of a communication link to accommodate necessary signal and power paths. The e-bike controller may also be located other than on the bicycle 100, such as, for example, on a rider's wrist or in a jersey pocket. The communication link may include wires, may be wireless, or may be a combination thereof. In one example, the e-bike controller may be integrated with the power assist device 140 to communicate control commands between components. The e-bike controller may include, for example, a processor, a communication device (e.g., a wireless communication device), a memory, and one or more communication interfaces.

In one example, the e-bike controller wirelessly actuates the shift motor and/or the assist motor of the assist device 140 and operates the shift motor for executing gear changes and gear selection. Additionally or alternatively, the e-bike controller, for example, may be configured to control gear shifting of a front gear changer and/or the rear gear changer.

The bicycle 100 may include one or more sensors. For example, the one or more sensors include a wheel speed sensor 160 that is configured to determine a wheel speed based on sensing a sensing element 162 (e.g., a magnet) positioned on, for example, the rear wheel 114 of the bicycle 100. The one or more sensors may also include, for example, an input power sensor 163 at, for example, a crank shaft of the crank assembly 124 of the electric bicycle 100, and an output power sensor 164 at, for example, a hub of the rear wheel 114.

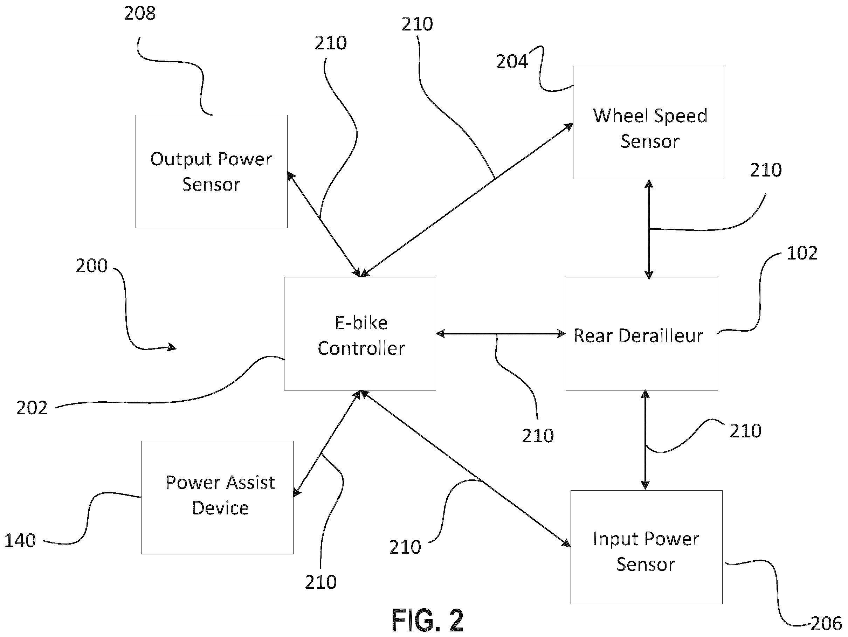

FIG. 2 shows an example of a control system 200 (e.g., an electromechanical control system) for the bicycle 100, for example. The control system 200 includes an e-bike controller 202 (e.g., a motor controller), the power assist device 140, and one or more sensors. The power assist device 140 is, for example, an assist motor.

The one or more sensors include, for example, a wheel speed sensor 204, an input power sensor 206, and an output power sensor 208. For example, the wheel speed sensor 204 measures a rotational speed of at least one of the wheels 114, 112, the input power sensor 206 measures input torque and cadence at the crank shaft of the crank assembly 124, and the output power sensor 208 measures output torque and angular velocity at, for example, the rear wheel 114. In one embodiment, the one or more sensors may include at least two wheel speed sensors 206, one for the front wheel 112 and one for the rear wheel 114.

The wheel speed sensor 204, the input power sensor 206, and the output power sensor 208 may be any number of different types of sensors. For example, the wheel speed sensor 204 may be a combined speed and cadence sensor. The speed and cadence sensor may include a spoke magnet attached to a spoke of the front wheel 112 or the rear wheel 114 and/or a cadence magnet attached to one of the crank arms 130, and a sensor attached to the frame 106 of the bicycle 100 (e.g., a Hall effect sensor). The sensor attached to the frame 106 of the bicycle is configured to identify and count rotations of the one crank arm 130 and/or the front wheel 112 or the rear wheel 114 based on the cadence magnet and/or the spoke magnet passing the sensor attached to the frame 106, respectively. The input power sensor 206 and the output power sensor 208 may include, for example, power meters.

The control system 200 may include more, fewer, and/or different sensors. For example, the one or more sensors may include a torque sensor that measures a torque on the crank assembly 124 and/or a torque on an output shaft of the assist motor 141. Any number of different types of torque sensors may be provided. For example, the torque sensor may include magnetoelastic torque sensors, strain gauges, SAW devices, and/or other types of torque sensors. In one embodiment, the torque sensor is a current sensor that measures current through the assist motor 141. The amount of current consumed by the assist motor 141 is proportional to a torque the assist motor 141 applies to a drivetrain of the bicycle 100. As another example, the control system 200 may include an incremental position sensor (e.g., for a shift motor) and an absolute position sensor (e.g., for a position of a camshaft relative to a jackshaft).

As shown in the embodiment of FIG. 2, the power assist device 140 and the one or more sensors (e.g., the wheel speed sensor 204, the input power sensor 206, and the output power sensor 208) may be in direct communication with the e-bike controller 202. Alternatively or additionally, at least some components of the control system 200 may be in indirect communication with the e-bike controller 202. For example, the wheel speed sensor 204, the input power sensor 206, and/or the output power sensor 208 may be in direct or indirect communication with the e-bike controller 202 another component or device, such as a bicycle computer. In one embodiment, the e-bike controller 202 is in direct communication with all sensors of, for example, the wheel speed sensor 204, the input power sensor 206, and the output power sensor 208. Other and/or different components of the control system 200 may be in direct communication with all sensors of the one or more sensors (e.g., the power assist device 140). Communication between the components of the control system 200 may be wired communication and/or wireless communication.

Each communication link 210 between the components of the control system 200 may be in both directions. In other words, data flow between components of the control system 200 in direct communication may be in both directions. For example, the wheel speed sensor 204 may receive signals from the e-bike controller 202 (e.g., as to when to measure the rotational speed) and return the measured rotational speed to the e-bike controller 202.

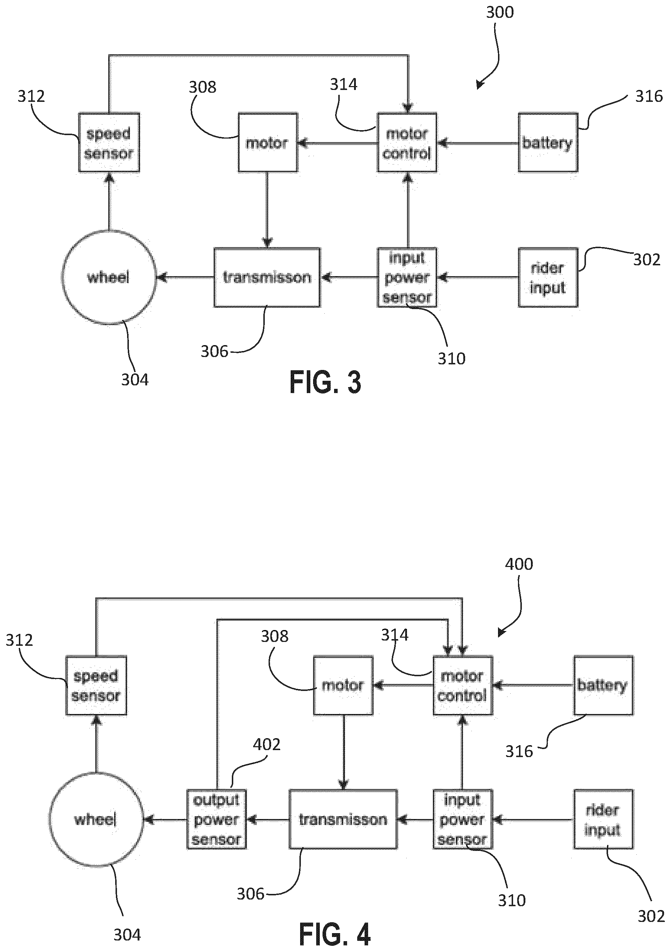

FIG. 3 is a block diagram of an example of an electric bicycle 300. A rider pedals the electric bicycle 300 at a rider input 302. The rider input 302 includes a crank arm assembly (e.g., the crank arm assembly 124 of FIG. 1). The crank arm assembly includes a crank arm (e.g., the crank arm 130 of FIG. 1) and pedals rotatably connected to the crank arm (e.g., the pedals 132 of FIG. 1). At the rider input 302, the rider pedals the electric bicycle 300 in the typical manner (e.g., via the pedals of the rider input 302).

The pedals of the rider input 302 drive a wheel 304 (e.g., the rear wheel 114 of FIG. 1) through a transmission 306. The transmission 306 may include any number of gears to provide a desirable cadence for various speeds and conditions for the electric bicycle 300. In one example, the transmission 306 is a multi-gear transmission 306 that includes one or more gear clusters within a drive unit (e.g., the power assist device 140 of FIG. 1), one or more external gears (e.g., a chain, derailleur(s), multiple coaxial sprockets), one or more internally geared rear hubs, one or more continuously variable (CV) transmissions, one or more virtual electronic transmissions, or any combination thereof. In another example, as is illustrated herein, a chain connects an output sprocket of the drive unit to a single sprocket configured to drive the rear wheel.

The electric bicycle 300 also includes a motor 308 (e.g., the power assist motor 141 of FIG. 1). The motor 308 drives the wheel 304 through the transmission 306. The motor 308 may include a gear reduction to allow the motor 308 to provide additional torque to the transmission 306 or the wheel 304. The motor 308 may be any number of different types of motors including, for example, a brushless direct current (DC) mid-drive motor. The motor 308 may be, for example, a 250 Watt motor, a 350 Watt motor, or a 500 Watt motor. Other types of motors may be used for the motor 308.

The electric bicycle 300 also includes an input power sensor 310. The input power sensor 310 may be configured to determine, for example, an input cadence and an input torque from the rider, where the input power is equal to the input cadence multiplied by the input torque. The input power sensor 310 may include any number of different types of sensors including, for example, a power meter, a strain gauge, and/or a cadence sensor. The input power sensor 310 may be located at any number of different locations of the electric bicycle 300 including, for example, a pedal axle, a pedal body, a crank shaft, and/or a crank arm of the electric bicycle 300. In other embodiments, different types of input power sensors 310 may be used, and/or the input power sensor 310 may be located in other locations of the electric bicycle 300.

The electric bicycle 300 also includes a speed sensor 312. The speed sensor 312 is configured to measure a speed of the electric bicycle 300. The speed sensor 312 may include any number of different types of sensors including, for example, rotational wheel speed sensors, global positioning system (GPS) sensors, and/or accelerometer-based speed sensors. The speed sensor 312 may be located at any number of different locations of the electric bicycle 300 including, for example, the wheel 304, a fork (e.g., a rear fork and/or a front fork), and/or a crank shaft of the electric bicycle 300. In other embodiments, different types of speed sensors 312 may be used, and/or the speed sensor 312 may be located in other locations of the electric bicycle 300.

The electric bicycle 300 also includes a controller 314 (e.g., a motor controller). The controller 314 may include any number of components. For example, the controller 314 includes one or more processors and a memory. The controller 314 may be part of the motor 308 or be separate from the motor 308 and configured to control the motor 308 via wired connections and/or wirelessly.

The motor controller 314 is in communication with the input power sensor 310 and the speed sensor 312 (e.g., via wired connections and/or wirelessly). The motor controller 314 is configured to receive bicycle speed data from the speed sensor 312 and rider input power data from the input power sensor 310. The motor controller 314 is, for example, configured to control the motor 308 based on the bicycle speed data received from the speed sensor 312 and the rider input power data received from the input power sensor 310. The motor controller 314 is configured to assist the rider in propelling the electric bicycle 300 by adding power, with the motor 308, to drive the wheel 304 of the electric bicycle 300.

The motor controller 314 may be powered by (e.g., receive electrical power from) a battery 316. The battery 316 may be a dedicated battery for the motor controller 314. In one embodiment, the battery 316 is a battery for another component of the electric bicycle 300 (e.g., the motor 308) and powers the motor controller 314 in addition to at least the other component of the electric bicycle 300.

FIG. 4 is a block diagram of another example of an electric bicycle 400. In addition to the components of the electric bicycle 300 of FIG. 3, the electric bicycle 400 of FIG. 4 also includes an output power sensor 402 (e.g., the output power sensor 208 of FIG. 2). The output power sensor 402 may be configured to determine, for example, an output power of the electric bicycle 400. The output power sensor 402 may include any number of different types of sensors including, for example, a power meter, a strain gauge, and/or a cadence sensor. The output power sensor 402 may be located at any number of different locations of the electric bicycle 400 including, for example, an output of the transmission 306, within a hub of the wheel 304, and/or on a frame of the electric bicycle 400. In other embodiments, different types of output power sensors 402 may be used, and/or the output power sensor 402 may be located in other locations of the electric bicycle 400.

The motor controller 314 may also be in communication (e.g., via wired connection and/or wirelessly) with the output power sensor 402. The motor controller 314 is configured to receive output power data from the output power sensor 402. The motor controller 314 is, for example, configured to control the motor 308 based on the bicycle speed data received from the speed sensor 312, the rider input power data received from the input power sensor 310, and the rider output power data received from the output power sensor 402. The motor controller 314 is configured to assist the rider in propelling the electric bicycle 300 by adding power to drive the wheel 304 of the electric bicycle 400.

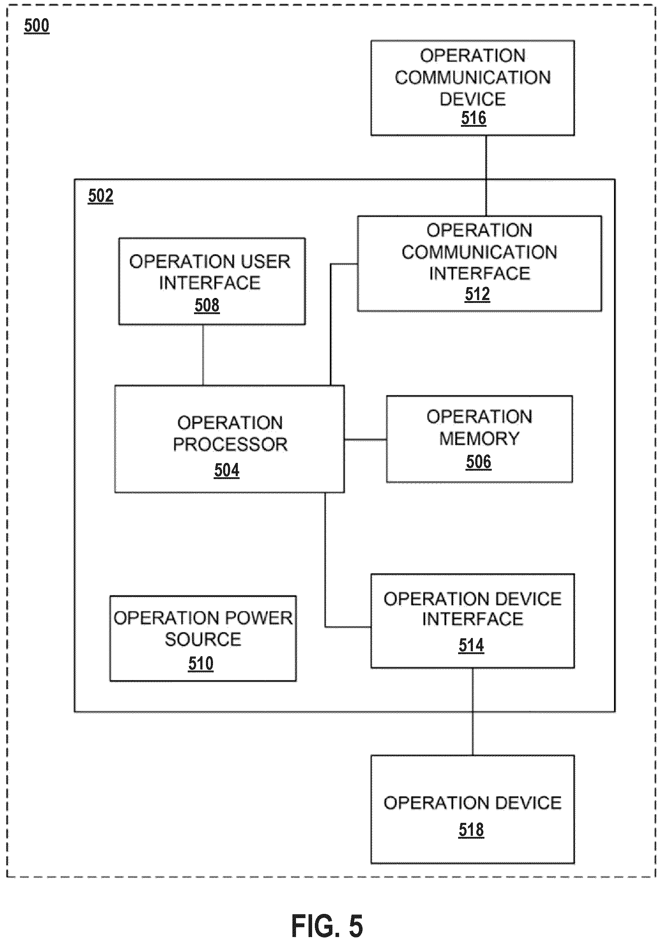

FIG. 5 is a block diagram of an operation component 500. The operation component 500 may be or may be part of one or more of the previously described components such as, for example, the e-bike controller 202, the motor controller 314, or the motor 308. The operation component 500 may also be another component, such as the power assist device 140 or an internal gearbox component (e.g., a shift motor of the power assist device 140). A plurality of operation components 500 may be provided.

The operation component 500 is provided with an operation unit 502, which may be a circuit board or an alternative configuration. The operation unit 502 includes an operation processor 504, an operation memory 506, an operation user interface 508, an operation power source 510, an operation communication interface 512, and an operation device interface 514. In an embodiment, the operation communication interface 512 is in communication with an operation communication device 516, and the operation device interface 514 is in communication with an operation device 518. Additional, different, or fewer components may be provided. For example, the operation user interface 508 may be omitted.

The structure, connections, and functions of the operation processor 504 may be representative of those of the e-bike controller 202, the motor controller 314, or another component. The operation processor 504 may include a general processor, digital signal processor, an ASIC, FPGA, analog circuit, digital circuit, combinations thereof, or other now known or later developed processor. The operation processor 504 may be a single device or combinations of devices, such as through shared or parallel processing.

The operation memory 506 may be a volatile memory or a non-volatile memory. The operation memory 506 may include one or more of a ROM, a RAM, a flash memory, an EEPROM, or other type of memory. The operation memory 506 may be removable from the operation component 500, such as an SD memory card. In a particular non-limiting, exemplary embodiment, a computer-readable medium may include a solid-state memory such as a memory card or other package that houses one or more non-volatile read-only memories. Further, the computer-readable medium may be a random access memory or other volatile re-writable memory. Additionally, the computer-readable medium may include a magneto-optical or optical medium, such as a disk or tapes or other storage device. Accordingly, the disclosure is considered to include any one or more of a computer-readable medium and other equivalents and successor media, in which data or instructions may be stored.

The operation memory 506 is a non-transitory computer-readable medium and is described to be a single medium. However, the term "computer-readable medium" includes a single medium or multiple media, such as a centralized or distributed memory structure, and/or associated caches that are operable to store one or more sets of instructions and other data. The term "computer-readable medium" shall also include any medium that is capable of storing, encoding, or carrying a set of instructions for execution by a processor or that cause a computer system to perform any one or more of the methods or operations disclosed herein.

The operation power source 510 is a portable power source, which may be stored internal to the operation component 500 or stored external to the operation component 500 and communicated to the operation component through a power conductive cable. The operation power source 510 may involve the generation of electric power, for example using a mechanical power generator, a fuel cell device, photo-voltaic cells, piezoelectric, or other power-generating devices. The operation power source 510 may include a battery such as a device consisting of two or more electrochemical cells that convert stored chemical energy into electrical energy. The operation power source 510 may include a combination of multiple batteries or other power providing devices. Specially fitted or configured battery types, or standard battery types may be used.

In the example where the operation component 500 is the motor controller 314, the operation power source 510 may be stored external to the operational component 500. In the example where the operation component 500 is the e-bike controller 202 or the motor 308, the operation power source 510 may be stored internal or external to the operation component 500. For example, the e-bike controller 202 may be supported within a housing of the remote power source 142 of FIG. 1.

The operation device interface 514 provides for operation of a component of the bicycle 100. For example, the operation device interface 514 may transmit power from the operation power source 510 to generate movement in the operation device 518. In various embodiments, the operation device interface 514 sends power to control movement of the assist motor 141, the shift motor, or any combination thereof. In one embodiment, the operation component 500 is the e-bike controller 202 or the motor controller 314, and the operation device interface 514 sends power to control movement of the power assist device 140 (e.g., the assist motor 141 and the shift motor). The operation device interface 514 includes wired conductive signals and/or data communication circuitry operable to control the operation device 518.

The operation user interface 508 may be one or more buttons, keypad, keyboard, mouse, stylus pen, trackball, rocker switch, touch pad, voice recognition circuit, or other device or component for communicating data between a user and the operation component 500. The operation user interface 508 may be a touch screen that may be capacitive or resistive. The operation user interface 508 may include an LCD panel, LED, LED screen, TFT screen, or another type of display. The operation user interface 508 may also include audio capabilities or speakers.

The operation communication interface 512 is configured to receive, with the operation communication device 516, data such as measurement data (e.g., input power, output power, rotational crank speed, rotational wheel speed, bicycle speed, and/or torque), anticipation signals, operation signals, and/or other signals from bicycle components (e.g., the wheel speed sensor 204, the input power sensor 206, the output power sensor 208, and/or the e-bike controller 202).

In one embodiment, the operation component 500 includes more than one operation communication interface 512 in communication with more than one operation communication device 516, respectively. The operation communication interface 512 may also be configured to send data such as status signals (e.g., input power sensor signals) for reception by, for example, the e-bike controller 202. The operation communication interface 512 communicates the data using any operable connection. An operable connection may be one in which signals, physical communications, and/or logical communications may be sent and/or received. An operable connection may include a physical interface, an electrical interface, and/or a data interface. One or more operation communication interfaces may provide for wireless communications through the operation communication device 516 in any now known or later developed format.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

In accordance with various embodiments of the present disclosure, methods described herein may be implemented with software programs executable by a computer system, such as components of the control system 200 (e.g., the motor controller 314, the e-bike controller 202), and/or other components on the bicycle 100 and/or worn by the user. Further, in an exemplary, non-limiting embodiment, implementations may include distributed processing, component/object distributed processing, and parallel processing. Alternatively, virtual computer system processing can be constructed to implement one or more of the methods or functionalities as described herein.

A computer program (also known as a program, software, software application, script, or code) may be written in any form of programming language, including compiled or interpreted languages, and the computer program may be deployed in any form, including as a standalone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and the apparatus may also be implemented as, special purpose logic circuitry (e.g., an FPGA or an ASIC).

As used in this application, the term 'circuitry' or 'circuit' refers to all of the following: (a) hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware, as well as other electronic components. The term "circuitry" would also cover, for example and if applicable to the particular claim element, a baseband integrated circuit or applications processor integrated circuit for a mobile computing device or a similar integrated circuit in server, a cellular network device, or other network device.

Processors suitable for the execution of a computer program include, by way of example, both general and special purpose microprocessors, and any one or more processors of any kind of digital computer. Generally, a processor receives instructions and data from a read only memory or a random access memory or both. The essential elements of a computer are a processor for performing instructions and one or more memory devices for storing instructions and data. Generally, a computer also includes, or is operatively coupled to receive data from or transfer data to, or both, one or more mass storage devices for storing data (e.g., magnetic, magneto optical disks, or optical disks). However, a computer need not have such devices. Moreover, a computer may be embedded in another device such as, for example, a mobile telephone, a personal digital assistant ("PDA"), a mobile audio player, a Global Positioning System ("GPS") receiver, a control unit, a rear derailleur, or a front gear changer, to name just a few. Computer readable media suitable for storing computer program instructions and data include all forms of non-volatile memory, media, and memory devices, including by way of example: semiconductor memory devices (e.g., EPROM, EEPROM, and flash memory devices); magnetic disks (e.g., internal hard disks or removable disks); magneto optical disks; and CD-ROM and DVD-ROM disks. The processor and the memory may be supplemented by, or incorporated in, special purpose logic circuitry.

The operation communication device 516 provides for data and/or signal communication from the operation component 500 to another component of the bicycle 100, or an external device such as a mobile phone or other computing device. The operation communication device communicates the data using any operable connection. An operable connection may be one in which signals, physical communications, and/or logical communications may be sent and/or received. An operable connection may include a physical interface, an electrical interface, and/or a data interface. The control communication device may be configured to communicate wirelessly, and as such include one or more antennae. The control communication device provides for wireless communications in any now known or later developed format.

A control antenna may also be provided. The control antenna may be a plurality of control antennae. The operation component 500 may include an antenna with circuitry of a PCB of the operation component 500; however, additional antennae may also be included in the circuitry. The control antenna may be integrated with another component of the bicycle 100 or may be an independent component. For example, the control antenna may be integrated as part of the motor controller 314, and/or the e-bike controller 202.

The motor controller 314, for example, may allow configuration of a number of ride modes that may be switched between by a control unit (e.g., the e-bike controller 202 or another controller on or outside of the bicycle 100). The control unit may switch the ride mode based on user input (e.g., via the electric actuator 148 or another interface) or automatically based on sensed conditions. In each mode, various characteristics of the ride mode may be adjusted. For example, gear hysteresis, minimum gear to shift to without pedaling, and/or other characteristics may be adjusted.

Various regional regulations limit motor assistance above a pre-determined bicycle speed (e.g., a predetermined maximum threshold speed). Electric bicycles often include multiple support levels that may be selected by the rider. The rider selectable support levels may include, for example: Eco mode (40% support); Tour mode (100% support); Sport mode (170% support); and Turbo mode (250% support). If a rider selects "Tour mode," for example, and is riding below the predetermined maximum threshold speed and inputting 100 Watts to the pedals of the electric bicycle, the assist motor of the electric bicycle will provide 100 additional Watts to a wheel (e.g., the rear wheel) of the electric bicycle.

Transmissions of electric bicycles provide a plurality of gear ratios to the rider to provide a comfortable pedaling cadence for varying riding conditions and speeds. A transmission of an electric bicycle may be included within a drive unit for the electric bicycle.

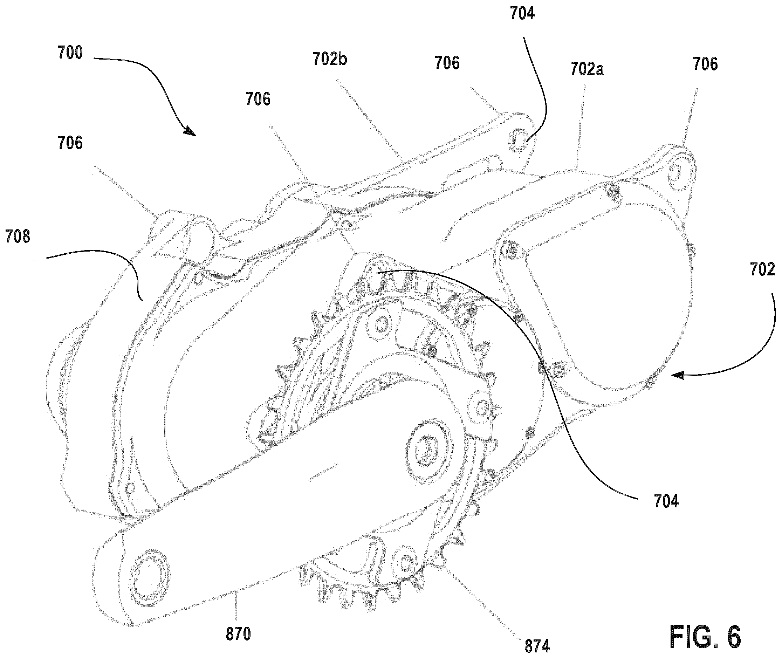

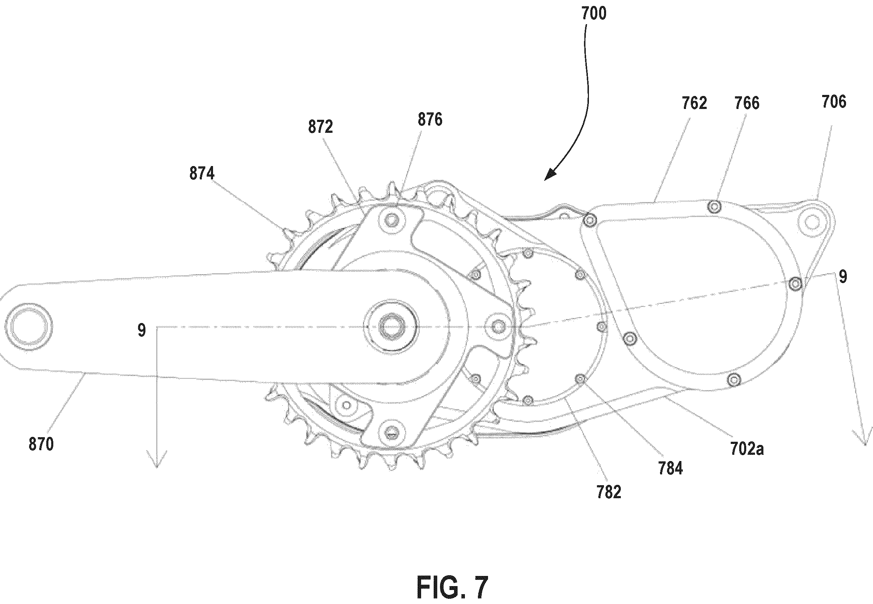

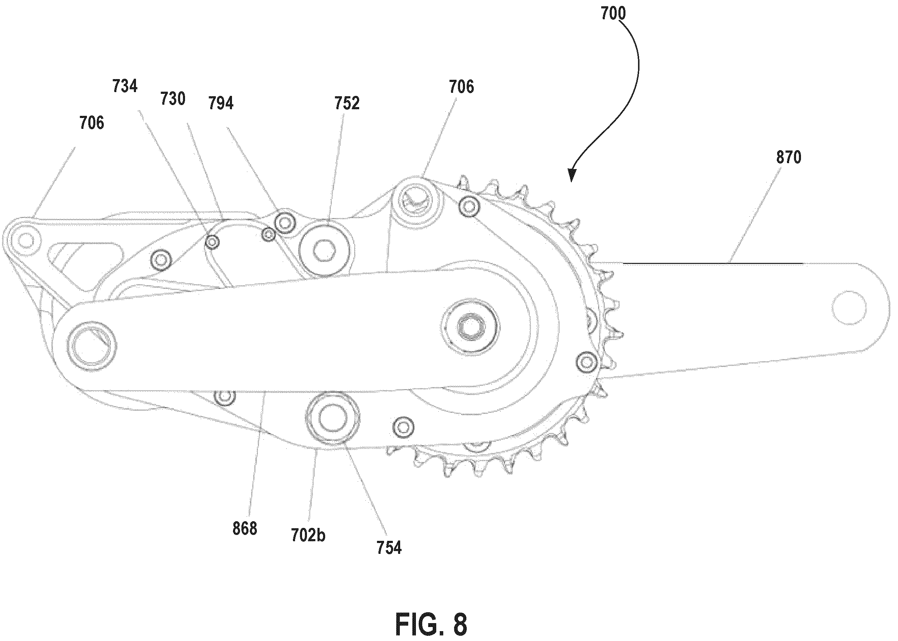

Referring to FIGS. 6-8, a drive unit 700 for an electric bicycle (e.g., the electric bicycle 100 of FIG. 1) includes a housing 702 that is configured to be mounted to a frame (e.g., the frame 106) of the electric bicycle. The housing 702 of the drive unit 700 may be mounted to the frame of the electric bicycle in any number of ways. For example, the housing 702 of the drive unit 700 may be mounted to the frame of the electric bicycle via one or more openings 704 through one or more (e.g., four) tabs 706, respectively, extending from a body 708 of the housing 702. The housing 702 of the drive unit 700 may be attached to (e.g., fixed relative to) the frame of the electric bicycle with one or more connectors (e.g., bolts) extending through the one or more openings 704 through the one or more tabs 706, respectively, into corresponding openings (e.g., threaded holes) in the frame of the electric bicycle. FIG. 7 shows a first portion 702a of the housing 702 (e.g., a drive side (DS) housing portion), and FIG. 8 shows a second portion 702b of the housing 702 (e.g., a non-drive side (NDS) housing portion) of the drive unit 700.

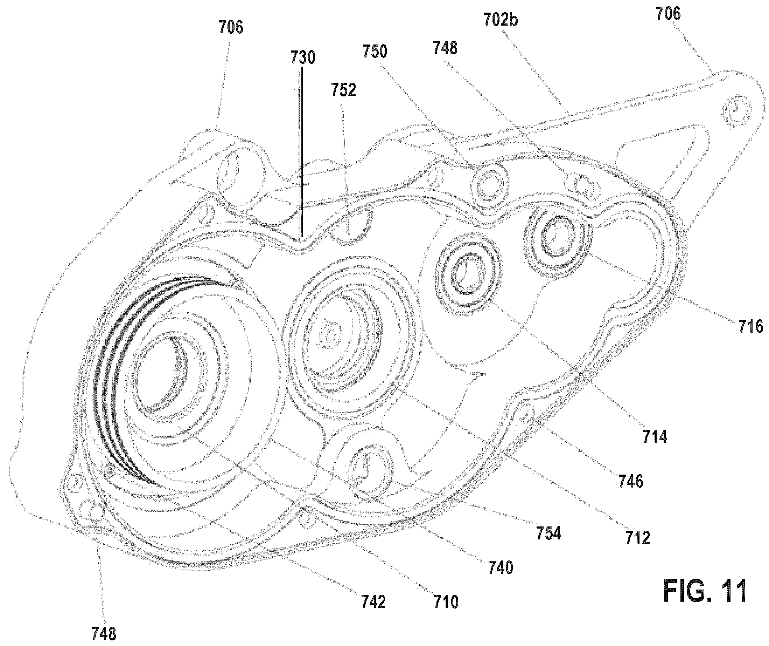

Referring to FIGS. 8, 10, and 11, the NDS housing portion 702b includes bearings 710, 712, 714, and 716 (e.g., ball bearings) and seals 718 and 720 (e.g., rubber lip seals). The ball bearing 710 is, for example, retained with a retaining clip 722. A spacer 724 (e.g., a non-drive side crank spacer) houses, for example, a seal (e.g., an O-ring 726). A cable guide 728 and a cable cover 730 are connected to the NDS housing portion 702b in any number of ways. For example, the cable guide 728 and the cable cover 730 may be connected to the NDS housing portion 702b with connectors 732, 734 (e.g., screws), respectively. The cable cover 730 includes a seal 736 (e.g., a rubber seal) that seals between the cable cover 730 and the NDS housing portion 702b. A seal 738 (e.g., a main housing rubber seal) is disposed, for example, in a groove in the NDS housing portion 702b and seals between the NDS housing portion 702b and the DS housing portion 702a.

The drive unit 700 may include one or more sensors attached to the housing 702. For example, a torque sensor 740 is attached to the NDS housing portion 702b in any number of different ways. For example, the torque sensor 740 is attached to the NDS housing portion 702b with one or more connectors 742 (e.g., screws). As another example, a cadence sensor 744 is disposed in a recess in the NDS housing portion 702b. The cadence sensor 744 may be fixed relative to the NDS housing portion 702b, within the recess of the NDS housing portion 702b in any number of different ways. For example, the cadence sensor 744 may be fixed within the recess in the NDS housing portion 702b with a potting compound.

The NDS housing portion 702b may include a number of mounting features. For example, the NDS housing portion 702b has, for example, holes 746 (e.g., six mounting bolt holes) and pins 748. The pins 748 are, for example, pressed into holes in the NDS housing portion 702b and partially protrude from a surface of the NDS housing portion 702b. In one embodiment, a seal 750 (e.g., an O-ring) is disposed in a groove surrounding a cable hole (e.g., a hole for a power cable) through the NDS housing portion 702b.

Other components associated with the housing 702 may be provided at the NDS housing portion 702b of the drive unit 700. For example, an oil fill/drain plug 752 and an oil-level sight glass 754 are attached to (e.g., threaded into) the NDS housing portion 702b.

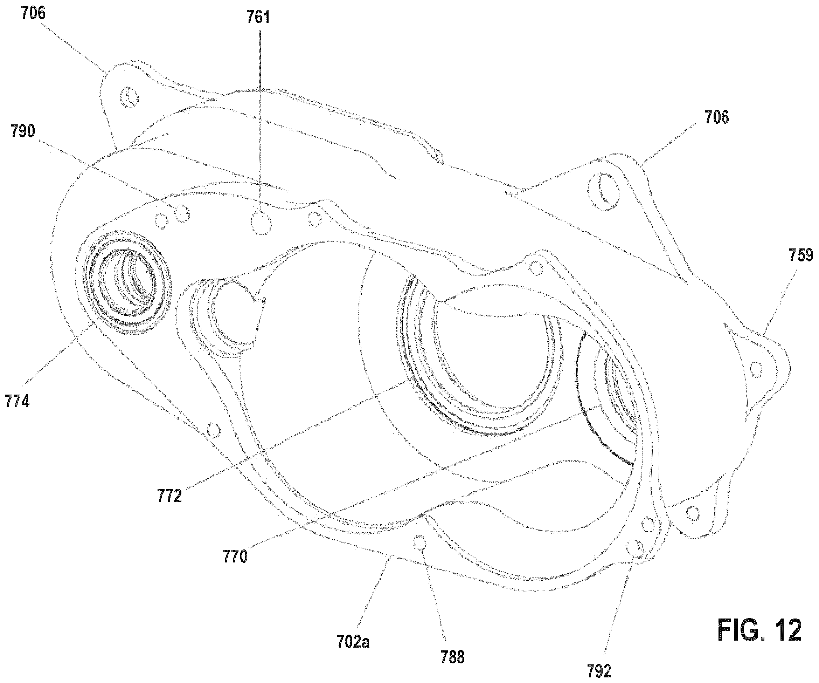

Referring to FIGS. 7, 10, and 12, the drive unit 700 includes a drive motor stator 756 attached to the housing 702. For example, the drive motor stator 756 is disposed in a recess (e.g., a cylindrically-shaped recess) in the DS housing portion 702a of the housing 702. The drive motor stator 756 may be attached to the DS housing portion 702a in any number of ways. For example, the drive motor stator 756 may be attached (e.g., fixed) to the DS housing portion 702a by a press fit, a thermal shrink fit, an adhesive, a potting compound, set screws 758, one or more other connectors, or any combination thereof.

Other components associated with the housing 702 may be provided at the DS housing portion 702a of the drive unit 700. For example, the DS housing portion 702a of the drive unit 700 may include one or more additional tabs for mounting additional components of the electric bicycle to the housing 702 of the drive unit 700. For example, the one or more additional tabs may include chain tensioner mounting tabs 759 for mounting a chain tensioner to the housing 702 of the drive unit 700. As another example, the DS housing portion 702a may include a cable tunnel hole 761 extending through at least part of the DS housing portion 702a of the drive unit 700. The cable tunnel hole 761 may be an opening through at least part of the DS housing portion 702a of the drive unit 700 for one or more cables to and/or from one or more components of the drive unit (e.g., including a power cable).

The drive unit 700 also includes a printed circuit board assembly (PCBA) 760 (e.g., a drive motor PCBA). The PCBA 760 may be supported within the drive unit 700 in any number of ways. For example, the PCBA 760 may be attached (e.g., fixed) to a drive motor cover 762 by standoffs (not shown). The PCBA 760 includes any number of components supported by and electrically connected to other components via the PCBA 760. For example, the PCBA 760 includes an encoder chip 764. The PCBA 760 may include more and/or different components. For example, the PCBA 760 may include one or more processors, memory, one or more transceivers, other electronic components, or any combination thereof.

The drive motor cover 762 may be attached to the housing 702 in any number of ways. For example, the drive motor cover 762 is attached to the DS housing portion 702a with connectors 766 (e.g., screws). The drive motor cover 762 may be sealed against the housing 702. For example, a seal 768 (e.g., a rubber seal) is disposed in a groove in the drive motor cover 762 and seals between the drive motor cover 762 and the DS housing portion 702a.

The DS housing portion 702a supports bearings for assemblies supported within the housing 702 of the drive unit 700. For example, the DS housing portion 702a includes bearings 770, 772, 774, and 776. The housing 702 of the drive unit 700 may also include additional seals. For example, the DS housing portion 702a includes seals 778 and 780 (e.g., rubber lip seals).

As discussed further below, the housing 702 of the drive unit 700 supports a transmission (e.g., including a geartrain) made up of a number of assemblies. The number of assemblies include a spindle assembly, a countershaft assembly (e.g., a jackshaft assembly), and a motor system. A cover 782 of the jackshaft assembly (e.g., a jackshaft cover) is attached to the housing 702 of the drive unit 700 in any number of ways. For example, the cover 782 of the jackshaft assembly is attached to the DS housing portion 702a with one or more connectors 784 (e.g., screws). In one embodiment, a seal 786 (e.g., a rubber seal) is disposed in a groove in the jackshaft cover 782, and seals between the jackshaft cover 782 and the DS housing portion 702a.

The DS housing portion 702a may include a number of mounting features. For example, the DS housing portion 702a has, for example, holes 788 (e.g., six threaded mounting holes) that correspond to the holes 746 (e.g., six mounting bolt holes) through the NDS housing portion 702b. The DS housing portion 702a also includes a hole 790 and a slot 792 configured to receive the pins 748 of the NDS housing portion 702b. The DS housing portion 702 may include more, fewer, and/or different mounting features.

FIGS. 6-10 show the NDS housing portion 702b and the DS housing portion 702a attached to (e.g., assembled with) each other. The pins 748 protruding from the NDS housing portion 702b are received in the hole 790 and the slot 792 in the DS housing portion 702a, locating the NDS housing portion 702b and the DS housing portion 702a relative to each other. Connectors 794 (e.g., six bolts) extend through the holes 746 (e.g., six mounting bolt holes) in the NDS housing portion 702b and are threaded into the holes 788 (e.g., six threaded mounting holes) in the DS housing portion 702a to attach the DS housing portion 702a to the NDS housing portion 702b. The NDS housing portion 702 and the DS housing portion 702a may be attached to each other in any number of other ways.

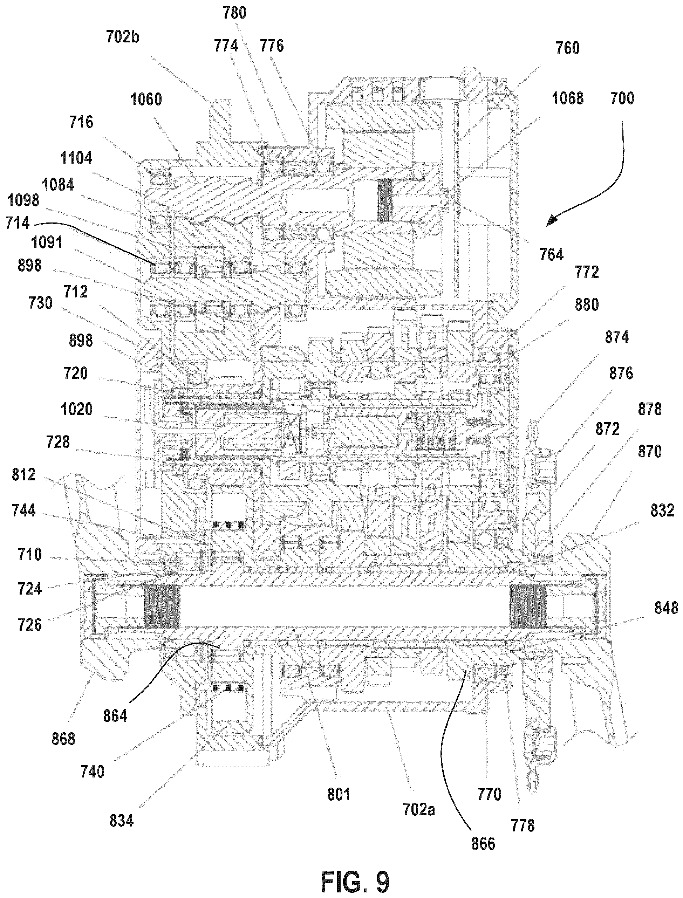

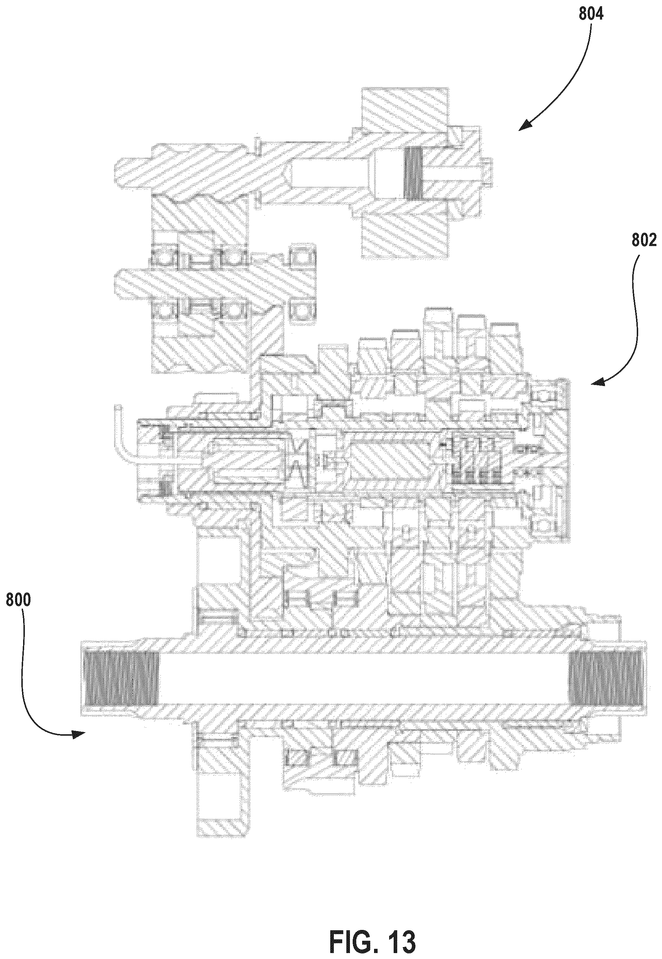

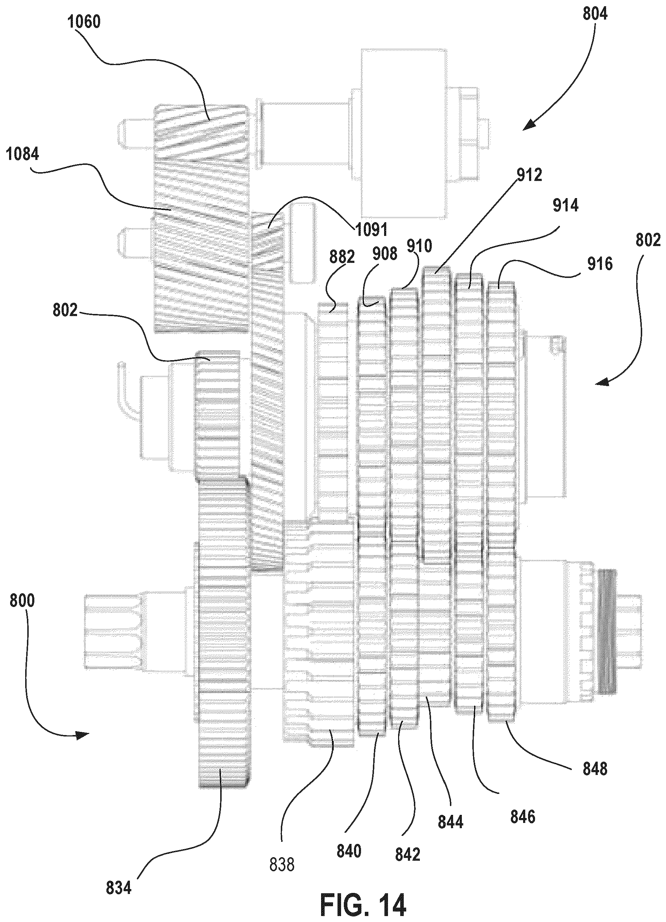

FIG. 13 is the same view as FIG. 9, but for simplicity, FIG. 13 only shows the geartrain, without the housing 702 or any parts or components associated with the housing 702. Referring to FIGS. 13 and 14, the geartrain includes a spindle assembly 800, a jackshaft assembly 802 (e.g., a countershaft assembly), and a drive motor system 804 (e.g., including a motor gearing system). Each of these assemblies will be discussed separately below.

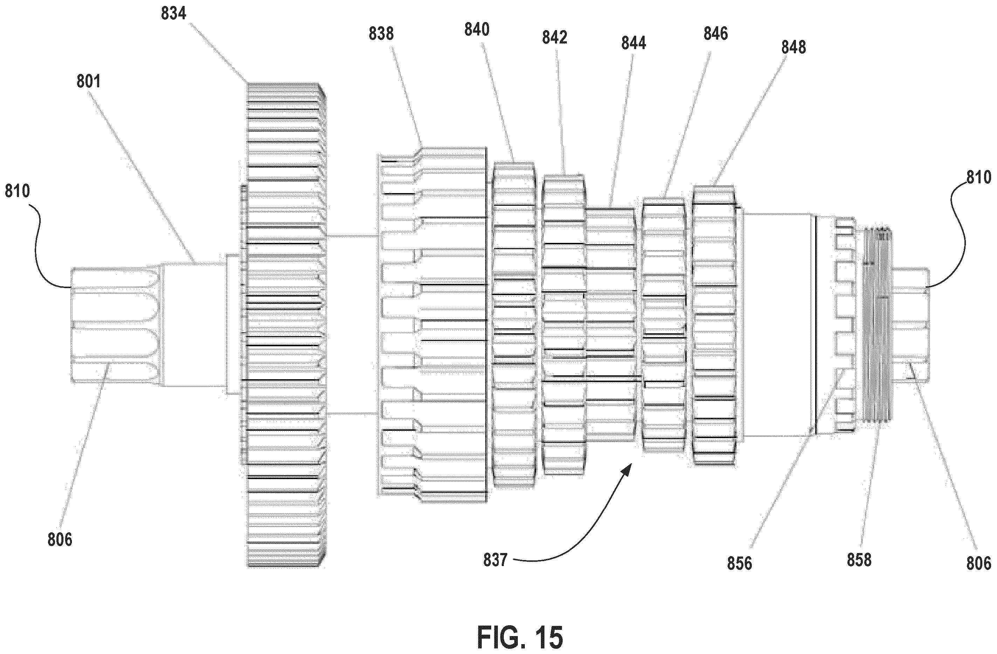

FIG. 15 shows the spindle assembly 800 of FIGS. 13 and 14, and FIG. 16 shows a cross section of the spindle assembly 800. The spindle assembly 800 includes a spindle 801 (e.g., a shaft or rod) that has splines 806 and threads 808 at each end 810 to mate with cranks of the electric bicycle (e.g., the electrical bicycle 100).

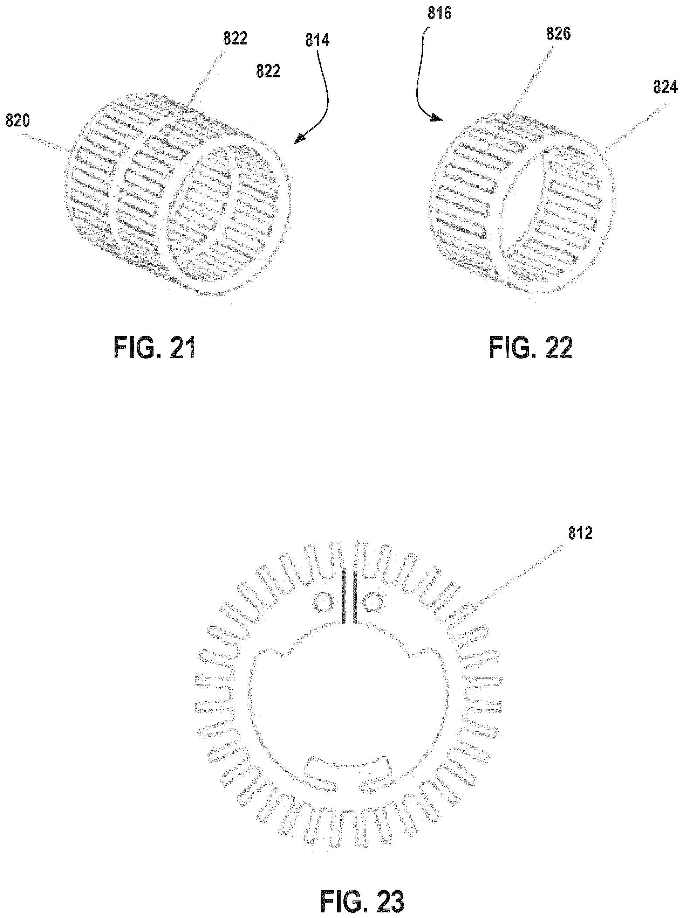

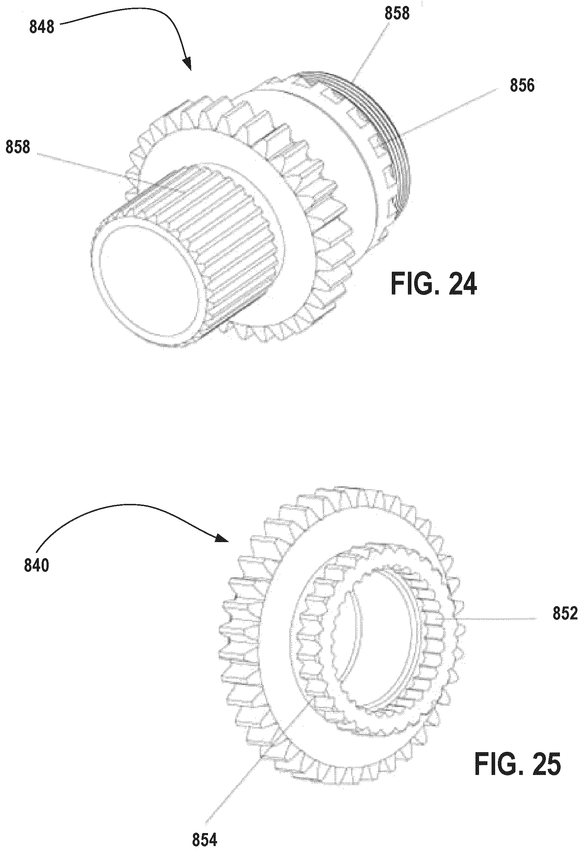

In one embodiment, referring to FIG. 23, the spindle assembly 800 includes a cadence wheel 812 that is attached to the spindle 801 at, for example, a groove within the spindle 801. The cadence wheel 812 may be annular and may have an inner diameter that is smaller than a diameter of a groove in the spindle 801, such that the cadence wheel 812 expands during installation and grips the spindle 801 tightly after installation. With such attachment, the cadence wheel 812 may be rotationally fixed to the spindle 801. Referring to FIG. 24, the cadence wheel 812 includes a number of vanes that may be sensed by the cadence sensor 744 supported by the NDS housing portion 702b of the housing 702 of the drive unit 700. The cadence wheel 812 may be made of any number of materials including, for example, spring steel.

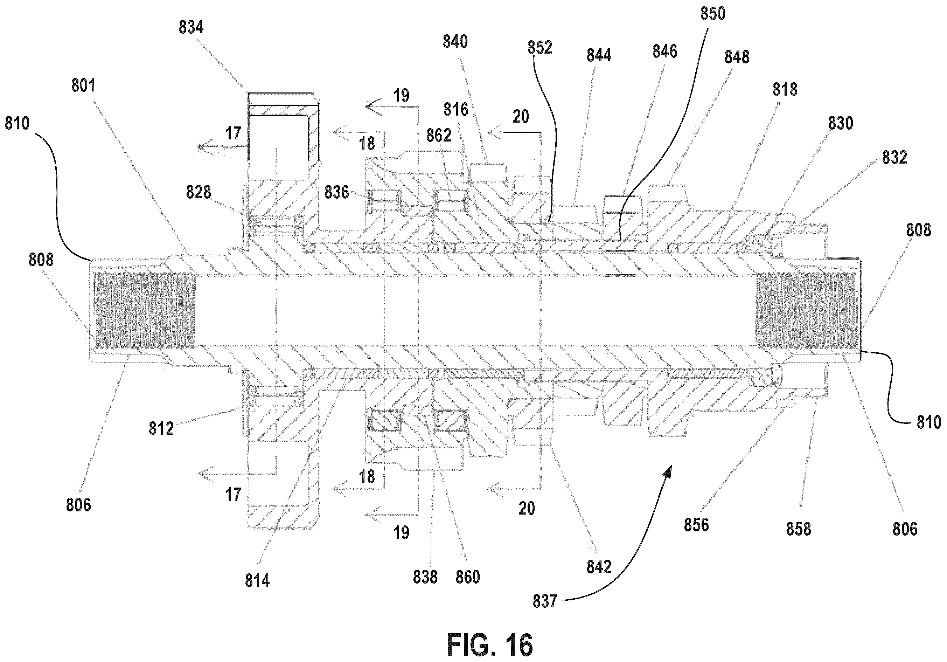

Referring to FIGS. 16, 21, and 22, a first bearing assembly 814, a second bearing assembly 816, and a third bearing assembly 818 (e.g., three roller bearing assemblies) are disposed about the spindle 801. The three roller bearing assemblies 814, 816, 818, for example, are offset relative to each other along a length of the spindle 801. In one embodiment, the third roller bearing assembly 818 is the same as the second roller bearing assembly 816. The first roller bearing assembly 814 may be different than the second roller bearing assembly 816 and the third roller bearing assembly 818, in that the first roller bearing assembly 814 has two sets of rollers side by side (e.g., a "double wide" roller bearing). The first roller bearing assembly 814 has, for example, cylindrical rolling elements 822 retained by a cage 820. Each of the second roller bearing assembly 816 and the third rolling bearing assembly 818 has, for example, cylindrical rolling elements 826 and a cage 824. More, fewer, and/or different types of bearing elements may be used.

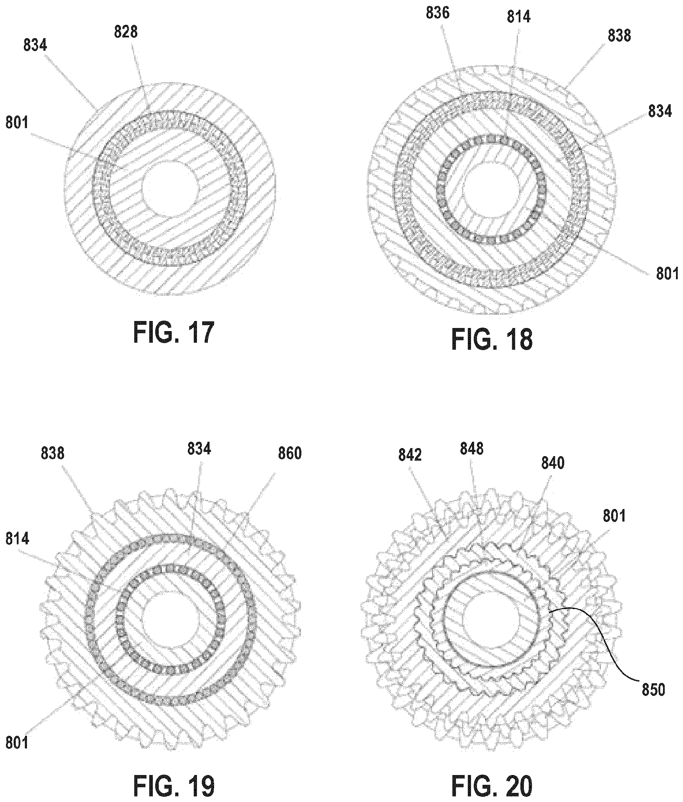

Referring to FIGS. 16 and 17, the spindle assembly 800 includes a clutch 828. The clutch 828 is, for example, a one-way clutch (e.g., a one-way rider clutch). The clutch 828 may be any number of different types of clutches including, for example, a sprag clutch. The clutch 828 is disposed about (e.g., around an outer circumference of) the spindle 801. The clutch 828 is configured to transmit rotational power from the rider but prevents rotational power from the drive motor system 804 from driving the cranks.

The spindle assembly 800 may include one or more seals. For example, the spindle assembly 800 may include a seal 830 (e.g., a rubber lip seal) that is disposed adjacent to a DS end of the spindle 801 (e.g., an end closest to the DS housing portion 702a of the housing 702). In one embodiment, a crank spacer 832 abuts a shoulder in the spindle 801.

The spindle assembly 800 includes a first gear 834 that is disposed about and rotatably received on the first roller bearing assembly 814. The first gear 834 may be rotationally driven by the one-way rider clutch 828 (e.g., a first clutch). The spindle assembly 800 also includes a second clutch 836. The second clutch 836 may be any number of different types of clutches. For example, the second clutch 836 may be a one-way sprag clutch. The second clutch 836 is disposed around an outer circumference of the first gear 834. The second clutch 836 is shown in section view in FIG. 18, which is section 18-18 of FIG. 16. Rolling elements (e.g., cylindrical rolling elements) 860 are disposed around an outer circumference of the first gear 834 and are shown in section view in FIG. 19, which is section 19-19 of FIG. 16.

Referring to FIGS. 15, 16, 20, 24, and 25, the spindle assembly 800 includes an output gear cluster 837. In one embodiment, the output gear cluster 837 includes five gears 840, 842, 844, 846, 848 (e.g., a second gear, a third gear, a fourth gear, a fifth gear, and a sixth gear). The output gear cluster 837 may include more or fewer gears. FIG. 20 shows section 20-20 of FIG. 16. The gear 848 (e.g., the sixth gear) has, for example, an external spline 850 (e.g., first external spline) that mates with internal splines on the gears 840, 844, and 846 (e.g., the second gear, the fourth gear, and the fifth gear). The gear 842 (e.g., the third gear) has internal spline 852 that mates with external spline 854 on the gear 840 (e.g., the second gear). Thus, all five gears 840, 842, 844, 846, 848, for example, of the output gear cluster 837 are rotationally fixed to each other. In other words, the output gear cluster 837 rotationally acts as a single, unitary member. Gears 840, 842, 844, 846, 848 of the output gear cluster 837 may be rotationally fixed to each other in other ways (e.g., with different splines mating). The output gear cluster 837 is rotatably supported by the second bearing assembly 816 and the third bearing assembly 818, such that the output gear cluster 837 rotates independently of the spindle 801. In other words, the output gear cluster 837 is rotatable relative to the spindle 801.

Referring to FIGS. 15, 16, and 24, the gear 848 (e.g., the sixth gear) has a second spline 856 (e.g., a chainring mounting spline) adjacent to an end of the gear 848 for interfacing with a chainring (e.g., the chainring 134), and threads 858 (e.g., lockring mounting threads) for interfacing with a lockring.

Referring to FIGS. 16, 18, and 19, a gear 838 (e.g., a seventh gear) is rotatably received on a bearing 860 (e.g., a full complement roller bearing) and may be driven by the second clutch 836 (e.g., the second one-way clutch). The spindle assembly 800 may include a third clutch 862 (e.g., a one-way sprag clutch) that acts between the gear 838 (e.g., the seventh gear) and the output gear cluster 837. The gear 838 (e.g., the seventh gear) may drive the third clutch 862.

Gears of the spindle assembly 800 (e.g., the gears 834-848) may any number of different types of gears. For example, the gears of the spindle assembly 800 may include spur gears and/or helical gears, and may be made of steel. Each of the gears of the spindle assembly 800 may have a different number of external teeth. In other embodiments, at least two gears of the spindle assembly 800 have a same number of teeth. In other embodiments, at least some of the gears of the spindle assembly 800 are made of one or more different materials (e.g., a plastic), different sized gears are provided, and/or more or fewer gears are provided.

Referring to FIG. 9, the spindle assembly 800 is disposed in the housing 702. An outer circumference of the spindle 801 mates with an inner race of the ball bearing 710, and an outer circumference of the gear 848 (e.g., the sixth gear) mates with an inner race of ball bearings 770. The spindle assembly 800 is thus rotatable relative to the housing 702 via the rotatable connections at the ball bearings 710 and the ball bearings 770, respectively. A shoulder 864 on the spindle 801 abuts the inner race of the ball bearings 710, and a shoulder 866 on the gear 848 (e.g., the sixth gear) abuts the inner race of the ball bearing 770, axially retaining the spindle assembly 800 within the housing 702 in both axial directions.

With the spindle assembly 800 disposed within the housing 702, the cadence wheel 812 is adjacent to the cadence sensor 744, so that the cadence wheel 812 may be sensed by the cadence sensor 744. The torque sensor 740 is positioned within the housing 702, such that torque within the gear 834 may be sensed. The torque within the gear 834 may represent an input torque from the crank arms.

The O-ring 726 forms a waterproof seal between the NDS crank spacer 724 and an outer circumference of the spindle 801. The seal 778 forms a waterproof seal between the gear 848 and the DS housing portion 702a.

Referring to FIGS. 5-10 and 16, crank 868 (e.g., NDS crank; corresponding to one of the cranks 130) and crank 870 (e.g., DS crank; corresponding to the other of the cranks arms 130) are attached (e.g., fixed) to the spindle assembly 800 in a conventional manner (e.g., with female axial splines in the cranks 868, 870 mating with the male crank mounting splines 806 on the ends of the spindle 801, and crank bolts threading into female crank mounting threads 808 in the ends of the spindle 801). The NDS crank bolt is tightened until the NDS crank spacer 724 and the inner race of ball bearing 710 are clamped between a face of the NDS crank 868 and a shoulder on the spindle 801. Thus, the NDS crank 868, the NDS crank spacer 724, the inner race of ball bearing 710, and the spindle 801 are all rotationally fixed to each other. The DS crank bolt is tightened until the DS crank spacer 832 is clamped between a face of the DS crank 870 and a shoulder in the spindle 801. Thus, the DS crank 870, the DS crank spacer 832, and the spindle 801 are all rotationally fixed to each other.

Referring to FIGS. 6-9 and 24, a chainring spider 872 engages with the gear 848 of the output gear cluster 837 in a conventional way (e.g., a female axial spline of the chainring spider 872 engages with the male axial spine 856 of the gear 848). A chainring 874 is attached to the chainring spider 872. The chainring 874 may be attached to the chainring spider 872 in any number of ways including, for example, with one or more connectors. For example, the chainring 874 may be bolted to the chainring spider 872 with nuts/bolts 876. The chainring 874 may thus be fixed to the chainring spider 872, and the chainring spider 872 is rotationally fixed to the output gear cluster 837.

In one embodiment, the chainring spider 872, and thus the chainring 874, may be retained (e.g., axially retained) on the gear 848. For example, A lockring 878 may be attached to the gear 848 to retain the chainring spider 872, and thus the chainring 874. For example, the lockring 878 has threads (e.g., female threads) and is threaded onto the threads 858 (e.g., the male locking mounting threads) of the gear 848 to axially retain the chainring spider 872, and thus the chainring 874.

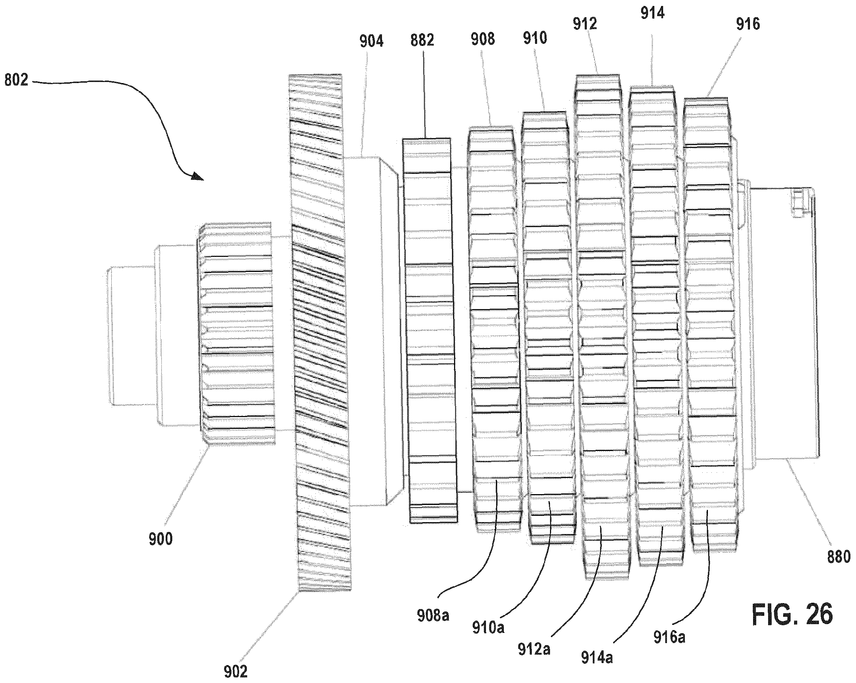

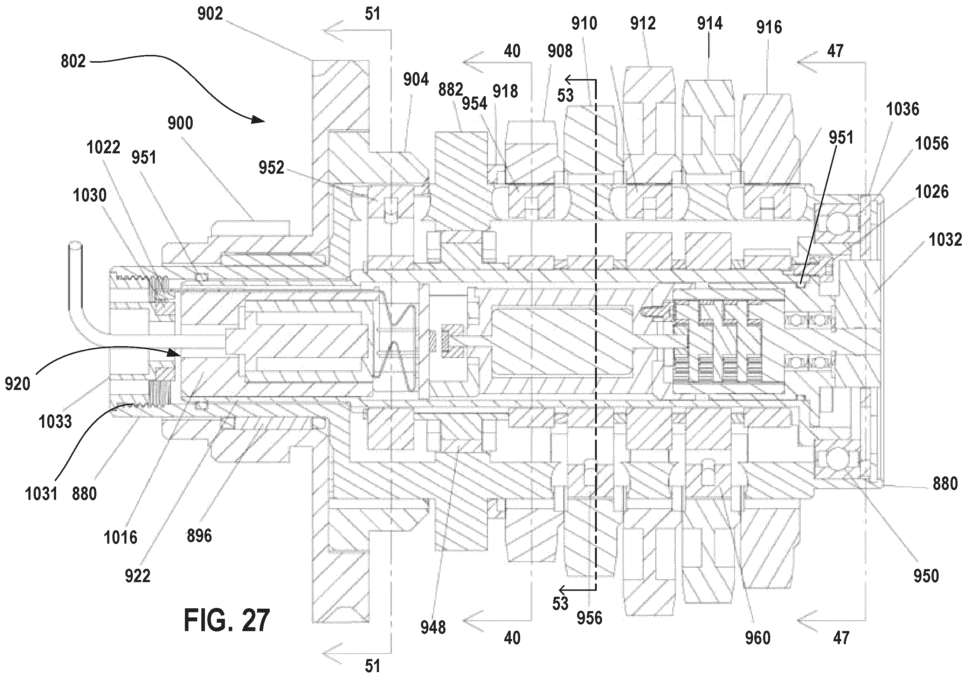

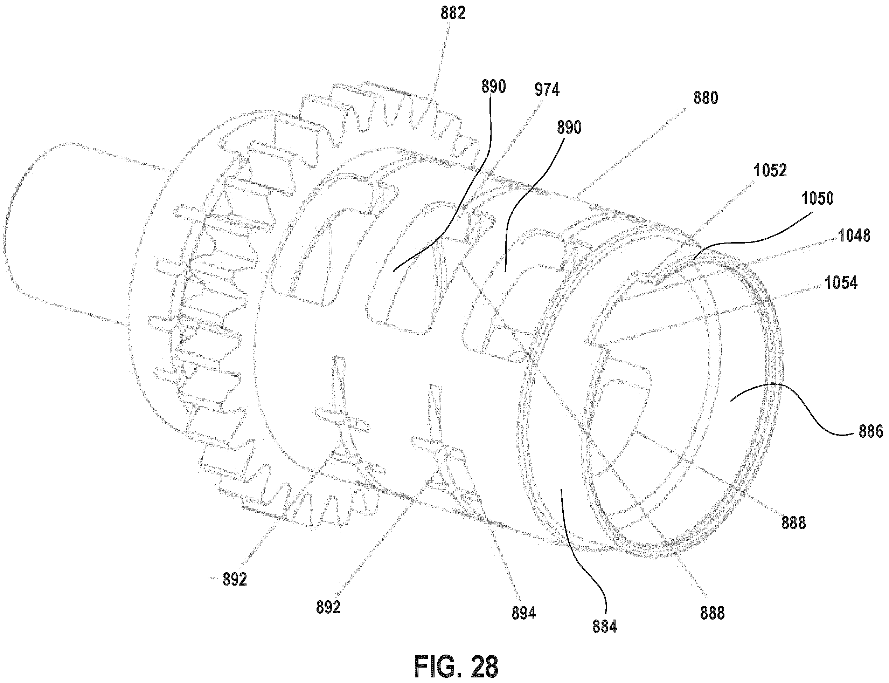

Referring to FIGS. 13 and 14, the geartrain also includes the jackshaft assembly 802. The jackshaft assembly 802 is shown in full view in FIG. 26 and is shown in section view in FIG. 27. Referring to FIG. 28, the jackshaft assembly 802 includes a jackshaft 880 (e.g., a first shaft) and a gear 882 (e.g., a first gear) attached to the jackshaft 880. For example, the gear 882 is integrally formed on the jackshaft 880. The jackshaft 880 and the gear 882 may be made of any number of materials including, for example, steel.

The jackshaft 880 is hollow and has an outer circumferential surface 884, an inner circumferential surface 886, and openings 888 extending from the outer circumferential surface 884 of the jackshaft 880, through a portion of the jackshaft 880 (e.g., a thickness of the hollow jackshaft 880), to the inner circumferential surface 886 of the jackshaft 880. Each of the openings 888 is defined by at least one wall 890 extending from the outer circumferential surface 884 of the jackshaft 880, through the portion of the jackshaft 880, to the inner circumferential surface 886 of the jackshaft 880.

The openings 888 are, for example, pockets for levers or pawls (e.g., pawl pockets). In the embodiment shown, the jackshaft 880 includes six pawl pockets 888. More or fewer pawl pockets 888 may be provided. The pawl pockets 888 may be arranged at the jackshaft 880 in any number of ways. For example, three first pawl pockets 888 may be arranged along the length of the jackshaft 880, on one side of the jackshaft 880, and three second pawl pockets 888 may be arranged along the length of the jackshaft, on an opposite side of the jackshaft 880 relative to the first pawl pockets 888. Other positioning of the pawl pockets 888 may be provided.

Each of the pawl pockets 888 has an associated groove 892 (e.g., first groove; pawl spring groove) extending away from a wall 890 of the respective pawl pocket 888 (e.g., in a perpendicular direction relative to the wall 890 of the respective pawl pocket 888). The grooves may extend at least partially through the portion of the jackshaft 880 (e.g., the thickness of the jackshaft). The jackshaft 888 also includes a second groove 894 (e.g., a pin groove) associated with each of the first grooves 892, respectively. The second groove 894 extends away from the respective first groove 892 (e.g., in a direction perpendicular to the first groove 892) and is, for example, a pin groove.

Referring to FIG. 27, the jackshaft assembly 802 includes a bearing assembly 896 (e.g., a first bearing assembly; a roller bearing assembly). The bearing assembly 896 is disposed on an outer circumference of the jackshaft 880. In one embodiment, the bearing assembly 896 is the same (e.g., in shape, size, and/or material) as the second bearing assembly 816 and the third bearing assembly 818 of the spindle assembly 800.

The jackshaft assembly 802 also includes a gear 898 that is rotatably received on the first bearing assembly 896 of the jackshaft assembly 802. The gear 898 has a first set of gear teeth 900 (e.g., external gear teeth; helical gear teeth) and a second set of gear teeth 902 (e.g., external gear teeth). The second set of gear teeth 902 may include more teeth than the first set of gear teeth 900. The second set of gear teeth 902 may be disposed about a greater circumference than the first set of gear teeth 900. The gear 898 may be made of any number of materials including, for example, steel. Other configurations may be provided.

Referring to FIGS. 26, 27, and 29, the jackshaft assembly 802 includes a spline body 904 that has an external spline 906. The external spline 906 of the spine body 904 mates with a spline (e.g., an internal spline) at the gear 898. Therefore, the gear 898 and the spline body 904 rotate together as a unit. The spline body 904 has internal teeth that interface with a pawl, which is described below.

Referring to FIGS. 26, 27, and 29, gears 908 (e.g., a second gear), 910 (e.g., a third gear), 912 (e.g., a fourth gear), 914 (e.g., a fifth gear), and 916 (e.g., a sixth gear) are rotatably disposed around an outer circumference of the jackshaft 880. The gears 908, 910, 912, 914, and 916 have different numbers of external gear teeth 908a, 910a, 912a, 914a, and 916a, respectively, but all have a same geometry (e.g., number, shape, and size of teeth) of internal gear teeth 908b-916b, respectively, for interacting with pawls, which is described below. The gears 908-916 are rotatable relative to the jackshaft 880, respectively, and relative to each other. The jackshaft assembly 802 includes a spacer 918 that is disposed between the gear 908 (e.g., the second gear) and the gear 882 (e.g., the first gear) integrally formed on the jackshaft 880.

Gears of the jackshaft assembly 802 (e.g., the gears 882 and 908-916) may be any number of different types of gears. For example, the gears of the jackshaft assembly 802 may include spur gears and/or helical gears, and may be made of steel. In other embodiments, at least some of the gears of the jackshaft assembly 802 are made of one or more different materials (e.g., a plastic), different sized gears are provided, and/or more or fewer gears are provided.

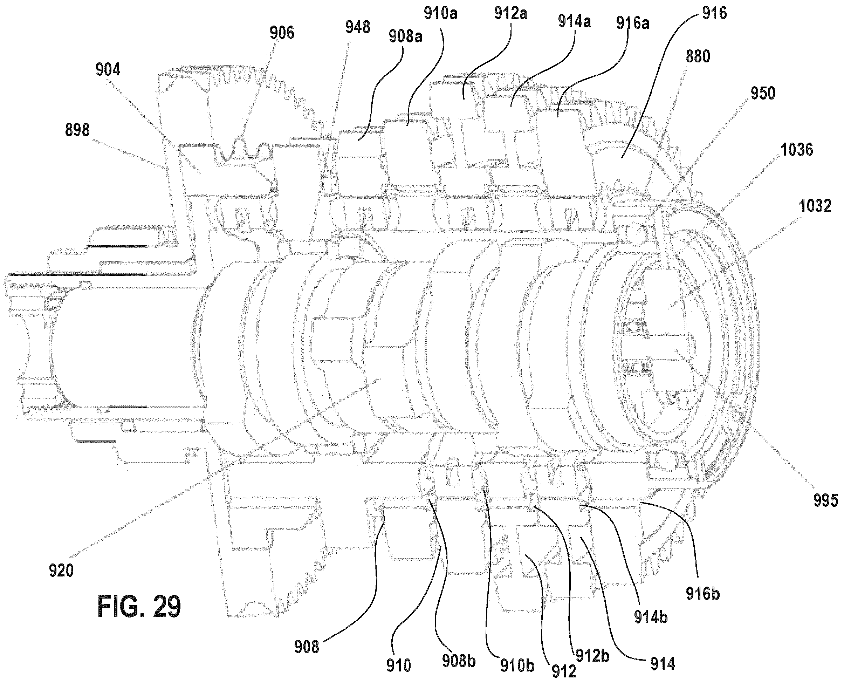

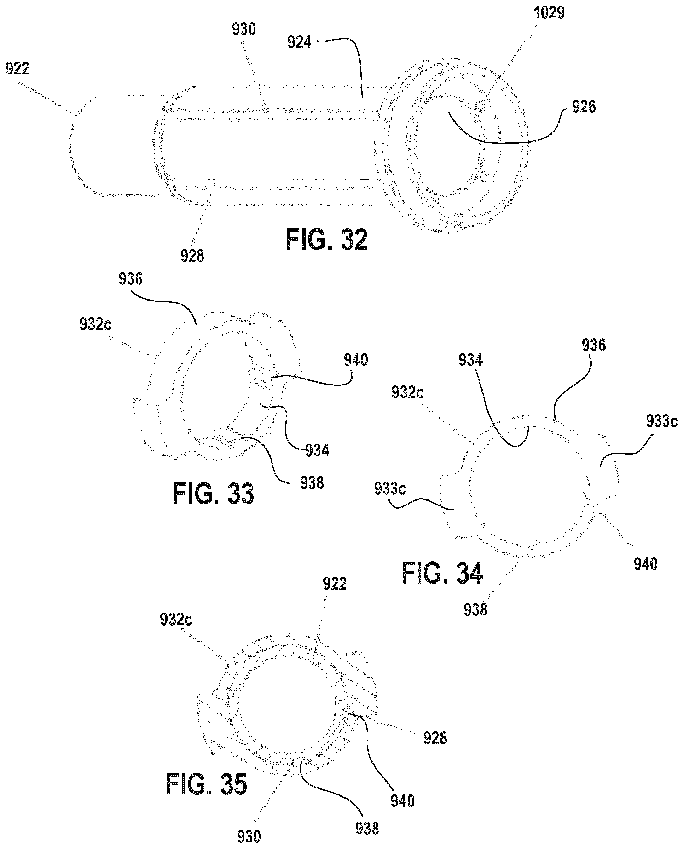

Referring to FIGS. 29-35, the jackshaft assembly 802 also includes a camshaft assembly 920 (e.g., as a subassembly of the jackshaft assembly 802). Referring to FIGS. 32-36, the camshaft assembly 920 includes a camshaft 922. The camshaft 922 is hollow and is disposed within the jackshaft 880. The camshaft 922 has an outer circumferential surface 924 and an inner circumferential surface 926 opposite the outer circumferential surface 924. The camshaft 922 may be made of any number of materials including, for example, steel.

The camshaft 922 has a first alignment feature 928 and a second alignment feature 930. The first alignment feature 928 and the second alignment 930 feature are at the outer circumferential surface 924 of the camshaft 922. For example, the first alignment feature 928 is a first groove that extends at least part of a length (e.g., the entire length) of the camshaft 922, and the second alignment feature 930 is a second groove that extends along at least part of the length (e.g., the entire length) of the camshaft 922. The second groove 930, for example, is offset relative to the first groove 928, for example, in a circumferential direction of the camshaft 922. In the embodiment shown, the first alignment feature 928 and the second alignment feature 930 are different. For example, the second groove 930 has a squared (e.g., rectangular) cross-section, and the first groove 928 has a rounded (e.g., circular) cross-section.

Other alignment features may be provided. For example, the first alignment feature 928 and the second alignment feature 930 may be ribs or ridges (e.g., protrusions). In another embodiment, one of the first alignment feature 928 and the second alignment feature 930 is a groove, and the other of the first alignment feature 928 and the second alignment feature 930 is a rib or ridge (e.g., a protrusion). As another example, more, fewer, and/or different alignment features may be provided at the camshaft 922.

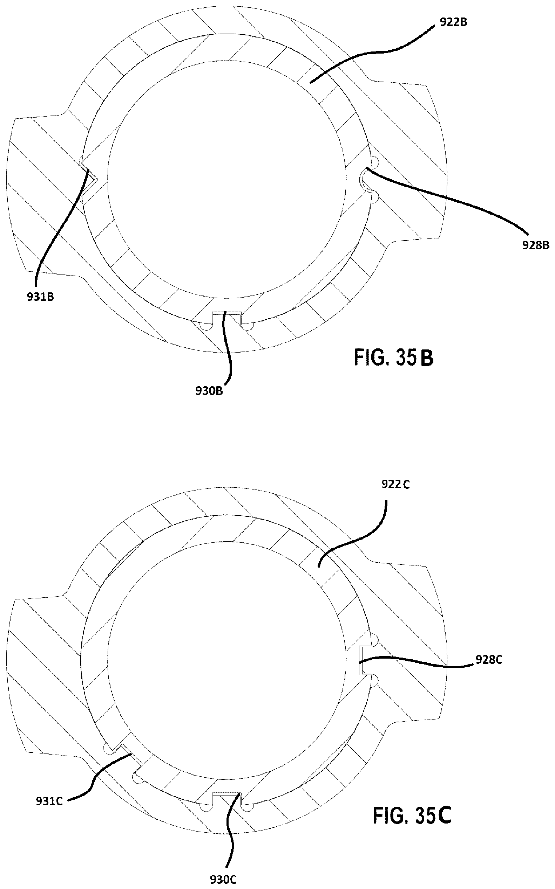

Aligning multiple cams to the camshaft in appropriate orientations can be accomplished with various configurations of alignment features. For example, alignment features may be configured such that any bisecting plane extending along a length of the camshaft includes an asymmetric pattern of alignment features about the bisecting plane, and as such a plurality of alignment features are disposed asymmetrically about the outer circumference of a camshaft with corresponding alignment features disposed asymmetrically about the inner circumference of cams. Asymmetric circumferential alignment feature distributions can be implemented using alignment features of different shapes and/or different orientations about camshaft. Some examples of asymmetric circumferential alignment features are illustrated in FIGS. 35, 35B, and 35C. In an embodiment the first alignment feature 928 and the second alignment feature 930 form asymmetrical portions about an outer circumference of the camshaft 922. For example, the first alignment feature 928 and the second alignment feature 930 form different shapes and/or different sizes. In an embodiment, the first alignment feature 928 and the second alignment feature 930 are disposed about the outer circumference of the camshaft 922 such that the first alignment feature 928 and the second alignment feature 930 avoid disposition in diametrically opposing positions about the outer circumference of the camshaft 922. For example, the first alignment feature 928 and the second alignment feature 930 may be offset by less than 180 degrees about a direction around the outer circumference of the camshaft 922.

In an embodiment, for example the embodiment illustrated in FIG. 35B, a camshaft 922B is formed with a first alignment feature 928B having a first shape and at a first position about the camshaft circumference. The first shape is a rounded shape, for example approximating a semi-circle. The camshaft 922B also has a second alignment feature 930B having a second shape and at a second position about the camshaft circumference. The second shape is a squared shape. The second position is removed 90° about the circumference from the first position. In this embodiment, the camshaft 922B also has another alignment feature 931B having a third shape and at a third position about the camshaft circumference. The third shape is a triangular shape. The third position is removed 180° about the circumference from the first position, and removed 90° about the circumference from the second position. As is shown in FIG. 35B, cams will have alignment features corresponding to the alignment features of the camshaft.

In an embodiment, for example the embodiment illustrated in FIG. 35C, a camshaft 922C is formed with a first alignment feature 928C having a shape and at a first position about the camshaft circumference. The first shape is illustrated as a squared shape, but could be other shapes. The camshaft 922C also has a second alignment feature 930C having a same shape as the shape of the first alignment feature 928C and at a second position about the camshaft circumference. The second position is removed 90° about the circumference from the first position. In this embodiment, the camshaft 922C also has another alignment feature 931C having the same shape as the shape of the first alignment feature 928C and at a third position about the camshaft circumference. The third position is removed less than 180° about the circumference from the first position, and removed less than 90° about the circumference from the second position. As is shown in FIG. 35C, cams will have alignment features corresponding to the alignment features of the camshaft.

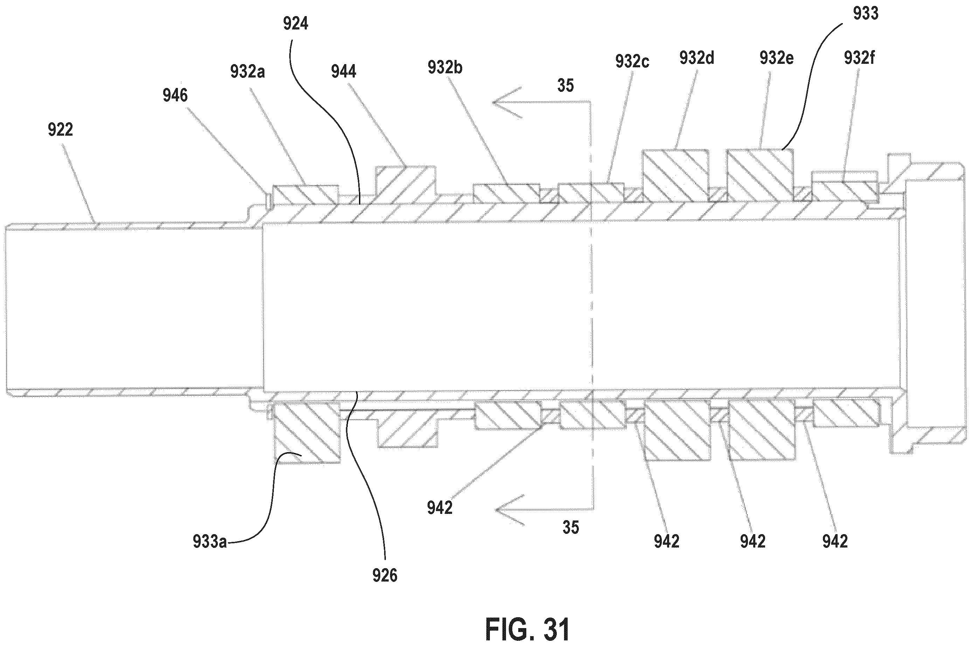

Referring to FIG. 31, the camshaft assembly 920 includes cams 932 (e.g., cams 932a-f) that are attached to the camshaft 922. The cams 932 may be annular, and may have an inner circumferential surface 934 and an outer circumferential surface 936.

The number of cams 932 may correspond to a number of gears of the jackshaft assembly 802. Each of the cams 932 has a cam lobe 933 with a raised surface relative to the outer circumferential surface 936. At least some of the cams 932 may have a same external cam lobe profile. For example, at least some of the cams 932 may have radially outermost surfaces that are at a same radial distance relative to the camshaft 922. All of the cams 932 may have a same internal geometry. For example, each of the cams 932 (e.g., a first cam 932a with a first cam lobe 933a, a second cam 932b with a second cam lobe 933b, a third cam 932c with a third cam lobe 933c, a fourth cam 932d with a fourth cam lobe 933d, a fifth cam 932e with a fifth cam lobe 933e, and a sixth cam 932f with a sixth cam lobe 933f) has a same inner diameter, a same number of teeth, and has a third alignment feature 938 and a fourth alignment feature 940. The third alignment feature 938 and the fourth alignment feature 940 of each of the cams 932 is disposed at the inner circumferential surface 934 of the respective cam 932. The third alignment feature 938 and the fourth alignment feature 940 extend along at least part of a height of the respective cam 932.

In an embodiment the third alignment feature 938 and the fourth alignment feature 940 form asymmetrical portions about an inner circumference of the respective cam 932. For example, the third alignment feature 938 and the fourth alignment feature 940 form different shapes and/or different sizes. In an embodiment, the third alignment feature 938 and the fourth alignment feature 940 are disposed about the inner circumference of the respective cam 932 such that the third alignment feature 938 and the fourth alignment feature 940 avoid disposition in diametrically opposing positions about the inner circumference of the respective cam 932. For example, the third alignment feature 938 and the fourth alignment feature 940 may be offset by less than 180 degrees about a direction around the inner circumference of the respective cam 932.

The third alignment feature 938 of the respective cam 932 corresponds to the second alignment feature 930 of the camshaft 922, and the fourth alignment feature 940 of the respective cam 932 corresponds to the first alignment feature 928 of the camshaft 922. For example, in the embodiment shown, the third alignment feature 938 is a protrusion (e.g., a first protrusion) extending away from the inner circumferential surface 934 of the respective cam 932, and having a squared (e.g., rectangular) cross-section that is complementary to the squared second groove 930 at the camshaft 922. The fourth alignment feature 940 is a protrusion (e.g., a second protrusion) extending away from the inner circumferential surface 934 of the respective cam 932, and having a rounded (e.g., circular) cross-section that is complementary to the rounded first groove 928 at the camshaft 922. A distance (e.g., a circumferential distance) between the third alignment feature 938 and the fourth alignment feature 940 of the respective cam 932 is equal or approximately equal (e.g., different by less than 0.1 mm, 0.2 mm, or 0.5 mm) to a distance (e.g., a circumferential distance) between the first alignment feature 928 and the second alignment feature 930 of the camshaft 922.

Other alignment features may be provided. For example, the third alignment feature 938 and the fourth alignment feature 940 may be grooves. In another embodiment, one of the third alignment feature 938 and the fourth alignment feature 940 is a rib or ridge (e.g., a protrusion), and the other of the third alignment feature 938 and the fourth alignment feature 940 is a groove. In other embodiments, more or fewer alignment features may be provided at the respective cam 932.

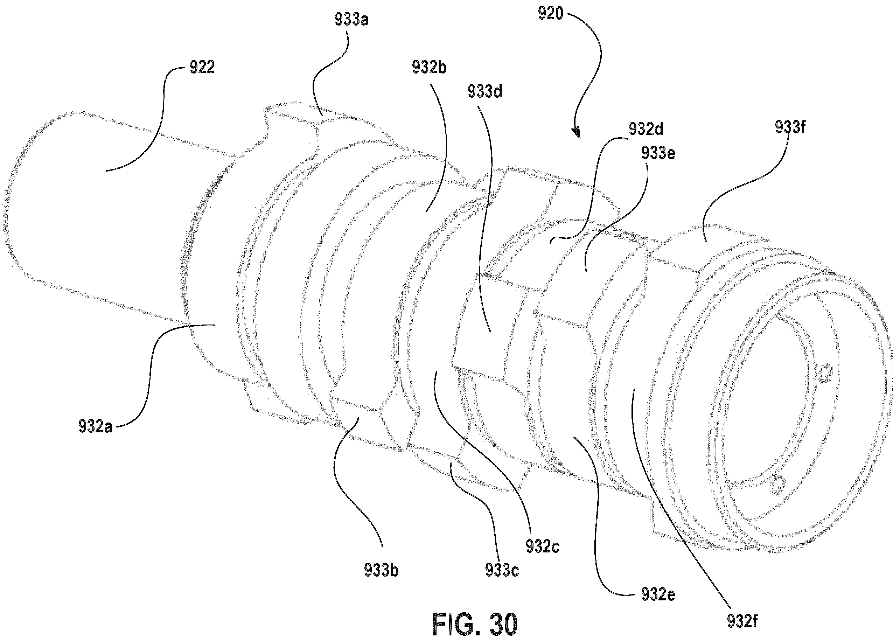

One of the six cams 932, for example, is shown in FIGS. 33-35. The six cams 932a-f are assembled onto the camshaft 922 as shown in FIGS. 30 and 31, with the rectangular and circular protrusions 938, 940 extending away from the inner circumferential surfaces 934 of the cams 932a-f, respectively, engaging with the rectangular and circular grooves 930, 928 at the outer circumferential surface 924 of the camshaft 922, respectively. This engagement attaches and rotationally fixes the cams 932a-f to the camshaft 922. The fact that one of the grooves 928, 930 in the camshaft 922 is circular while the other of the grooves 928, 930 is rectangular, for example, prevents the cams 932a-f from being installed backwards. In one embodiment, spacers 942 are disposed between adjacent cams 932a-f.

When the six cams 932a-f, for example, are positioned on the camshaft 922, the cam lobes 933a-f are disposed about the camshaft 922 in different circumferential positions about the camshaft 922.

An inner race 944 is also disposed on (e.g., assembled onto) the camshaft 922. In one embodiment, the inner race 944 has a continuous round outer diameter. In other words, the inner race 944 does not have a cam profile. The camshaft assembly 920 may also include a retaining clip 946 (e.g., a cam retaining ring) that engages a groove in the camshaft 922, such that the cams 932a-f, the inner race 944, and the spacers 942 are axially retained on the camshaft 922.

Referring to FIGS. 27 and 29, the camshaft assembly 920 is disposed inside the jackshaft 880. The camshaft assembly 920 is rotatably supported by a bearing assembly 948 (e.g., a second bearing assembly; a roller bearing assembly) that acts between the inner race 944 of the camshaft 922 and the inner circumferential surface 886 of the jackshaft 880. The camshaft assembly 920 is also rotatably supported by a bearing 950 (e.g., ball bearings) that acts between the outer circumferential surface 924 of the camshaft 922 and the inner circumferential surface 886 of the jackshaft 880. Thus, the camshaft assembly 920 is rotatable relative to the jackshaft 880.

The camshaft assembly 920 may be sealed in any number of ways. For example, referring to FIG. 27, the camshaft assembly 920 may be sealed relative to the jackshaft 880 with one or more seals 951 disposed between the camshaft 922 and the jackshaft 880 (e.g., camshaft O-rings).

The bearing assembly 948 and the bearing 950 (e.g., rolling elements) greatly reduce the torque needed to rotate the camshaft 922. For example, the bearing assembly 948 and the bearing 950 provide space (e.g., an offset) between the camshaft assembly 920 and the jackshaft 880. In other words, a radially outermost surface of the camshaft assembly 920 is opposite and adjacent the inner circumferential surface 886 of the jackshaft 880, but does not contact the jackshaft 880. This minimizes friction on the camshaft assembly 920 and allows for easier shifting of the drive unit 700 using the camshaft assembly 920.

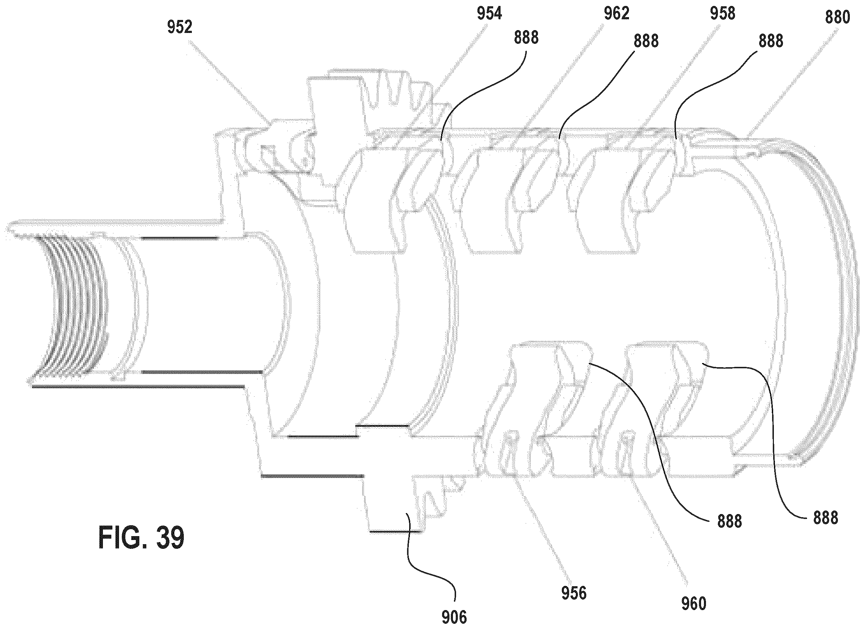

Referring to FIG. 39, pawls or levers 952 (e.g., a first pawl), 954 (e.g., a second pawl), 956 (e.g., a third pawl), 958 (e.g., a fourth pawl), 960 (e.g., a fifth pawl), and 962 (e.g., a sixth pawl) are disposed in the six pawl pockets 888 of the jackshaft 880, respectively. In the embodiment shown, the six pawls 952-962 are all the same. For example, all of the six pawls 952-962 have a same size, shape, and material. For example, each of the six pawls 952-962 is sized to be positioned within one of the pawl pockets 888, is L-shaped, and is made of steel. Other configurations may be provided.

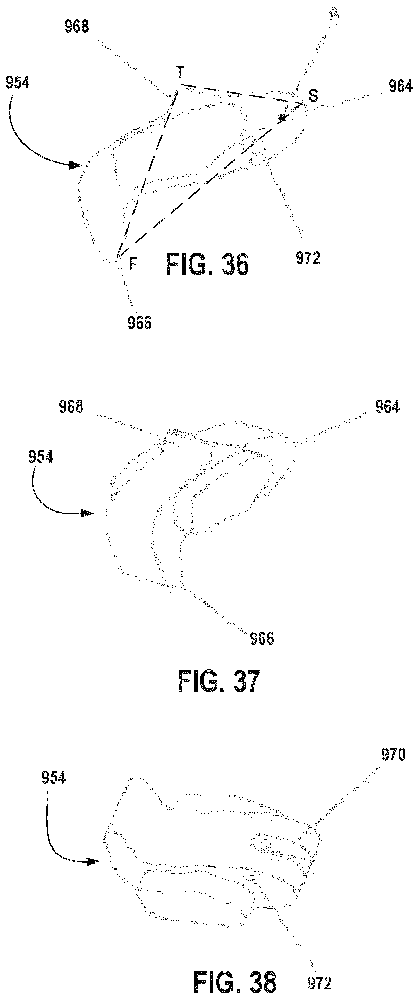

FIGS. 36-38 show one of the pawls 954. The pawl 954 has a seat 964 (e.g., a pawl seat), a tip or foot 966 (e.g., a pawl tip), and a tooth 968 (e.g., a pawl tooth). The seat 964 is a contact point or area between the pawl 954 and the jackshaft 880. The tip or foot 966 is a contact point or area between the pawl 954 and the cam lobe 933b, for example, of the cam 932b in an engaged condition. The tooth 968 is a contact point or area between the pawl 952 and an internal tooth 908b of the gear 908. The pawl seat 964 is rounded and defines a pawl axis A. Each pawl 952-962 also has a groove 970 (e.g., a clearance groove) at an outer surface of the respective pawl 952-962 and a hole 972 (e.g., a through-hole).

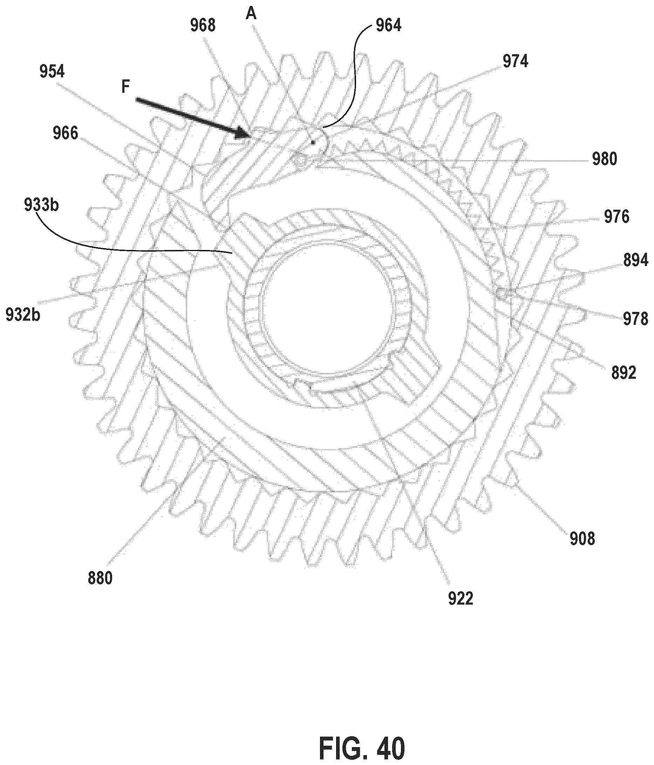

Referring to FIG. 40, each pawl seat 964 is received in a recess 974 in the respective pawl pocket 888 within the jackshaft 880. The recess 974 is formed within the wall 890 of the respective pawl pocket 888. In one embodiment, the respective pawl seat 964 may be sized and/or shaped (e.g., rounded) to correspond to a size and/or shape of the respective pawl pocket 888. The pawl seat 964 is rotatable within and relative to the recess 974 in the respective pawl pocket 888 within the jackshaft 880.

Each of the gears 898, 908, 910, 912, 914, 916 of the jackshaft assembly 802 is disposed about one of the pawls 952, 954, 956, 958, 960, 962, and each of the pawls 952, 954, 956, 958, 960, 962 interacts with one of the cams 932a, 932b, 932c, 932d, 932e, 932f of the camshaft assembly 920. Using the gear 908 as an example, which is shown in FIG. 40, the pawl tooth 968 of the pawl 954 is engageable with the internal teeth 908b of the gear 908. The pawl tip 966 of the pawl 954, for example, is configured to contact the associated cam lobe 933b of the cam 932b of the camshaft assembly 920.

Each pawl 952, 954, 956, 958, 960, 962 is further connected to the jackshaft 880 with an associated spring 976. Any number of different types of springs may be used for the springs 976. For example, the springs 976 may be extension springs. The extension springs 976, for example, are disposed in the pawl spring grooves 892 in the jackshaft 880, respectively.

Each of the extension springs 976, for example, may be connected to the jackshaft 880 at one end of the respective extension spring 976 and may be connected to one of the pawls 952, 954, 956, 958, 960, 962 at the other end of the respective extension spring 976. The extension springs 976 may be connected to the jackshaft 880 and the pawls 952, 954, 956, 958, 960, 962 in any number of ways. For example, again using the example of FIG. 40, the one end of the extension spring 976 has a loop that is connected to the jackshaft 880 via a pin 978 (e.g., a first pin) disposed in the corresponding pin groove 894 in the jackshaft 880, and the other end of the extension spring 976 has a loop that is retained by a pin 980 (e.g., a second pin) extending through the through-hole 972 of the pawl 954. Other types of connections may be provided.

Again referring to FIG. 40, the extension spring 976 biases the pawl 954 both rotationally and translationally. In this embodiment, the pawls are configured to both rotate about an axis of the pawl, and translate relative to a shaft and about an axis of the shaft. The extension spring 976 pulls the pawl 954 away from the outer circumferential surface 924 of the jackshaft 880 (e.g., a tooth of the internal teeth 908b of the gear 908; towards the right in FIG. 40), pulling the seat 964 of the pawl 954 into the corresponding recess 974 (e.g., at one of the pawl pockets 888) of the jackshaft 880. With the pawl 954 seated in the recess 974 in the jackshaft 880, the extension spring 976 exerts a force on the pawl 954 that biases the pawl 954 to rotate around the axis A of the pawl 954, away from, for example, the tooth of the internal teeth 908b of the gear 908 (e.g., counterclockwise in the view shown in FIG. 40). Thus, the extension spring 976 biases the pawl 954 to disengage from the internal teeth 908b of the gear 908.

The geometry of the pawl tooth 968, along with the geometry of the internal teeth 908b of the gear 908, are configured such that a clockwise torque on the gear 908 will exert a force F on the pawl 954 that biases the pawl 954 to rotate counterclockwise about the pawl axis A out of engagement with the gear 908; however, this rotation is blocked by the cam lobe 933b, for example.

The geometry of the negatively biased pawl 954, for example, may help reduce forces on the foot 966 of the pawl 954 compared to the prior art. In an embodiment, the distance from the foot to the seat is greater than the distance from the tooth to the seat. Referring to FIG. 36, the pawl 954, for example, is a foot-tooth-seat shaped negatively biased pawl 954 having the tooth 968 of the pawl 954 closer to the seat 964 of the pawl 954 than the tooth 968 is relative to the foot 966 of the pawl 954. In other words, a distance between a contact point of the tooth 968 and a contact point of the foot 966 (e.g., a first distance T-F) is larger than a distance between the contact point of the tooth 968 and a contact point of the seat 964 of the pawl 954 (e.g., a second distance T-S). In one embodiment, a ratio of the first distance to the second distance may be four to three. In another embodiment, the ratio of the first distance to the second distance is three to two.

Other ratios may be provided. For example, a distance between the contact point of the seat 964 of the pawl 954 and the contact point of the foot 966 of the pawl 954 (e.g., a third distance S-F) may be greater than the second distance. In other words, the seat 964 may be closer to the tooth 968 than the tooth 968 is relative to the foot 966. In one embodiment, a ratio of the third distance to the second distance may be one to two. In another embodiment, the ratio of the third distance to the second distance may be three to five.

The ratios provide that a shift motor configured to rotate the camshaft 922 relative to the jackshaft 880 does not have to generate as much power compared to shift motors of the prior art. A size of the shift motor may be related to a distance of the foot 966 of the pawl 954, for example, to the axis A of the pawl 954.

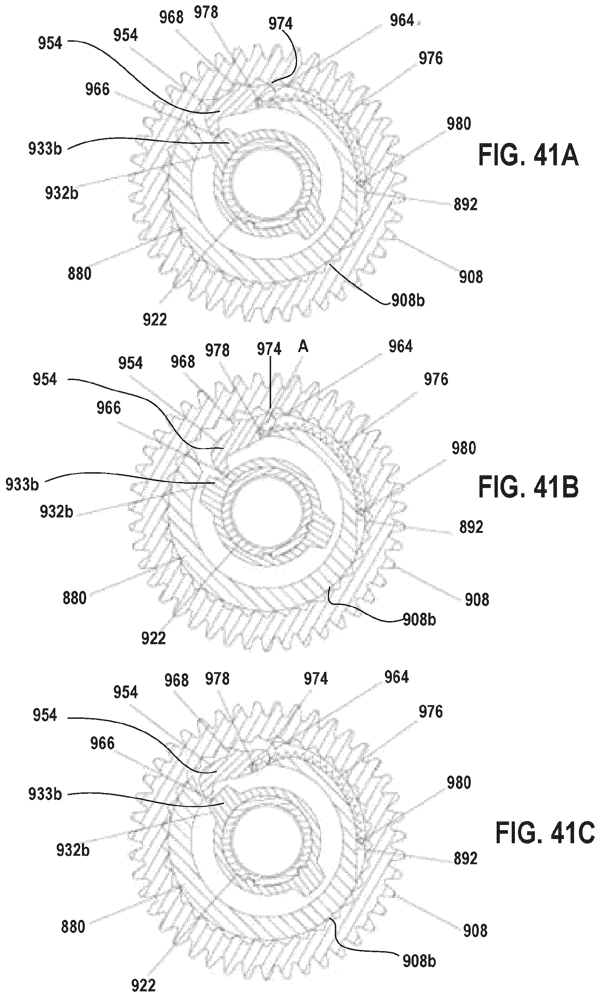

FIGS. 41A-C illustrate three states of the jackshaft assembly 802 for the pawl 954 and the gear 908: engaged, disengaged, and overrun. FIG. 41A shows the pawl 954 engaged with the internal teeth 908b of the gear 908. The cam lobe 933b holds the pawl 954 in this position, against the biasing force of the extension spring 976, and against the force F exerted by the gear 908. In this state, the gear 908 is blocked from rotating clockwise (e.g., in the view shown in FIG. 41A) relative to the jackshaft 880. Thus, counterclockwise rotation (e.g., in the view shown in FIG. 41A) of the jackshaft 880 will drive the pawl 954 and the gear 908 counterclockwise along with the jackshaft 880. In this manner, the jackshaft 880 may transmit rotational power to the gear 908.

FIG. 41B shows what happens when the cam lobe 933b is rotated away from the pawl tip 966. In this state, the extension spring 976 biases the pawl 954 to rotate counterclockwise about the axis A of the pawl 954 (e.g., in the view shown in FIG. 41B), out of engagement with the gear 908, until the tip 966 of the pawl 954 comes to rest on the cam lobe 933b. Further, as previously described, any clockwise torque on the gear 908 (e.g., in the view shown in FIG. 41B) also biases the pawl 954 to rotate counterclockwise about the axis A of the pawl 954 and out of engagement with the gear 908. With the pawl 954 disengaged from the gear 908, the gear 908 is free to rotate both clockwise and counterclockwise relative to the jackshaft 880. Thus, the jackshaft 880 cannot transmit rotational power to the gear 908 in this state.

FIG. 41C shows what happens when the pawl 954 is initially positioned as shown in 42A, and the gear 908 rotates counterclockwise (e.g., in the view shown in FIG. 41C). The internal teeth 908b of the gear 908 push the pawl 954 to the left and down (e.g., in the view shown in FIG. 41C), against the biasing force of the extension spring 976. Thus, the tooth 968 of the pawl 954 disengages from the gear 908, and the gear 908 may rotate counterclockwise (e.g., in the view shown in FIG. 41C). After each internal gear tooth 908b passes by the pawl tooth 968, a space between the internal gear teeth 908b is presented to the pawl 954 and the extension spring 976 is able to quickly pull the pawl 954 back into the corresponding recess 974. This re-engages the pawl tooth 968 of the pawl 954 with the gear 908, as shown in FIG. 41A. Thus, while the gear 908 is rotating counterclockwise (e.g., in the view shown in FIG. 41C), the pawl 954 is alternately displaced by each internal gear tooth 908b and pulled back (e.g., abruptly) into the corresponding recess 974 in the jackshaft 880. In other words, as the gear 908 rotates counterclockwise (e.g., in the view shown in FIG. 41C), the pawl 954 repeatedly alternates between the position shown in FIG. 41A and the position shown in FIG. 41C. In this state, the pawl 954 is, for example, overrun.

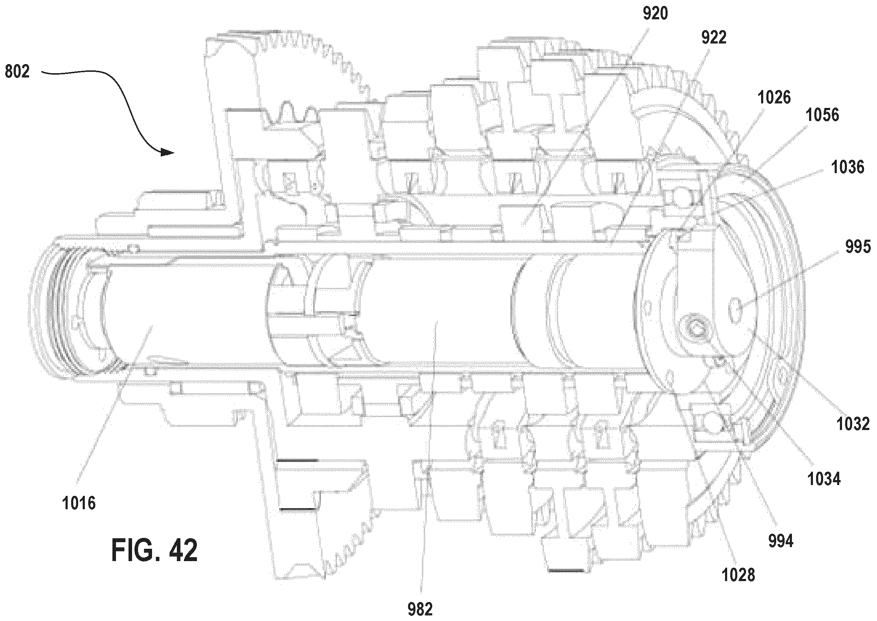

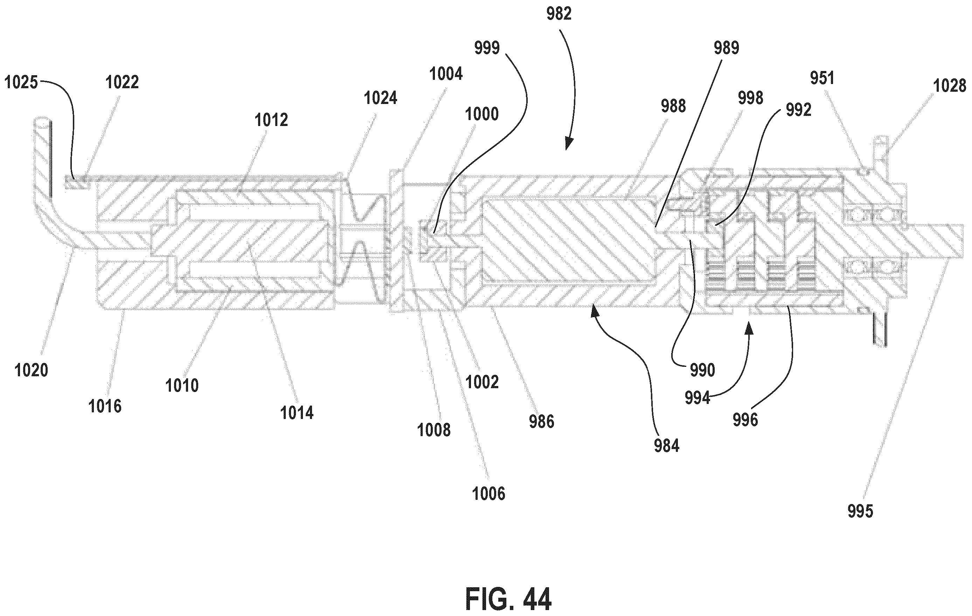

Referring to FIGS. 42-44, the jackshaft assembly 802 also includes a shift motor assembly 982. Referring to FIG. 44, the shift motor assembly 982 includes a shift motor 984. The shift motor 984 includes a stationary portion 986 (e.g., a stator) and a rotating portion 988 (e.g., a rotor). The rotor 988 of the shift motor 984 includes, at one end 989 (e.g., a first end) of the rotor 988, an output shaft 990. The output shaft 990 of the rotor 988 includes, at an end of the output shaft 990, a gear 992 (e.g., a pinion gear). The gear 992 may be attached to the output shaft 990 in any number of ways including welding, one or more connectors (e.g., screws), or the gear 992 may be integrally formed with the output shaft 990. In an embodiment, the gear 992 may be press-fit onto the output shaft 990.

The gear 992 attached to the output shaft 990 of the rotor 988 of the shift motor 984 extends into and engages with a gearhead 994. The gearhead 994 is, for example, a gear reduction system including a number of gear stages (e.g., in series). For example, the gearhead 994 includes four planetary gear stages in series. Other types of gears and/or more or fewer gear stages may be included within the gearhead 994. The gearhead 994 includes an output shaft 995.

A housing 996 of the gearhead 994 is attached to (e.g., fixed) to the stator portion 986 of the shift motor 984. The housing 996 of the gearhead 994 may be attached to the stator portion 986 of the shift motor 984 in any number of ways. For example, the housing 996 of the gearhead 994 may be attached to the stator portion 986 of the shift motor 984 with one or more connectors (e.g., screws 998).

Any number of total gear reductions may be provided by the gearhead 994. For example, the total gear reduction may be 455:1. Thus, for example, for every 455 revolutions of the output shaft 990 of the rotor 988 of the shift motor 984, the output shaft 995 of the gearhead 994 rotates once. Other gear reductions may be provided. A torque at the output shaft 995 of the gearhead 994 is much greater than a torque at the rotor 988 of the shift motor 984.

The shift motor assembly 982 also includes a magnet 1000 (e.g., an encoder magnet) attached to another end 999 (e.g., a second end) of the rotor 988 of the shift motor 984. The second end 999 of the rotor 988 is opposite the first end 989 of the rotor 988. The encoder magnet 1000 may be attached to the second end 999 of the rotor 988 in any number of ways. For example, the encoder magnet 1000 may be press fit with or attached to (e.g., with an adhesive) a holder 1002 (e.g., an encoder magnet holder), and the encoder magnet holder 1002 may be press fit with or attached to (e.g., with an adhesive) the second end 999 of the rotor 988 of the shift motor 984. Thus, the encoder magnet 1000 is fixed to, and rotates with, the rotor 988 of the shift motor 984.

The shift motor assembly 982 also includes a printed circuit board assembly (PCBA) 1004 (e.g., a shift control PCBA). The PCBA 1004 is attached and electrically connected to the shift motor 984. For example, the PCBA 1004 is soldered to leads of the shift motor 984 to attach and electrically connect the PCBA 1004 to the stator 986 of the shift motor 984. The PCBA 1004 may thus be fixed to the stator 986 of the shift motor 984. The PCBA 1004 may be attached and electrically connected to the shift motor 984 in other ways.

In one embodiment, the shift motor assembly 982 also includes a spacer 1006 (e.g., a shift motor PCBA spacer) disposed between the PCBA 1004 and the stator 986 of the shift motor 984. The spacer 1006 controls a distance between the PCBA 1004 and the shift motor 984. The PCBA 1004 may physically support and electrically connect any number of electrical components. For example, the PCBA 1004 may include an encoder chip 1008 that may sense a rotational position of the encoder magnet 1000. The encoder magnet 1000 and the encoder chip 1008 together form an incremental position sensor (e.g., an incremental encoder) that may count a number of times that the rotor 988 of the shift motor 984 (e.g., a shift motor rotor) rotates.

The PCBA 1004 may include more and/or different electrical components. For example, the PCBA 1004 may include one or more processors, memory, one or more interfaces, additional and/or different sensors, a power source (e.g., a battery), one or more other electrical components, or any combination thereof.

The shift motor assembly 982 also includes an electrical transmitter 1010. The electrical transmitter 1010 may be an electromechanical device that allows the transmission of power and electrical signals between a stationary and a rotating element. For example, the electrical transmitter 1010 is a slipring. The electrical transmitter 1010 (e.g., the slipring) includes a slipring rotor 1012 and a slipring stator 1014. The slipring rotor 1012 is rotatable relative to the slipring stator 1014.

The slipring rotor 1012 is attached to and/or disposed within a slipring housing 1016. The slipring rotor 1012 may be attached to the slipring housing 1016 in any number of ways. For example, the slipring rotor 1012 is pressed or fixed in place relative to the slipring housing 1016 with an adhesive. The slipring rotor 1012 may be attached to the slipring housing 1016 in other ways (e.g., with an adhesive).

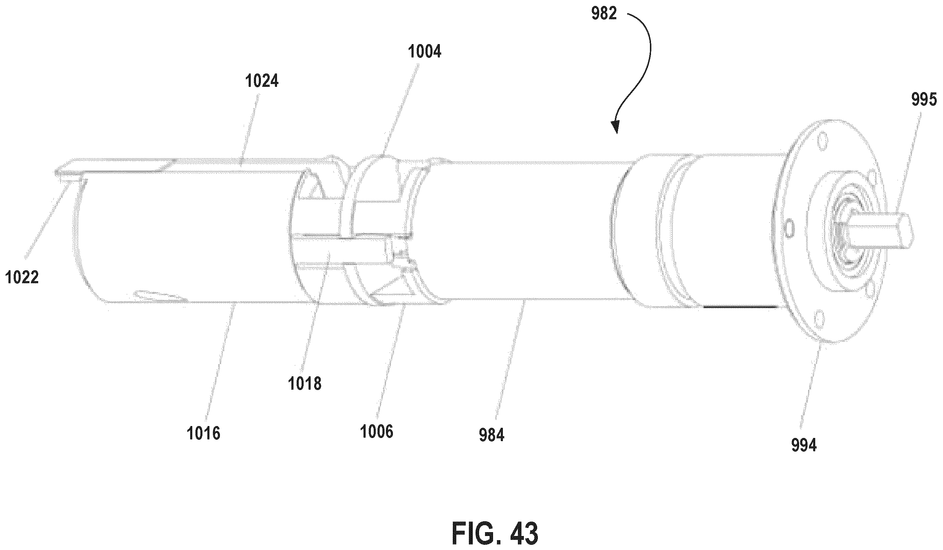

The slipring housing 1016, which is attached to the slipring rotor 1012, may be connected to the stator 986 of the shift motor 984 in any number of ways. For example, the slipring housing 1016 is attached to the PCBA 1004, which is attached to the stator 986 of the shift motor 984. The slipring housing 1016 may be attached to the PCBA 1004 in any number of ways including, for example, with one or more connectors 1018. For example, the one or more connectors 1018 may include flexible clips (see FIG. 43). Other connectors and/or other attachment may be provided. For example, the one or more connectors 1018 may include screws.

The shift motor assembly 982 also includes a cable 1020 that extends from an end of the slipring stator 1014. The cable 1020 may be, for example, an output cable bundle. The output cable bundle 1020, for example, and the slipring stator 1014 may remain stationary while the rest of the shift motor assembly 982 rotates. The cable 1020 may be electrically connected to one or more electronic components of the drive unit 700. For example, the cable 1020 may be connected to a power source and/or one or more processors of the drive unit 700.

The shift motor assembly 982 also includes an encoder chip 1022 that is attached to and rotates with the slipring housing 1016, and is electrically connected to the PCBA 1004. The encoder chip 1022 may be attached to the slipring housing 1016 and electrically connected to the PCBA 1004 in any number of ways. For example, the shift motor assembly 982 includes a flexible cable 1024 that is attached to the slipring housing 1016 with an adhesive, and the encoder chip 1022 is attached and electrically connected to an end 1025 of the flexible cable 1024. The flexible cable 1024 is also physically attached and electrically connected to the PCBA 1004, such that the encoder chip 1022 is in communication with the electrical components of the PCBA 1004. The encoder chip 1022 may be attached to the slipring housing 1016 in other ways (e.g., with one or more connectors), and/or the encoder chip 1022 may be electrically connected to the PCBA 1004 in other ways (e.g., with one or more wires).

Referring to FIGS. 27 and 42, at least part of the shift motor assembly 982 is disposed within the camshaft 922 of the camshaft assembly 920. At least some of the components of the shift motor assembly 982 may be cylindrical (e.g., the shift motor 984, the PCBA 1004, the slipring 1010, and the housing 996 of the gearhead 994) and may be sized (e.g., have a diameter smaller than an inner diameter of the camshaft 922) to fit within the camshaft 922. In one embodiment, at least two components of the shift motor 984, the gearhead 994, and the slipring 1010 are disposed (e.g., entirely) within the camshaft 922 of the camshaft assembly 920. In another embodiment, all components of the shift motor 984, the gearhead 994, and the slipring 1010 are disposed (e.g., entirely) within the camshaft 922 of the camshaft assembly 920.

The gearhead 994 is attached (e.g., fixed) to the camshaft 922 with, for example, one or more connectors 1026. For example, the one or more connectors 1026 include screws (e.g., gearhead mountings screws) that extend through holes 1028 (e.g., mounting holes) in the gearhead 994 and are threaded into threaded holes 1029 in the camshaft 922. To provide that the encoder chip 1022 does not rotate relative to the camshaft 922, the slipring housing 1016 is attached (e.g., fixed) to the inner diameter of the camshaft 922 with, for example, one or more connectors (not shown). For example, the one or more connectors for connecting the slipring housing 1016 to the camshaft 922 may include set screws. The gearhead 994 and/or the slipring housing 1016 may be attached to the camshaft 922 in additional and/or different ways.

The gearhead 994 may be sealed relative to the camshaft 922 in any number of ways. For example, the shift motor assembly 982 may include one or more seals 951 (e.g., O-rings) disposed between the camshaft 922 and the gearhead 994.

Referring to FIG. 27, a magnet 1030 (e.g., an encoder magnet) is annular and is attached (e.g., fixed) to, for example, a holder 1033 (e.g., an encoder magnet holder). The magnet 1030 is attached to the holder 1033 in any number of ways including, for example, by a press fit or with an adhesive. The encoder magnet holder 1033 has, for example, threads (e.g., male threads) that thread into threads 1031 (e.g., female threads) at an end of the jackshaft 880. Thus, the encoder magnet 1030 is fixed relative to the jackshaft 880 and is positioned adjacent to the encoder chip 1022 of the shift motor assembly 982. The encoder magnet 1030 and the encoder chip 1022 together form an absolute position sensor (e.g., an absolute encoder) that senses an absolute rotational position of the camshaft 922 relative to the jackshaft assembly 880.

Referring to FIGS. 27, 29, 42, 46A-C, and 47A-C, a drive arm 1032 is attached (e.g., fixed) to the output shaft 995 of the gearhead 994. The drive arm 1032 may be attached to the output shaft 995 in any number of ways including, for example, with one or more connectors 1034. For example, the one or more connectors 1034 may be screws (e.g., set screws, 180 degrees apart) that engage with the output shaft 995 (e.g., engage with two flats, also 180 degrees apart, on the output shaft 995. The drive arm 1032 may be any number of different shapes and/or sizes. For example, the drive arm 1032 may be substantially teardrop shaped and may have a length approximately equal to a radius of the jackshaft 880. Other configurations of the drive arm 1032 may be provided. For example, the drive arm 1032 may be rectangular in shape.

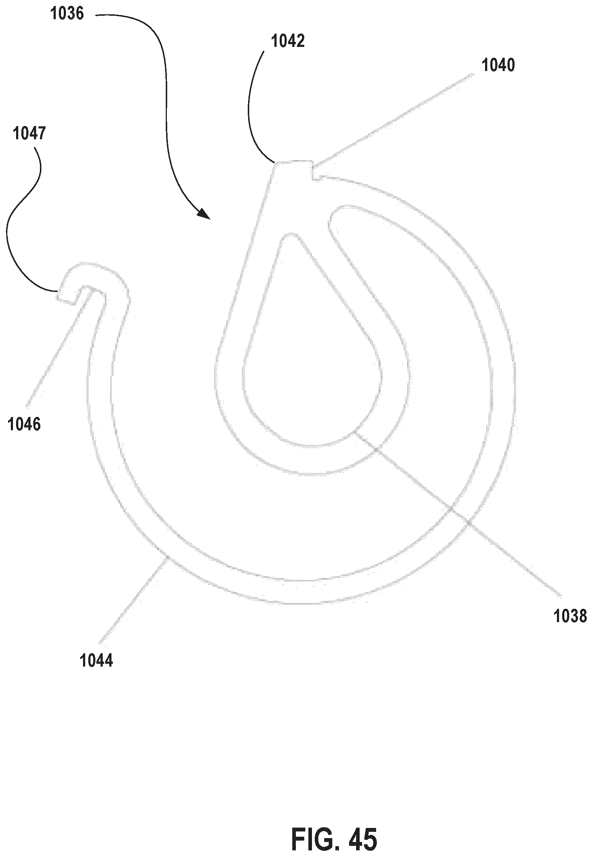

Referring to FIG. 45, the jackshaft assembly 802 also includes a spring 1036 (e.g., a saver spring) that may connect the output shaft 995 of the gearhead 994 to the jackshaft 880. The spring 1036 may be any number of different types of springs. For example, the spring 1036 may be a flat coil torsion spring. The spring 1036 may be made of any number of different types of materials. For example, the spring 1036 may be made of spring-tempered steel. Other types of springs and/or other spring materials may be used to connect the output shaft 995 of the gearhead 994 to the jackshaft 880.

The spring 1036 includes an opening 1038 (e.g., an enclosed opening) through the spring 1036. The opening 1038 may be sized and shaped to correspond to a size and shape of the drive arm 1032 attached to the output shaft 995 of the gearhead 994. For example, the opening 1038 may be a teardrop-shaped opening 1038. The spring 1036 also includes a driving surface 1040 at or adjacent to one end 1042 (e.g., a first end) of the spring 1036, a spring arm 1044, and a biasing surface 1046 at or adjacent to the other end 1047 (e.g., a second end) of the spring 1036. The driving surface 1040 and the biasing surface 1046 may be formed by extensions or bodies extending away from the spring arm 1044 at or adjacent to the one end 1042 and the other end 1047 of the spring 1036, respectively. The spring 1036 may be any number of different shapes. For example, the spring 1036 (e.g., the spring arm 1044) may be circular in shape. Other configurations may be provided.

Referring to FIGS. 27-29, 42, 46A-C, and 47A-C, the jackshaft 880 has a notch 1048 at an end 1050 of the jackshaft 880. The notch 1048 is partially formed by a first notch surface 1052 and a second notch surface 1054 opposite the first notch surface 1052. The first notch surface 1052 and the second notch surface 1054 respectively extend between the outer circumferential surface 884 of the jackshaft 880 and the inner circumferential surface 886 of the jackshaft 880.

The teardrop-shaped opening 1038, for example, in the spring 1036 mates with an outer perimeter of, for example, the teardrop-shaped drive arm 1032 attached to the output shaft 995 of the gearhead 994. The driving surface 1040 of the spring 1036 engages the first notch surface 1052 of the notch 1048 in the jackshaft 880, and the biasing surface 1046 of the spring 1036 engages the second notch surface 1054 of the notch 1048 in the jackshaft 880.

The spring 1036 may be shaped such that the spring 1036 is deformed to install the spring 1036, and the driving surface 1040 of the spring 1036 engages the first notch surface 1052 and the biasing surface 1046 of the spring 1036 engages the second notch surface 1054. This deformation gives the spring 1036 a preload, providing that the driving surface 1040 and biasing surface 1046 of the spring 1036 exert forces on the first notch surface 1052 and the second notch surface 1054, respectively.

Referring to FIGS. 27 and 42, the jackshaft assembly 802 may also include a retainer 1056 (e.g., a retaining ring). The retaining ring 1056 may be any number of different shapes, sizes, and/or may be made of any number of different materials. For example, the retainer 1056 may be annular in shape, and may be sized to fit within a groove in the jackshaft 880. The retainer 1056 may be made of, for example, steel. Other configurations may be provided. The retainer 1056 is configured to axially retain the spring 1036 within the jackshaft assembly 802.

The jackshaft assembly 802 is disposed in the housing 702 of the drive unit 700, as shown in FIG. 9. An outer circumference of the gear 898 of the jackshaft assembly 802 mates with an inner race of the ball bearing 712. An outer circumference of the jackshaft 880 (e.g., a portion of the outer circumferential surface 884 of the jackshaft 880) mates with an inner race of the ball bearing 772. Thus, the jackshaft assembly 802 is rotatable relative to the housing 702 via at least the ball bearing 712 and the ball bearing 772.

The jackshaft assembly 802 may be retained within the housing 702 of the drive unit 700 in any number of ways. For example, a shoulder on the gear 898 abuts the inner race of ball bearing 712, and a shoulder on the jackshaft 880 abuts the inner race of ball bearing 772. This axially retains the jackshaft assembly 802 in both axial directions. The jackshaft assembly 802 may be retained within the housing 702 of the drive unit 700 in additional and/or different ways.

The various gears of the jackshaft assembly 802 mesh with the various gears of the spindle assembly 800. For example, referring to FIG. 14, the gear 834, the gear 838, the gear 840, the gear 842, the gear 844, the gear 846, and the gear 848 of the spindle assembly 800 may mesh with the gear 898 (e.g., the first gear teeth 900), the gear 882, the gear 908, the gear 910, the gear 912, the gear 914, and the gear 916 of the jackshaft assembly 802, respectively. More, less, and/or different gearing may be provided.

The jackshaft assembly 802 may be sealed relative to the housing 702 of the drive unit 700 in any number of ways. For example, the rubber lip seal 720 forms a watertight seal between the NDS housing portion 702b and the jackshaft 880. The output cable bundle 1020 passes through a hole in the cable guide 728 into a space defined between the NDS housing portion 702b and the cable cover 730.

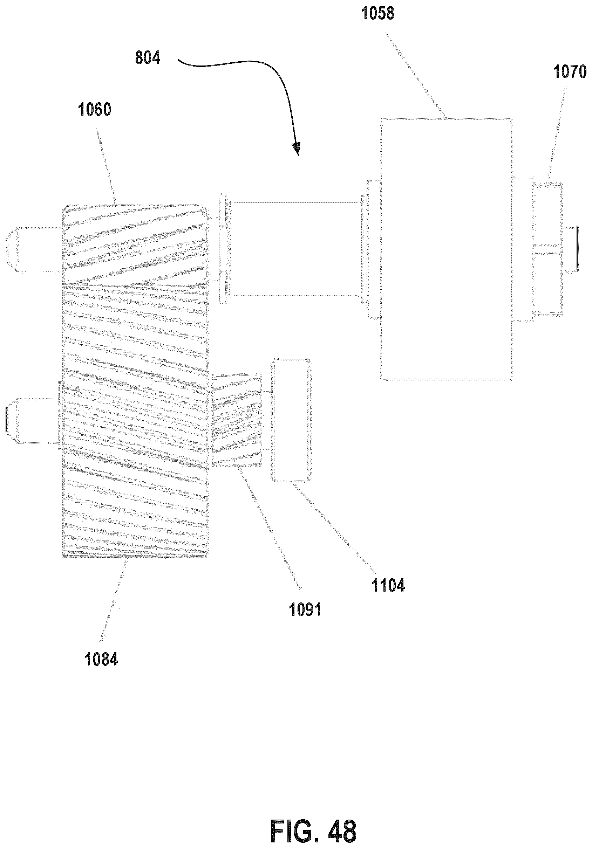

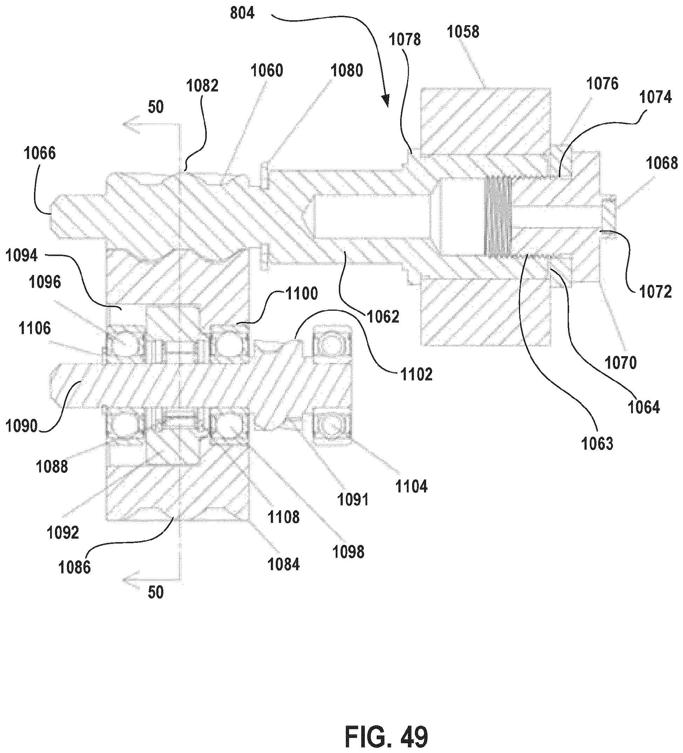

Referring to FIGS. 13 and 14, the geartrain of the drive unit 700 also includes the drive motor system 804. Referring to FIGS. 48 and 49, the drive motor system 804 includes a drive motor including a rotor 1058 (e.g., a drive motor rotor) and a stator (e.g., the drive motor stator 756). The rotor 1058 is, for example, ring-shaped. The drive motor system 804 also includes a gear 1060 (e.g., a first gear) attached to a shaft 1062. In the embodiment shown, the gear 1060 and the shaft 1062 are a single part. In other embodiments, the gear 1060 may be attached to the shaft 1062 in any number of ways including, for example, with one or more connectors (e.g., screws) and/or via welds.

The shaft 1062 includes a threaded opening 1063 (e.g., with female threads) at one end 1064 (e.g., a first end) of the shaft 1062. The gear 1060 is positioned at or adjacent to another end 1066 (e.g., a second end) of the shaft 1062. The second end 1066 is opposite the first end 1064.

The drive motor system 804 also includes a magnet 1068 (e.g., an encoder magnet) that is attached (e.g., fixed) to the shaft 1062. The encoder magnet 1068 may be attached to the shaft 1062 in any number of ways. For example, the drive motor system 804 may include a magnet holder 1070 (e.g., an encoder magnet holder) that has a recess 1072 in which the encoder magnet 1068 is positioned. The encoder magnet 1068 may be attached to the encoder magnet holder 1070, within the recess 1072, in any number of ways, including, for example, by a press-fit or with adhesive. The encoder magnet holder 1070 has threads 1074 (e.g., male threads) that thread into the threaded opening 1063 within the shaft 1062. The encoder magnet 1068 may be attached to the shaft 1062 in additional and/or different ways.

The drive motor rotor 1058 is disposed about and attached to the shaft 1062. For example, the drive motor system 804 includes a spacer 1076 that is disposed between the drive motor rotor 1058 and the encoder magnet holder 1070. The encoder magnet holder 1070 is threaded into the shaft 1062, clamping the spacer 1076 and the drive motor rotor 1058 against a shoulder 1078 of the shaft 1062 (e.g., between the encoder magnet holder 1070 and the shoulder 1078 of the shaft 1062). Thus, the drive motor rotor 1058 is fixed to the shaft 1062, and the drive motor rotor 1058, the shaft 1062, the gear 1060, the encoder magnet holder 1070, and the encoder magnet 1068 all rotate together as a unit. The drive motor rotor 1058 may be attached to the shaft 1062 in other ways. For example, the drive motor rotor 1058 may be attached to the shaft 1062 by a press fit, an adhesive, a key/keyway arrangement, tabs, flanges, one or more connectors, or any combination thereof.

In one embodiment, the drive motor system 804 includes a retainer 1080 (e.g., a retaining ring) configured to restrict (e.g., prevent) axial movement of the shaft 1062, the gear 1060, the drive motor rotor 1058, and/or the encoder magnet 1068 in one or both axial directions. The retaining ring 1080, for example, may be disposed in a groove in the shaft 1062 and may interface with part of the housing 702 to restrict the axial movement.

The gear 1060 may be any number of different types of gears. For example, the gear 1060 is a helical gear with external gear teeth 1082 (e.g., helical gear teeth). The gear 1060 may be made of any number materials. For example, the gear 1060, and the shaft 1062, are made of steel. Other types of gears may be provided for the gear 1060.

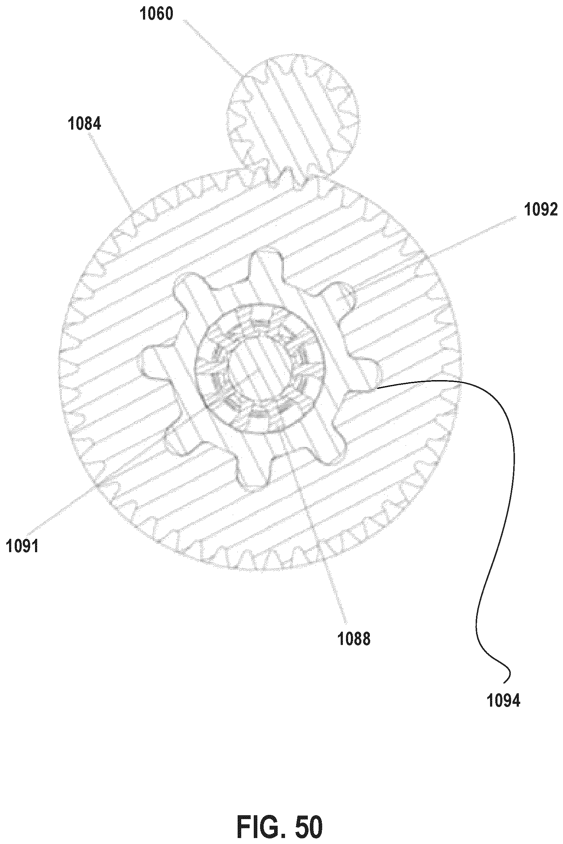

Referring to FIGS. 49 and 50, the drive motor system 804 includes a gear 1084 (e.g., a second gear). The gear 1084 may be any number of different types of gears including, for example, a helical gear with external gear teeth 1086 (e.g., helical gear teeth). The gear 1084 may be made of any number of materials including, for example, plastic (e.g., a polymer such as POM or PEEK). The gear 1084 may be made of plastic for noise reduction purposes. Other types of gears may be provided for the gear 1084.

The helical gear teeth 1086 of the gear 1084 mesh with the helical gear teeth 1082 of the gear 1060. The gear 1084 is larger than the gear 1060, and the number of the helical gear teeth 1086 of the gear 1084 is greater than the number of the helical gear teeth 1082 of the gear 1060.

The drive motor system 804 also includes a clutch 1088 (e.g., a one-way drive motor clutch) and a shaft 1090. The clutch 1088 may be any number of different types of clutches including, for example, a one-way sprag clutch. The clutch 1088 is disposed and is configured to act between the gear 1084 and the shaft 1090.

In one embodiment, the first gear 1060 and the second gear 1084 are sized and shaped such that the second gear 1084 rotates at a rotational speed that is 10% or more of a rotational speed at which the first gear 1060 rotates. In one embodiment, the first gear 1060 and the second gear 1084 are sized and shaped such that the second gear 1084 rotates at a rotational speed that is 15% or more of a rotational speed at which the first gear 1060 rotates. For example, the one-way drive motor clutch 1088 may be associated with the second gear 1084 rotating at twenty to thirty percent (e.g., twenty seven percent, twenty eight percent, or twenty nine percent) of a rotational speed of the first gear 1060. This combined with the one-way drive motor clutch 1088 being positioned in the vicinity of an output of the drive motor (e.g., without additional gears engaging between the one-way drive motor clutch 1088 and the output of the drive motor) allows for a size and cost of the one-way drive motor clutch 1088 to be minimized.

Referring to FIG. 50, the drive motor system 804 may include an outer race 1092 that is disposed within a corresponding recess 1094 within the gear 1084. For example, the outer race 1092 may be sized and shaped to correspond to (e.g., match) a size and a shape of the recess 1094 in the gear 1084. The outer race 1092, and thus the recess 1094, may be any number of different shapes. For example, as shown in FIG. 50, the outer race 1092, and thus the recess 1094, may have a cylindrical body with a number of spokes (e.g., eight radially projecting arms) extending away from the cylindrical body.

The outer race 1092 may be made of any number of materials. For example, the outer race 1092 may be made of hardened steel. Other configurations of the outer race 1092 may be provided.

The engagement of the eight radially projecting arms of the outer race 1092, for example, with corresponding projections of the recess 1094 rotationally fixes the outer race 1092 to the gear 1084. In other words, the outer race 1092 and the gear 1084 rotate together when the outer race 1092 is disposed within the recess 1094 in the gear 1084. In other embodiments, the outer race 1092 may be rotationally fixed to the gear 1084 in other ways. For example, the outer race 1092 may the attached to the gear 1084 with one or more connectors (e.g., screws and/or nut/bolt combinations).

Referring to FIG. 49, the drive motor system 804 includes ball bearings 1096, 1098 disposed on opposite sides of the outer race 1092, respectively, within the gear 1084. For example, the ball bearing 1096 is disposed on one side of the outer race 1092, within the recess 1094 (e.g., a first recess) within the gear 1084, and the ball bearing 1098 is disposed on the other side of the outer race 1092, within another recess 1100 (e.g., a second recess smaller than the first recess 1094) within the gear 1084. In other words, outer races of the ball bearings 1096, 1098 are disposed in recesses (e.g., the first recess 1094 and the second recess 1100) in either side of the gear 1084.

The shaft 1090 is received by inner races of the ball bearings 1096, 1098, respectively. A gear 1091 (e.g., a third gear) is attached to the shaft 1090. In the embodiment shown, the gear 1091 and the shaft 1090 form a single part and rotate together. In another embodiment, the gear 1091 may be attached to the shaft 1090 in any number of ways, including, for example, with welds and/or one or more connectors (e.g., screws). The gear 1091 may be any number of different types of gears, such as, for example, a helical gear, and the gear 1091 has external teeth 1102 (e.g., helical gear teeth). The gear 1091 may be smaller than the gear 1084. In other words, a number of the helical gear teeth 1102 of the gear 1091 may be less than the number of the helical gear teeth 1086 of the gear 1084. The gear 1091 may be made of any number of different materials including, for example, hardened steel.

The shaft 1090 may be supported by additional, fewer, and/or different bearings. For example, the shaft 1090 may also be supported by a ball bearing 1104 (e.g., an inner race of the ball bearing 1104). The ball bearing 1098 and the ball bearing 1104, for example, may be positioned on opposite sides of the gear 1091, respectively.

In one embodiment, the drive motor system 804 includes a retainer 1106 (e.g., a retaining ring) configured to restrict (e.g., prevent) axial movement of the shaft 1090, and thus the gear 1091, relative to the gear 1084 and the clutch 1088. The retaining ring 1106 may be disposed within a groove within the shaft 1090.

The clutch 1088 is disposed between the outer race 1092 and the shaft 1090. Retainers 1108 (e.g., internal retaining rings) disposed in internal grooves in an inner circumference of the outer race 1092 axially retains the clutch 1088. The clutch 1088 is configured such that power from the drive motor may be transmitted to move the electric bicycle forward, but rotational power from the rider may not be transmitted to the drive motor. This is useful in the event that the bicycle is pedaled above a speed at which the drive motor must, by law, be shut down, and also in the event that a battery of the electric bicycle loses charge and the rider must propel the electric bicycle manually, without motor assistance.

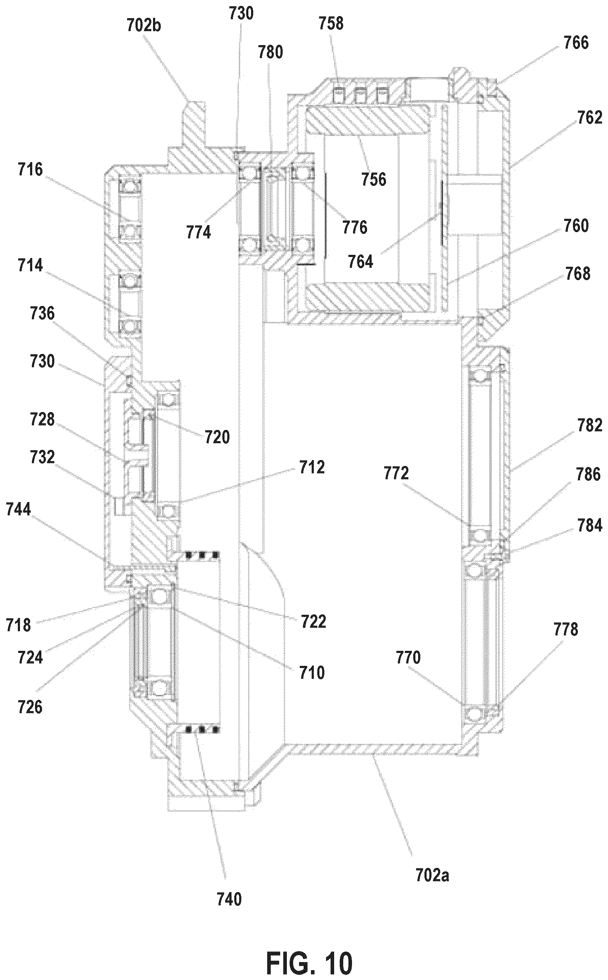

Referring to FIG. 9, the drive motor system 804 is disposed in the housing 702. Referring to FIGS. 9 and 10, a first outer circumferential surface of the shaft 1062 mates with an inner race of ball bearing 716, and a second outer circumferential surface of the shaft 1062 mates with inner races of the ball bearings 774 and 776, respectively. The seal 780 forms a watertight seal between the DS housing portion 702a and the shaft 1062 (e.g., and thus the gear 1060). The gear 1091 mates with the ball bearing 714, and an outer race of the ball bearing 1104 is received in a bore in the DS housing portion 702a.

A helical gear mesh between the gear 1060 and the gear 1084 of the drive motor system 804 produces an axial thrust load that biases the gear 1060 to the left (e.g., in the view shown in FIG. 9) and biases the gear 1084 to the right (e.g., in the view shown in FIG. 9). The axial thrust load on the gear 1060 is resolved by a load path through a shoulder on the gear 1060, through the ball bearing 776, and into the DS housing portion 702a. The axial thrust load on the gear 1084 is resolved by a load path from the gear 1084, through the ball bearing 1098, through a first shoulder on the gear 1091, through a second shoulder on the gear 1091, through the ball bearing 1104, and into the DS housing portion 702a. The gear 1091 (e.g., the helical gear teeth 1102 of the gear 1091) of the drive motor system 804 meshes with the gear 898 (e.g., the second set of helical gear teeth 902 of the gear 898) of the jackshaft assembly 802. The helical gear mesh between the gear 1091 and the gear 898 produces a thrust load that biases the gear 898 of the jackshaft assembly 802 to the left (e.g., in the view shown in FIG. 9). This thrust load on the gear 898 is resolved by a load path from a shoulder on the gear 898, through the ball bearing 712, and into the NDS housing portion 702b.

The drive motor system 804 is disposed in the housing 702, such that the encoder magnet 1068 is positioned adjacent to the encoder chip 764 on the drive motor PCBA 760. The encoder chip 764 may thus sense an angular position of the encoder magnet 1068.

The shift system works by selectively rotationally positioning the camshaft assembly 920 relative to the jackshaft 880 such that, for any given gear 882, 908, 910, 912, 914, 916 selected, the appropriate pawl(s) 952, 954, 956, 958, 960, 962 are engaged with their associated gear(s) 882, 908, 910, 912, 914, 916. To do this, a processor of the bicycle (e.g., a processor of the drive unit 700) is to first establish a reference position (e.g., a home position) of the camshaft assembly 920 relative to the jackshaft 880. All subsequent shift positions are then determined as rotational displacements from this home position.

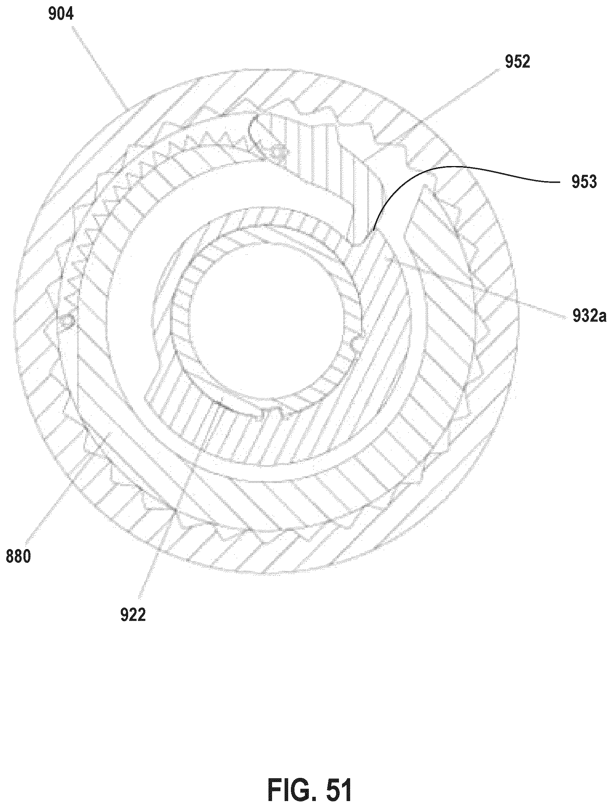

Referring to FIG. 51, to establish the home position, the shift motor 984 rotates the camshaft assembly 920 counterclockwise (e.g., in the view shown in FIG. 51) relative to the jackshaft 880 until the cam lobe 932a abuts the pawl 952, as shown in FIG. 51. The pawl 952 blocks the cam lobe 932a from further counterclockwise rotation; therefore, the camshaft assembly 920 stops moving, and the shift motor 984 stalls (e.g., stops moving).

The cam lobe 932a is larger than the other cam lobes 932b-f. For example, the cam lobe 932a extends about a larger circumferential distance than the other cam lobes 932b-f. Also, a transitional ramp portion 953 of the cam lobe 932a is steeper than transitional ramp portions of the other cam lobes 932b-f, respectively. The transitional ramp portion 953 of the cam lobe 932a is sized and shaped, such that the pawl 952 cannot climb the transitional ramp portion 953. The pawl 952 points in a different direction (e.g., a clockwise direction in the view shown in FIG. 51) than the other pawls 954-962. The pawl 952 corresponds to an input stage and is used to drive the jackshaft 880. The other pawls 954, 956, 958, 960, 962 correspond to output stages.

The processor may control the shift motor 984 to zero out the camshaft assembly 920 every time the electric bicycle is powered on. In one embodiment, the processor recognizes the stalled out shift motor 984 state (e.g., the zeroed out position) has been reached by the fact that, in this state, the incremental encoder and the absolute encoder both no longer indicate positional changes over time. Alternatively, the processor may detect the stalled motor by a resulting spike in electrical current at the shift motor 984. In this state, the system records positional values determined by the incremental encoder and the absolute encoder, and uses these values as the home position. As discussed above, the absolute encoder senses the position of the camshaft assembly 920 relative to the jackshaft 880, and the incremental encoder counts the number of times the shift motor rotor 984 makes a complete revolution.

In the embodiment shown, the drive unit 700 has twelve gears, the lowest of which is 1:1, providing that for every revolution of the cranks (e.g., the DS crank 870 and the NDS crank 868), the chainring rotates once. All of the other gears are faster than 1:1, providing that the chainring rotates faster than the cranks (e.g., the DS crank 870 and the NDS crank 868). Different gearing may be provided. For example, more or less than twelve gears may be provided.

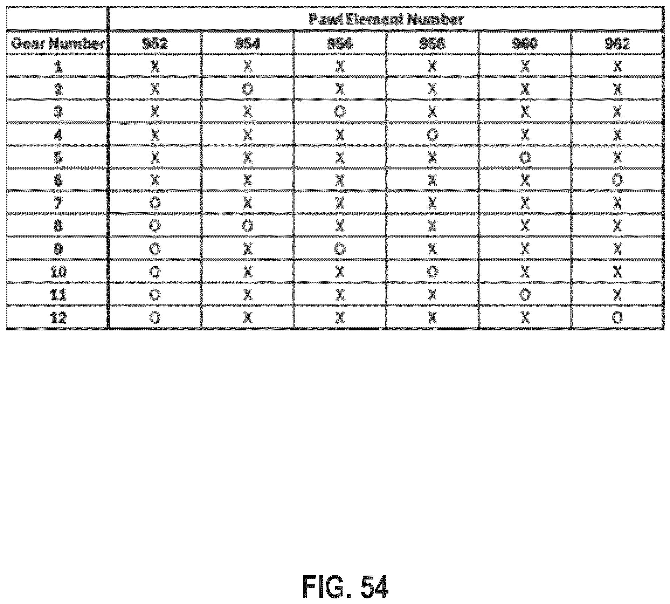

Fig. 54 is a table that shows example states of each of the six pawls 952-962 in each of the twelve gears. For example, in gear two, pawls 952, 956, 958, 960, and 962 are disengaged, and pawl 954 is engaged. As another example, in gear eight, pawls 952 and 954 are engaged, and pawls 956, 958, 960, and 962 are disengaged. As yet another example, in gear twelve, pawls 952 and 962 are engaged, and pawls 954, 956, 958, and 960 are disengaged.

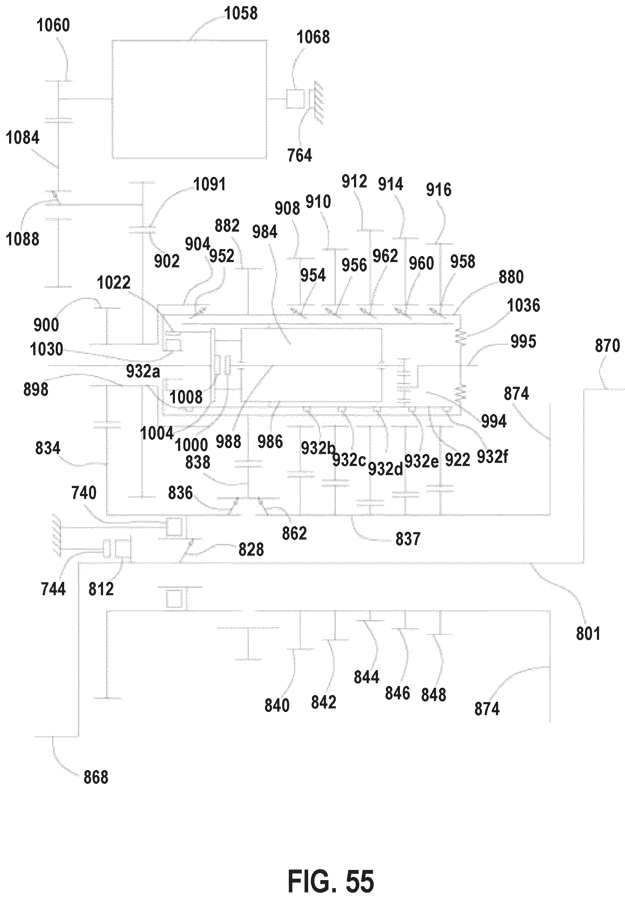

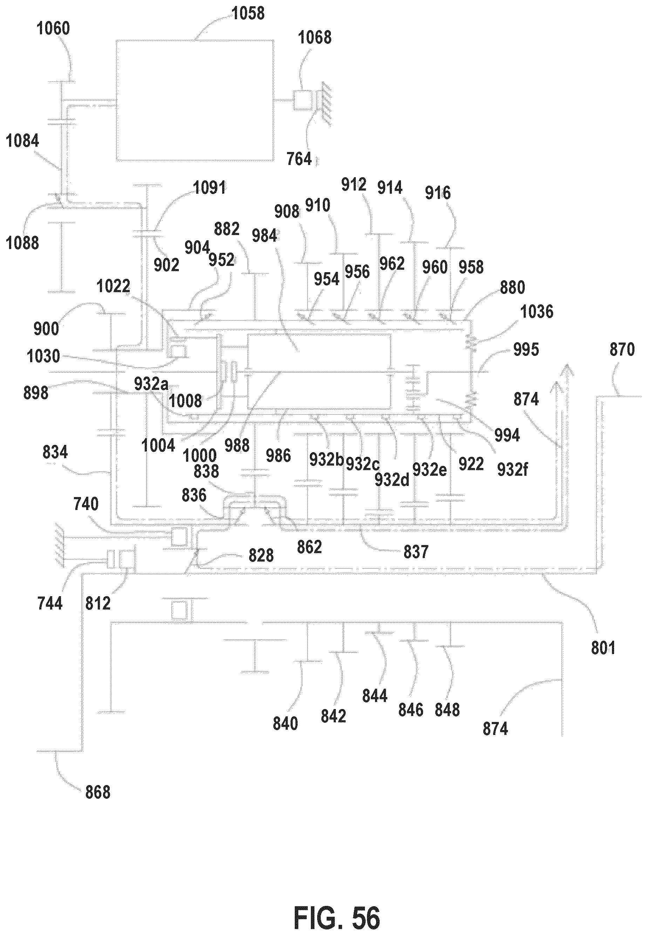

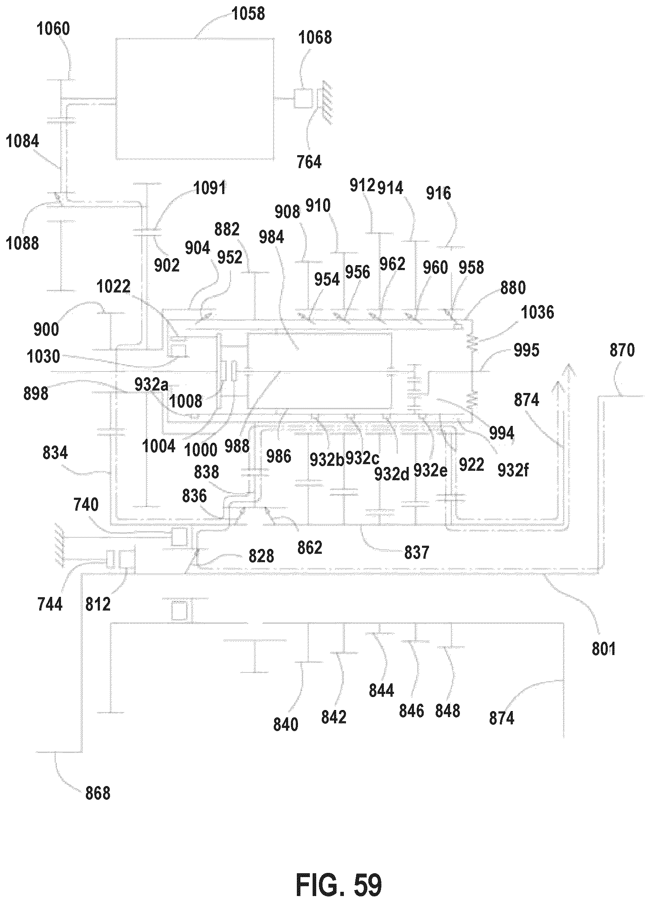

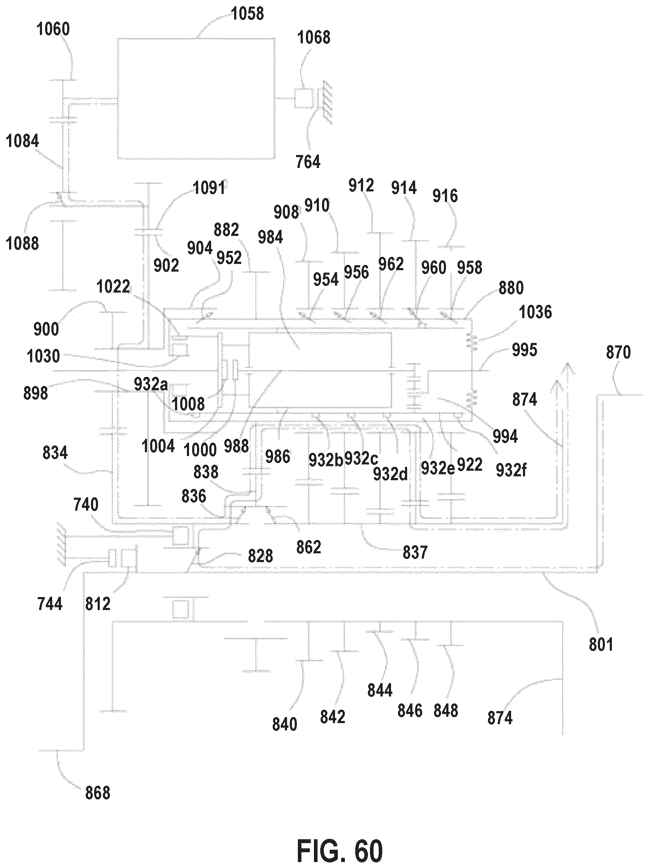

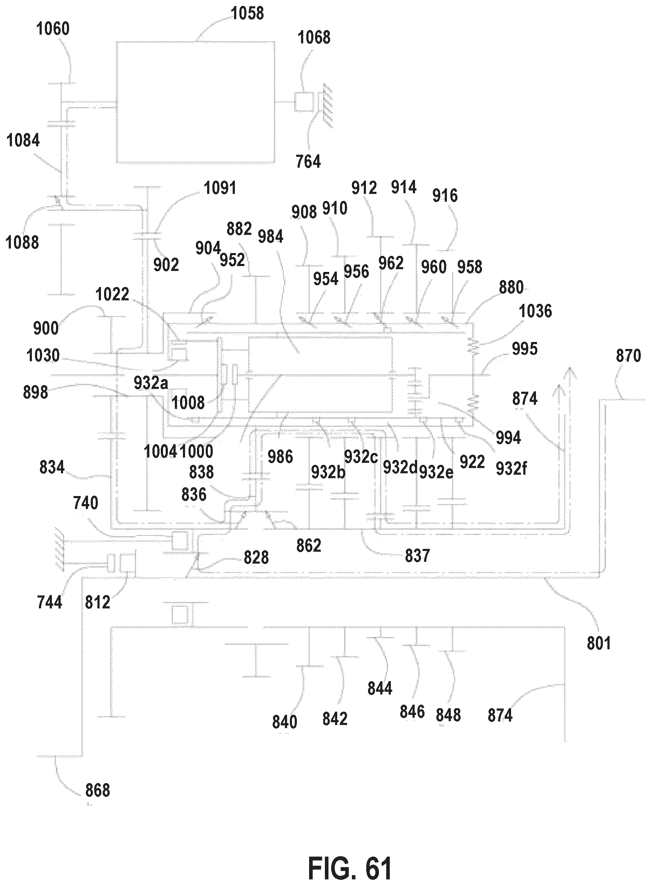

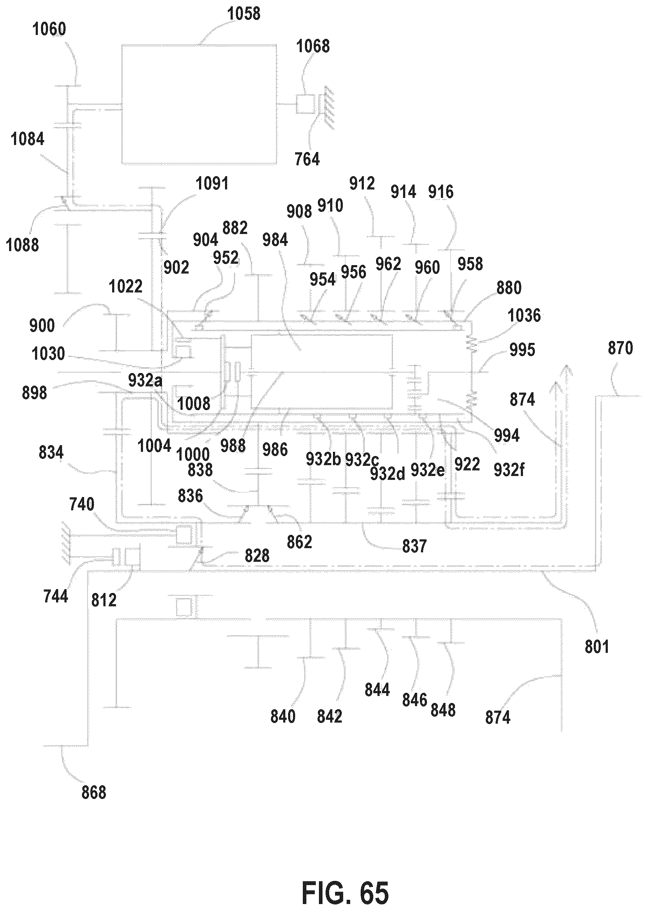

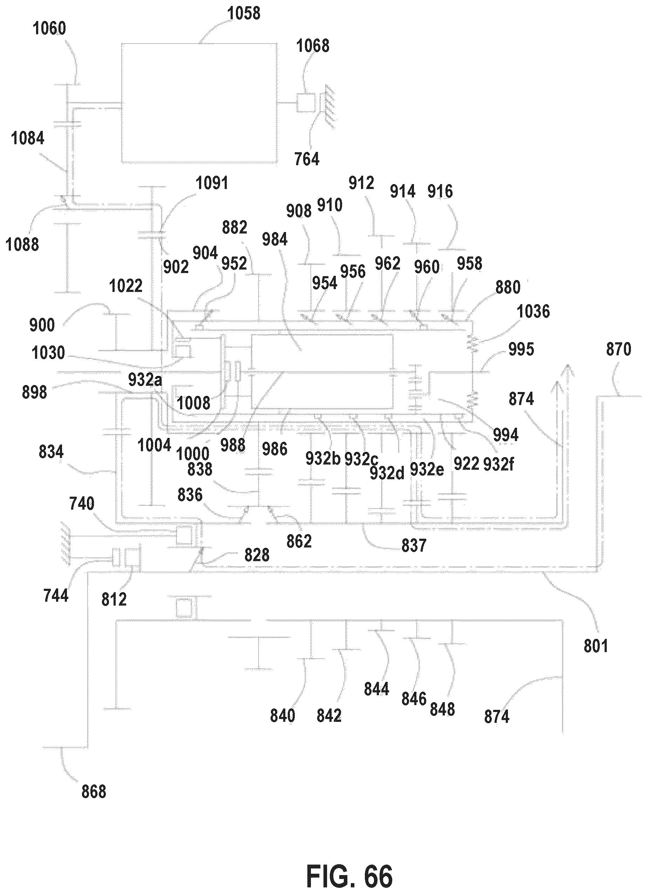

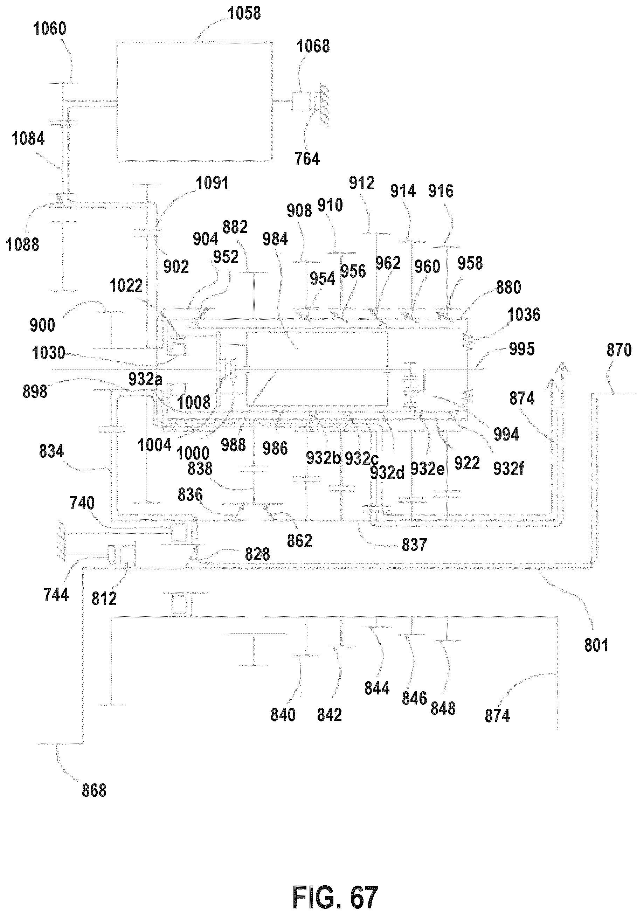

FIG. 55 is a schematic diagram of the drive unit 700. FIGS. 56-67 show the states of the drive unit 700 in each of the twelve gears, respectively. Each of the FIGS. 56-67 shows two power paths in broken lines: a drive motor power path and a rider power path.

FIG. 56 shows the state of the system in gear one, which is a lowest (e.g., slowest and easiest to pedal) of the twelve gears provided. Broken lines in FIG. 56 show power paths from the drive motor (e.g., the drive motor rotor 1058) to the chainring 874 (e.g., the drive motor power path) and from the rider to the chainring 874 (e.g., the rider power path), respectively. In gear one, the camshaft 922 is rotationally positioned such that all the pawls 952-962 are disengaged from respective gears 882, 908, 910, 912, 914, 916. Rider power flows from the cranks 868, 870, through the spindle 801, through the one-way rider clutch 828, through the gear 834, through the one-way clutch 836, through the gear 838, through the one-way clutch 862, and through output gear cluster 837 to the chainring 874. Although the gear 838 does drive the gear 882 (which is an integral part of the jackshaft 880), the jackshaft 880 does not transmit power to any of the gears 908-916 since respective pawls 954-962 are disengaged. Similarly, although the gear 834 drives the gear 898, the gear 898 is unable to drive the jackshaft 880 since the pawl 952 corresponding to the gear 898 is also disengaged. Power from the drive motor flows from the drive motor rotor 1058, through the gear 1060, through the gear 1084, through the motor clutch 1088, through the gear 1091, through the gear 898, through the gear 834, and joins the rider motor power path at this point. The effective gear ratio in gear one is 1:1, providing that for every revolution of the cranks 868, 870, the chainring 874 rotates once.

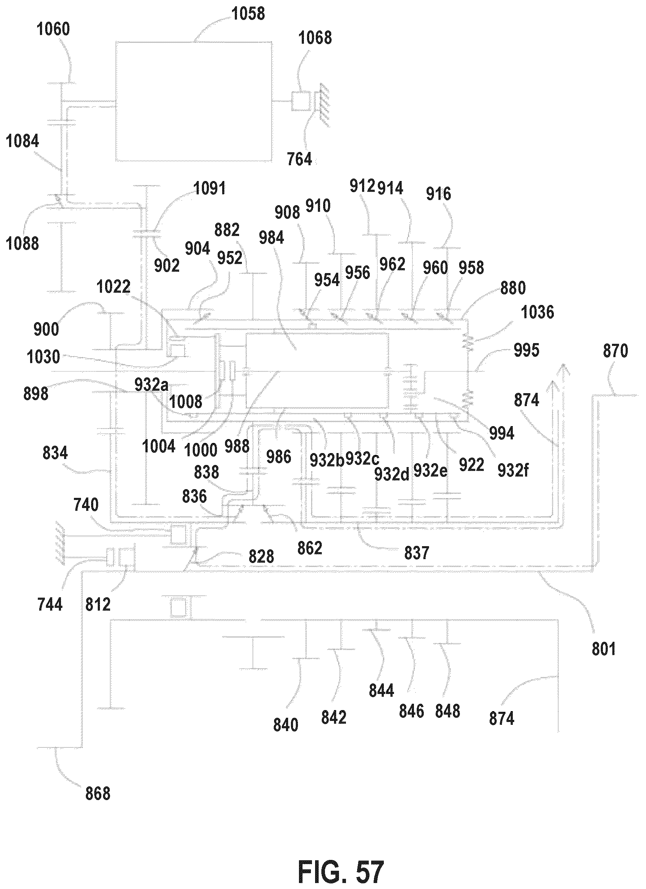

FIG. 57 shows the state of the drive unit 700 in gear two. Broken lines show the power paths from the drive motor to the chainring 874 and from the rider to the chainring 874. The camshaft 922 is rotationally positioned such that the pawl 954 is engaged with the gear 908. Rider power flows from the cranks 868, 870, through the spindle 801, through the rider clutch 828, through the gear 834, through the one-way clutch 836, through the gear 838, through the gear 882 (e.g., the jackshaft 880), through the pawl 954, through the gear 908, through the gear 840, through the output gear cluster 837, to the chainring 874. Since the output gear cluster 837 rotates faster than the gear 838, the one-way clutch 862 is overdriven (e.g., does not transmit any power). In an embodiment, the gear 838 and the gear 882 both have a same number of teeth, and therefore, the jackshaft 880 rotates at a same speed as the spindle 801. The power path from the drive motor to the point where the power paths of the motor and rider meet is the same as in gear one.

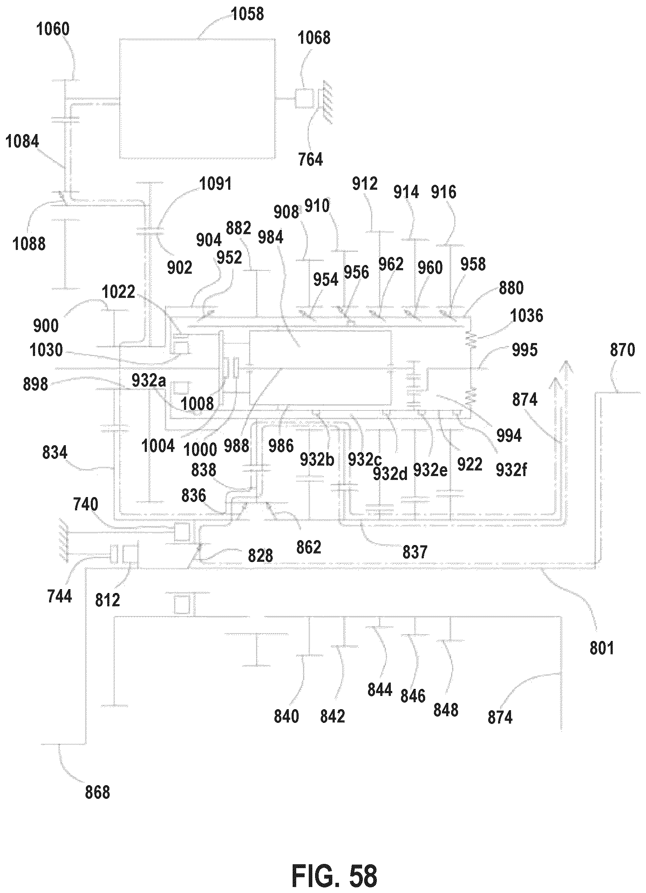

FIGS. 58-61 show the states of the system in gears three to six, respectively. Broken lines show the power paths from the motor to the chainring 874 and from the rider to the chainring 874. Gears three to six are the same as gear two, except that the camshaft 922 is rotationally positioned such that a different one of the pawls 954-962 is engaged with a respective gear 908-916, resulting in the output gear cluster 837 being driven at a different speed, since a different gear pair is acting. For example, in gear two (see FIG. 57), the pawl 954 is engaged to activate gear pair 908, 840, while in gear three (see FIG. 58), the pawl 956 is engaged to activate gear pair 910, 842. In all the gears two to six, the one-way clutch 862 is overdriven, since the output gear cluster 837 rotates faster than gear 838.

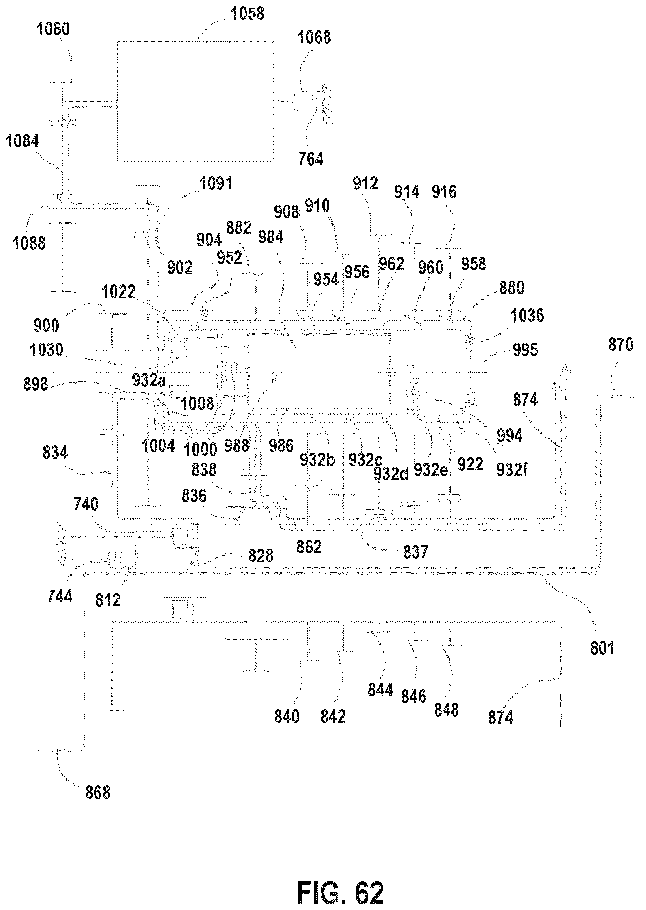

FIG. 62 shows the state of the drive unit 700 in gear seven. Broken lines show the power paths from the motor to the chainring 874 and from the rider to the chainring 874. The camshaft 922 is rotationally positioned such that pawl 952 is engaged with the spline body 904. The spline body 904 is rotationally fixed to the gear 898. This allows the gear 898 to transmit power to the jackshaft 880. All other pawls 954-962 are disengaged from the respective gears 908-916. Rider power flows from the cranks 868, 870, through the spindle 801, through the rider clutch 828, through the gear 834, through the gear 898, through the spline body 904, through the pawl 952, through the jackshaft 880, through the gear 882, through the gear 838, through the one-way clutch 862, through the output gear cluster 837, to the chainring 874. Although in gears one to six the jackshaft 880 rotates at a same angular velocity as the spindle 801, the jackshaft 880 is driven at a much faster rate than the spindle 801 in gear seven (e.g., and in gears eight to twelve), since the gear pair 834, 900 controls the relative speeds of the spindle 801 and the jackshaft 880 in gear seven. The gear 838 rotates faster than gear the gear 834, causing the one-way clutch 836 to be overdriven. Power from the drive motor flows from the drive motor rotor 1058, through the gear 1060, through the gear 1084, through the motor clutch 1088, through the gear 1091, through the gear 898, and joins the rider motor power path at this point.

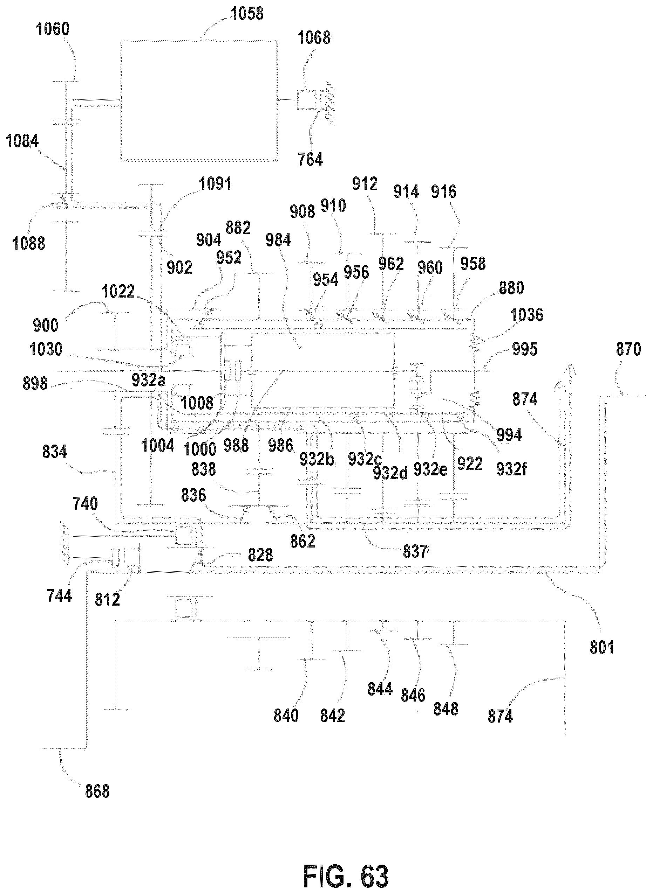

FIG. 63 shows the state of the drive unit in gear eight. Broken lines show the power paths from the motor to the chainring 874 and from the rider to the chainring 874, respectively. The camshaft 922 is rotationally positioned such that the pawl 954 is engaged with the gear 908, and the pawl 952 is engaged with the spline body 904 (e.g., rotationally fixed to the gear 898). Rider power flows from the cranks 868, 870, through the spindle 801, through the rider clutch 828, through the gear 834, through the gear 898, through the spline body 904, through the pawl 952, through the jackshaft 880, through the pawl 954, through the gear 908, through the gear 840, through the output gear cluster 837, to the chainring 874. Because the output gear cluster 837 rotates faster than the gear 838, the one-way clutch 862 is overdriven. The power path from the drive motor to the point where the power paths of the drive motor and rider meet is the same as in gear seven.

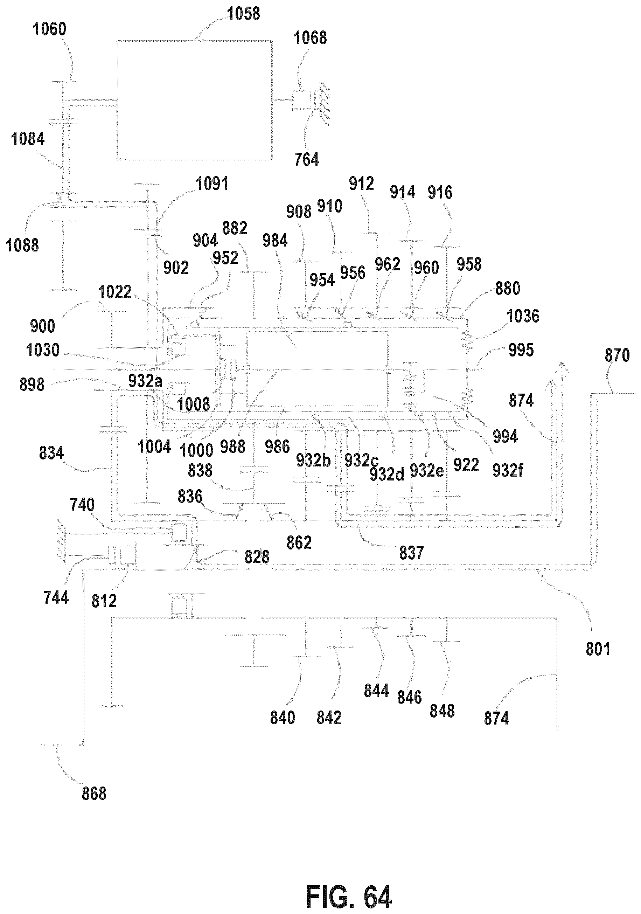

FIGS. 64-67 show the states of the drive unit in gears nine to twelve, respectively. Broken lines show the power paths from the motor to the chainring 874 and from the rider to the chainring 874. Gears nine to twelve are the same as gear eight, except that the camshaft 922 is rotationally positioned such that a different one of the pawls 954-962 is engaged with a respective gear 908-916, resulting in the output gear cluster 837 being driven at a different speed, since a different gear pair is acting. For example, in gear eight (see FIG. 63), the pawl 954 is engaged to activate gear pair 908, 840, while in gear nine (see FIG. 64), the pawl 956 is engaged to activate gear pair 910, 842. In all the gears seven to twelve, the pawl 952 is engaged with the spline body 904 (e.g., which is rotationally fixed to the gear 898).

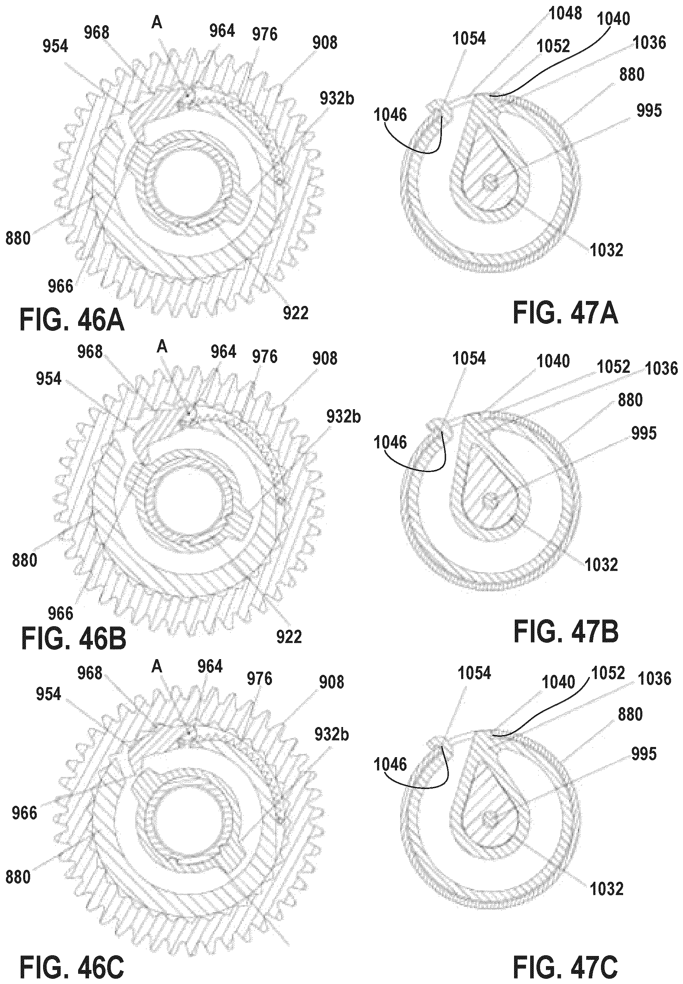

A processor of the electric bicycle (e.g., a processor of the drive unit 700) controls the shift motor 984 to shift between the twelve gears, for example, discussed above. FIGS. 46A and 47A show a case where the cam lobe 932b is in the process of rotating clockwise (e.g., in the view shown in FIG. 46A) to drive the pawl 954 clockwise (e.g., in the view shown in FIG. 46A) about its axis A into engagement with the gear 908, but the pawl 954 is still on a transitional ramp portion of the cam lobe 932b, so the cam lobe 932b is not yet fully engaged with the gear 908. If the rider or the drive motor applies a clockwise torque to the gear 908 in this state, the gear 908 will urge the pawl 954 to rotate counterclockwise about its axis A and out of engagement with the gear 908. This causes the tip 966 of the pawl 954 to exert a strong force on a surface of the transitional ramp portion (e.g., a ramp surface) of the cam lobe 932b. This force exerts a counterclockwise torque on the cam lobe 932b. In other words, although the shift motor 984 exerts a clockwise torque on the cam lobe 932b to drive the pawl 954 up the ramp surface into engagement with the gear 908, the gear 908 exerts a downwards force on the pawl 954 that, in turn, exerts a counterclockwise torque on the cam lob 932b. If the drive unit had no rotational compliance, this counterclockwise torque may become very high and may stall the drive motor, preventing the cam lobe 932b from reaching an intended position (e.g., destination), or may even damage or break the gearhead 994.

The saver spring 1036 addresses this problem, as shown in 48A-C. In the absence of the saver spring 1036, the output shaft 995 of the gearhead 994 (e.g., which rotationally drives the camshaft 922) would be rotationally fixed to the jackshaft 880. Thus, high input torques from the jackshaft 880 would be directly transmitted to the gearhead 994, potentially causing damage to the gearhead 994. To address this problem, as discussed above, the saver spring 1036 is disposed between the jackshaft 880 and the output shaft 995 of the gearhead 994. The saver spring 1036 provides compliance in a rotational system including the camshaft assembly 920 and the jackshaft 880.

Referring to FIGS. 46A and 47A, FIGS. 46B and 47B, and FIGS. 46C and 47C, in order to drive the camshaft 922 and the cam lobe 932b counterclockwise relative to the jackshaft 880, the output shaft 995 of the gearhead 994 is urged clockwise (e.g., in the view shown in FIGS. 47A-C), which urges the drive arm 1032 clockwise, which urges the driving surface 1040 of the saver spring 1036 clockwise. This urging of the driving surface 1040 of the saver spring 1036 clockwise reacts against the first notch surface 1052 of the jackshaft 880. This chain of reaction forces causes the gearhead 994, along with the camshaft 922 (e.g., fixed relative to the gearhead 994), to rotate counterclockwise relative to the jackshaft 880.

In order to drive the camshaft 922 clockwise relative to the jackshaft 880, the output shaft 995 of the gearhead 994 is urged counterclockwise, which urges the drive arm 1032 counterclockwise. This urging of the drive arm 1032 counterclockwise urges the biasing surface 1046 of the saver spring 1036 counterclockwise, which reacts against the second notch surface 1054 of the jackshaft 880. These chain of reaction forces cause the gearhead 994, along with the camshaft 922 (e.g., which is fixed relative to the gearhead 994), to rotate clockwise relative to the jackshaft 880.

As previously described, FIGS. 46A and 47A show a scenario in which the shift motor 984 is trying to rotate the camshaft 922 and the cam lobe 932b clockwise, but a clockwise torque (e.g., in the view shown in FIGS. 46A and 47A) on the gear 908 is pushing the pawl 954 down. This exerts a counterclockwise torque on the cam lobe 932b and the camshaft 922.

If this counterclockwise torque exceeds a preload of the saver spring 1036, the cam lobe 932b and the camshaft 922 will rotate counterclockwise as shown in FIGS. 46B and 47B. This drives the gearhead 994 counterclockwise, which drives the output shaft 995 of the gearhead 994 counterclockwise. This drives the drive arm 1032 counterclockwise, which drives the drive surface 1040 of the saver spring 1036 to rotate counterclockwise relative to the first notch surface 1052 of the jackshaft 880, as shown in FIGS. 46B and 47B. Thus, the saver spring 1036 is wound up, storing or "saving" energy. As the cam lobe 932b rotates counterclockwise (e.g., in the view shown in FIGS. 46B and 47B), the tip 966 of the pawl 954 rides down the transitional ramp portion of the cam lobe 932b until the cam lobe 932b completely disengages from the gear 908, as shown in FIG. 46B. Referring to FIGS. 46C and 47C, the gear 908 then rotates clockwise (e.g., in the view shown in FIGS. 46C and 47C), and when a tip of the internal tooth 908b has rotated past the tip 968 of the pawl 954, the gear 908 no longer exerts an opposing torque on the cam lobe 932b. The saver spring 1036 then rapidly unwinds, releasing stored energy, until the driving surface 1040 of the saver spring 1036 once again contacts the first notch surface 1052 of the jackshaft 880. This drives the camshaft 922 and the cam lobe 932b clockwise. The pawl 954 rides up the transitional ramp portion of the cam lobe 932b and engages the internal tooth 908b of the gear 908.

The processor of the electric bicycle (e.g., the processor the drive unit 700) may determine a degree to which the saver spring 1036 is displaced based on data from the incremental encoder and the absolute encoder. For example, the processor may determine a degree to which the driving surface 1040 of the saver spring 1036 is displaced from the first notch surface 1052 of the jackshaft 880. In other words, the processor may determine a degree to which the saver spring 1036 is "wound up."

The processor may identify and/or determine the displacement in any number of ways. As long as the driving surface 1040 of the saver spring 1036 is in contact with the first notch surface 1052 of the jackshaft 880, there is a biunique correspondence between a position indicated by the absolute encoder and a position indicated by the incremental encoder. As the driving surface 1040 of the saver spring 1036 moves away from the first notch surface 1052 of the jackshaft 880, there is no longer a biunique correspondence between the absolute encoder and the incremental encoders, since the absolute encoder measures a counterclockwise rotation of the camshaft 922 relative to the jackshaft 880 that the incremental encoder does not measure.

The processor may determine a difference between the positions measured by the absolute encoder and the incremental encoder, respectively. The processor may use the determined difference to calculate a degree to which the saver spring 1036 is wound up (e.g., a distance equal to the determined distance), and the processor may use the calculated degree to which the saver spring 1036 is wound up to alter how movement of the camshaft assembly 920 is controlled. For example, the processor may compare the calculated degree to which the saver spring 1036 is wound up to a predetermined distance, and when, based on the comparison, the calculated degree is greater than the predetermined distance, stop the shift motor 984 until a shift has completed, so that the saver spring 1036 does not use up all available range of motion. The calculated degree may be used to control movement of the camshaft assembly 920 in different ways.

When shifting from a first gear (e.g., gear two) to a second gear (e.g., gear three), the pawl (e.g., the pawl 956) corresponding to the second gear (e.g., the gear 908; the gear to which the drive unit 700 is being shifted) is to be engaged with the second gear before the pawl (e.g., the pawl 954) corresponding to the first gear (e.g., the gear 906; the gear from which the drive unit 700 is being shifted) is disengaged. If the pawl corresponding to the first gear were to be disengaged from the first gear before the pawl corresponding to the second gear was engaged with the second gear, the cranks 868, 870 may spin freely without any resistance (e.g., a free spinning condition), potentially resulting in rider injury. Further, this free spinning condition may be disconcerting to the rider.

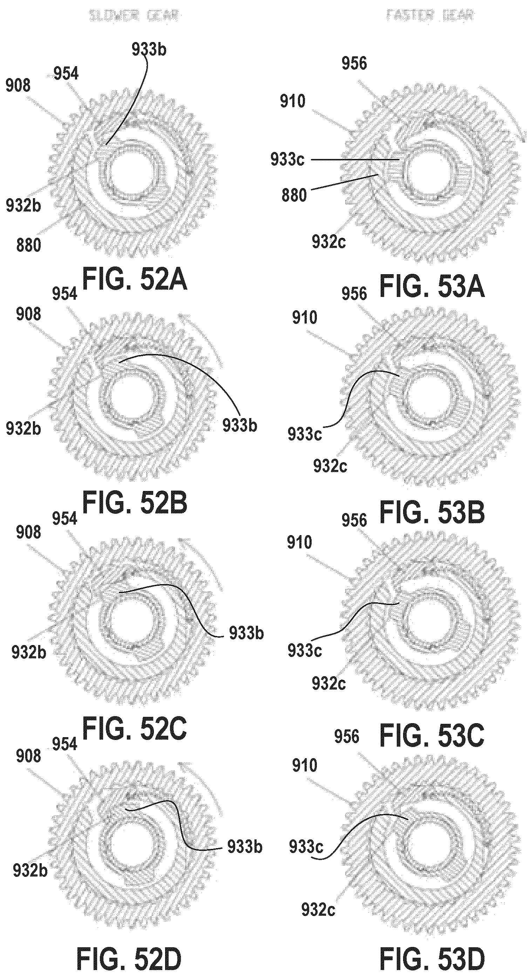

In order to avoid the free spinning condition, the processor of the electric bicycle (e.g., the processor of the drive unit 700) may use an intermediate shift position between shift positions of any two consecutive gears. Such use of an intermediate shift position when shifting between two consecutive gears is illustrated by FIGS. 52A-D and FIGS. 53A-D.

FIGS. 52A and 53A show states of the gear 908 and the gear 910, respectively, while the slower gear, the gear 908, is engaged and the faster gear, the gear 910, is disengaged. The pawl 954 is engaged with the gear 908 so that power may be transmitted from the jackshaft 880 to the gear 908. The faster gear, the gear 910, rotates clockwise (e.g., in the view of FIG. 53A) relative to the pawl 956, as shown by the arrow.

As the cam lobes 933b and 933c rotate clockwise (e.g., in the views of FIGS. 52A-D and 53A-D) to shift from the slower gear, the gear 908, to the faster gear, the gear 910, the cam lobes 933b and 933c reach an intermediate position shown in FIGS. 52B and 53B. In this position, the cam lobes 933b and 933c are positioned to engage (e.g., move) the respective pawls 954 and 956 with the respective gears 908 and 910.

In one embodiment, the processor of the electric bicycle (e.g., the processor of the drive unit 700) may pause or slow down the camshaft 922 at this point in time to allow for the internal teeth 910b of the faster gear 910 to fully engage with the pawl 956 corresponding to the gear 910. The processor may identify the intermediate position based on data from the incremental encoder and/or the absolute encoder.

In one embodiment, the processor may pause the camshaft 922 for a period of time. In one embodiment, the period of time is a predetermined period of time, and the predetermined period of time is stored in a memory in communication with the processor (e.g., a memory of the drive unit 700). The processor may track an elapsed time from the shift to the intermediate position or once the intermediate position is reached.

The pawl 954 corresponding to the slower gear 908 continues transmitting power until the pawl 956 corresponding to the faster gear 910 is fully engaged with the gear 910. At this time, the pawl 956 corresponding to the faster gear 910 begins transmitting power while the pawl 954 corresponding to the slower gear 908 is overrun, as shown in FIGS. 52C and 53C. In other words, the slower gear, the gear 908, rotates counterclockwise (as shown by the arrow), pushing the pawl 954 corresponding to the gear 908 down and to the left as each internal gear tooth 908b passes by the pawl 954.

In one embodiment, the drive unit 700 includes a sound sensor (e.g., a microphone). For example, the sound sensor may be supported by and electrically connected to a PCB of the drive unit 700 (e.g., the PCBA 1004) adjacent to the jackshaft 880. The sound sensor may detect a clicking noise associated with the overrun and complete the shift after the clicking noise is detected.

To complete the shift, the cam lobes 933b and 933c rotate into the position shown in FIGS. 52D and 53D, respectively. In this position, the pawl 954 corresponding to the slower gear 908 is disengaged, and the pawl 956 corresponding to the faster gear 910 remains engaged, transmitting power.

As discussed above, the absolute encoder senses an absolute position of the camshaft 922 relative to the jackshaft 880, and the incremental encoder counts a number of times the shift motor rotor 988 makes a complete revolution. There may not be a linear relationship between a raw signal measured by the absolute encoder and an angular position of the camshaft. The incremental encoder may be used to create a linearization table for the absolute encoder. By rotating the camshaft 922 through a range of motion of the camshaft 922, the processor of the electric bicycle (e.g., the processor of the drive unit 700) may map an actual angular position of the camshaft 922 to a position identified by the absolute encoder by referencing values identified by the incremental encoder during rotation of the camshaft 922.

Another benefit of the drive unit 700 including both the absolute encoder and the incremental encoder is that the absolute encoder and the incremental encoder may be used together to detect and measure backlash in the drive unit 700. When the shift motor 984 begins moving, data generated by the incremental encoder shows a change in position immediately, but the absolute encoder does not detect any movement until the backlash has been removed. The processor may use this information to calculate the backlash in the device unit 700 and may then compensate for backlash during positioning operations of the camshaft 922.

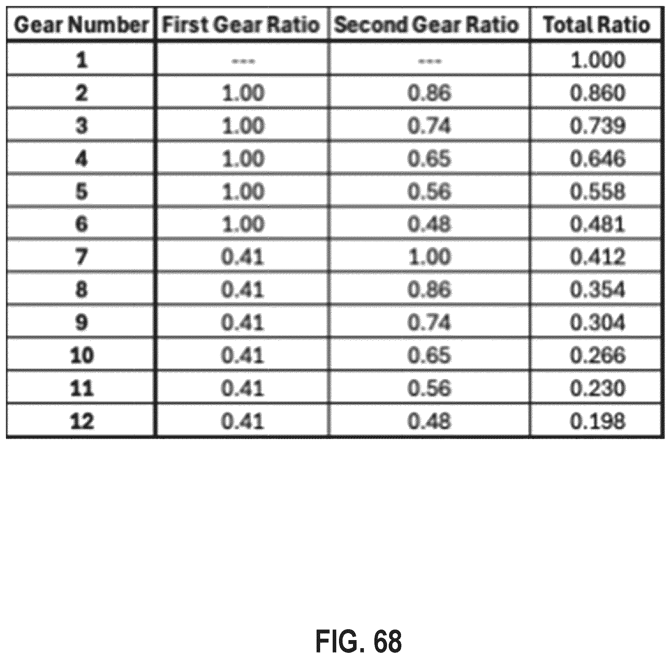

FIG. 68 is a table that shows a total gear ratio for each gear, where the total gear ratio is defined as a number of rotations of the cranks 868, 870 for each rotation of the chainring 874. The table of FIG. 68 illustrates that the lowest gear ratio is 1:1 and a fastest gear ratio is 0.198:1. Thus, a total range of the drive unit 700 (i.e. a slowest gear ratio divided by a fastest gear ratio) is 504%. The table also shows the gear ratios broken down into a first gear ratio and a second gear ratio for each gear, which represent ratios of the first gear pair and second gear pair in the rider power path, respectively. The total gear ratio for each gear is a product of the first gear ratio and second gear ratio.

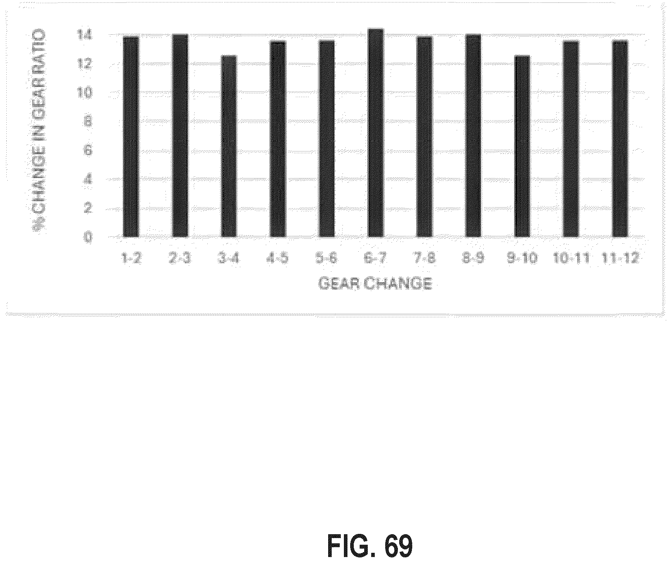

FIG. 69 is a bar graph that shows percent changes in gear ratio (e.g., "jumps") when shifting from one gear to the next. The bar graph of FIG. 69 shows that the jumps are all nearly equal, which is desirable from a perspective of the rider.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations and/or acts are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that any described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

### Aspects of the invention:

In the following, aspects of the invention are listed:
Aspect 1. A torque transmission device for a drive unit of an electric bicycle, the torque transmission device comprising:
   a first shaft that is hollow and has an outer circumferential surface, an inner circumferential surface, and an opening extending from the outer circumferential surface of the first shaft, through a portion of the first shaft, to the inner circumferential surface of the first shaft, at least one wall extending from the outer circumferential surface of the first shaft, through the portion of the first shaft, to the inner circumferential surface of the first shaft defining the opening;
   a second shaft disposed within the first shaft, such that the first shaft and the second shaft are rotatable relative to each other, the second shaft having an outer circumferential surface;
   a cam attached to and extending away from the outer circumferential surface of the second shaft;
   a gear rotatably attached to the first shaft over the opening, the gear comprising internal teeth;
   a lever having a seat, a foot, and a tooth, wherein the lever is movably attached to the first hollow shaft, such that the seat of the lever is received and rotatable within a recess within the at least one wall of the first hollow shaft,
   wherein the tooth of the lever is engageable with the internal teeth of the gear, and the foot of the lever is configured to contact the cam extending away from the outer circumferential surface of the second shaft,
   wherein the lever is movably attached to the first hollow shaft, such that the foot of the lever is biased away from the outer circumferential surface of the first shaft, and
   wherein a distance between the seat of the lever and the foot of the lever is greater than a distance between the tooth of the lever and the seat of the lever.
Aspect 2. The torque transmission device of Aspect 1, wherein a distance between the tooth of the lever and the foot of the lever is greater than the distance between the tooth of the lever and the seat of the lever.
Aspect 3. The torque transmission device of Aspects 1 or 2, wherein the first shaft also has a groove extending away from the recess within the at least one wall of the first hollow shaft,
   wherein the torque transmission device further comprises a spring disposed within the groove, the spring having a first end and a second end opposite the first end,
   wherein the first end of the spring is attached to the first shaft at a position along the groove, and the second end of the spring is attached to the lever, such that the lever is biased away from the outer circumferential surface of the first shaft.
Aspect 4. The torque transmission device of one of the preceding Aspects, wherein the opening is a first opening, the cam is a first cam, the gear is a first gear, the lever is a first lever, and the internal teeth are first internal teeth,
   wherein the first shaft also has a second opening extending from the outer circumferential surface of the first shaft, through the portion of the first shaft, to the inner circumferential surface of the first shaft, the second opening being adjacent to the first opening along a length of the first shaft,
   wherein the torque transmission device further comprises:
      a second cam attached to and extending away from the outer circumferential surface of the second shaft;
      a second gear rotatably attached to the first shaft over the second opening, the second gear comprising second internal teeth; and
      a second lever disposed within the second opening, the second lever having a seat and a tooth, wherein the second lever is movably attached to the first hollow shaft, such that the seat of the second lever is received and rotatable within a recess partially forming the second opening through the portion of the first shaft, and
   wherein the tooth of the second lever is engageable with the second internal teeth of the second gear.
Aspect 5. The torque transmission device of Aspect 4, wherein the first gear has first external teeth, and the second gear has second external teeth,
   wherein a number of the first internal teeth is the same as a number of the second internal teeth, and
   wherein a number of the first external teeth is different than a number of the second external teeth.
Aspect 6. The torque transmission device of Aspect 4 or 5, wherein the second shaft is a cam shaft, and
   wherein the cam shaft comprises:
   a first alignment feature at the outer circumferential surface of the cam shaft; and
   a second alignment feature at the outer circumferential surface of the cam shaft, the second alignment feature being offset relative to the first alignment feature in a circumferential direction of the cam shaft, the second alignment feature being different than the first alignment feature.
Aspect 7. The torque transmission device of Aspect 6, wherein each of the first cam and the second cam is annular and has an inner circumferential surface and an outer circumferential surface,
   wherein each of the first cam and the second cam has a third alignment feature that corresponds to the first alignment feature of the cam shaft, and a fourth alignment feature that corresponds to the second alignment feature of the cam shaft, at the respective inner circumferential surface, and
   wherein the third alignment features of the first cam and the second cam, respectively, engage with the first alignment feature of the cam shaft, and the fourth alignment features of the first cam and the second cam, respectively, engage with the second alignment feature of the cam shaft.
Aspect 8. The torque transmission device of Aspect 7, wherein the first alignment feature is a first groove extending along a length of the cam shaft, the first groove having a first cross-sectional shape,
   wherein the second alignment feature is a second groove extending along the length of the cam shaft, the second groove having a second cross-sectional shape, the second cross-sectional shape being different than the first cross-sectional shape,
   wherein the third alignment feature is a first rib extending across a height of the respective cam of the first cam and the second cam, the first rib having the first cross-sectional shape, and
   wherein the fourth alignment feature is a second rib extending across the height of the respective cam of the first cam and the second cam, the second rib having the second cross-sectional shape.
Aspect 9. The torque transmission device of one of Aspects 4 to 8, wherein each of the first cam and the second cam is annular and has an inner circumferential surface and an outer circumferential surface,
   wherein the first cam comprises a first cam lobe having a first raised surface, the first raised surface being at a first radial distance relative to the outer circumferential surface of the first cam,
   wherein the second cam comprises a second cam lobe having a second raised surface, the second raised surface being at a second radial distance relative to the outer circumferential surface of the second cam,
   wherein the first cam lobe and the second cam lobe are offset circumferentially relative to the second shaft, and
   wherein the tooth of the first lever is configured to engage with the first internal teeth of the first gear when the foot of the first lever is in contact with the first raised surface of the first cam lobe, and the tooth of the second lever is configured to engage with the second internal teeth of the second gear when the foot of the second lever is in contact with the second raised surface of the second cam lobe.
Aspect 10. The torque transmission device of one of the preceding Aspects, wherein the second shaft is hollow,
   wherein the torque transmission device further comprises a shift motor assembly configured to rotate the second shaft relative to the first shaft, the shift motor assembly comprising:
      a shift motor comprising a stator and a rotor;
      a gear reducer engaged with the rotor of the shift motor;
      a printed circuit board electrically and physically connected to the stator of the shift motor; and
      an electrical transmitter configured to transmit electrical signals to and from the printed circuit board,
   wherein at least two components of the group comprising the shift motor, the gear reducer, and the electrical transmitter are disposed within the hollow second shaft.
Aspect 11. The torque transmission device of Aspect 10, wherein the electrical transmitter is a slipring, and
   wherein the shift motor, the gear reducer, and the slipring are all disposed within the hollow second shaft.
Aspect 12. The torque transmission device of one of the preceding Aspects, further comprising a plurality of additional cams attached to and extending away from the outer circumferential surface of the second shaft, the cam and the plurality of additional cams being positioned about and along the second shaft,
   wherein a radially outermost surface of the cam and the plurality of additional cams is opposite and adjacent the inner circumferential surface of the first shaft, such that no cams of the cam and the plurality of additional cams contact the first shaft.
Aspect 13. The torque transmission device of Aspect 12, further comprising:
   an inner race attached to and extending away from the outer circumferential surface of the second shaft;
   a first bearing positioned between the inner race and the inner circumferential surface of the first shaft;
   a second bearing positioned between the second shaft and the inner circumferential surface of the first shaft, the second bearing being a distance away from the first bearing in a direction along a length of the second shaft,
   wherein the second shaft is rotatable relative to the first shaft via the first bearing and the second bearing.
Aspect 14. The torque transmission device of one of the preceding Aspects, wherein the second shaft is hollow,
   wherein the torque transmission device further comprises:
   a shift motor assembly disposed within the second shaft, the shift motor assembly being configured to rotate the second shaft relative to the first shaft, the shift motor assembly comprising:
      a shift motor comprising a stator and a rotor; and
      a gear reducer comprising:
         a housing attached to the second shaft;
         a plurality of gears, wherein a first gear of the plurality of gears is engaged with the rotor of the shift motor; and
         an output shaft engaged with a second gear of the plurality of gears, wherein the output shaft is rotatable relative to the housing; and
   a spring connected to the output shaft of the gear reducer and the first shaft, such that rotation of the output shaft of the gear reducer in a first rotational direction acts on the first shaft and causes the housing of the gear reducer and the second shaft to rotate relative to the first shaft in a second rotational direction, the second rotational direction being opposite the first rotational direction.
Aspect 15. The torque transmission device of Aspect 14, wherein the spring is a flat coil torsion spring having an enclosed opening, a first surface at a first end of the spring, and a second surface at a second end of the spring,
   wherein the first shaft has a notch at least partially defined by a first surface and a second surface extending between the outer circumferential surface and the inner circumferential surface of the first shaft,
   wherein the torque transmission device further comprises a drive arm attached to the output shaft of the gear reducer,
   wherein the enclosed opening of the spring is disposed about the drive arm, such that rotation of the drive arm via the output shaft of the gear reducer acts on the spring, and
   wherein a portion of the spring is disposed within the notch, such that the first surface of the spring is in contact with the first surface of the notch and the second surface of the spring is in contact with the second surface of the notch when the output shaft of the gear reducer is stationary relative to the second shaft.
Aspect 16. The torque transmission device of one of the preceding Aspects, further comprising a shift motor assembly configured to rotate the second shaft relative to the first shaft, the shift motor assembly comprising:
   a shift motor comprising a stator and a rotor, the stator of the shift motor being attached to the second shaft;
   a printed circuit board (PCB) electrically and physically connected to the stator of the shift motor;
   a first sensor supported by and electrically connected to the PCB, the first sensor being configured to generate first data, the first data representing a number of rotations of the rotor of the shift motor;
   a second sensor electrically connected to the PCB, the second sensor being configured to generate second data, the second data representing an absolute rotational position of the second shaft relative to the first shaft; and
   a processor configured to determine a relative position of the second shaft and the rotor of the shift motor based on the generated first data and the generated second data.
Aspect 17. The torque transmission device of Aspect 16, further comprising:
   an electrical transmitter configured to transmit electrical signals to and from the printed circuit board, the electrical transmitter comprising a stator and a rotor, the rotor of the electrical transmitter being attached to the printed circuit board, wherein the second sensor is attached to the rotor of the electrical transmitter;
   a first magnet attached to the rotor of the shift motor, the first sensor being configured to generate the first data comprising the first sensor being configured to sense a rotational position of the first magnet; and
   a second magnet attached to the first shaft adjacent to the second sensor, the second sensor being configured to generate the second data comprising the second sensor being configured to sense an absolute rotational position of the second sensor relative to the second magnet.
Aspect 18. A torque transmission device for a drive unit of a bicycle, the torque transmission device comprising:
   a shaft that is hollow and has an outer circumferential surface, an inner circumferential surface, and an opening extending from the outer circumferential surface, through a thickness of the shaft, to the inner circumferential surface; and
   a lever having a seat, a foot, and a tooth, wherein the lever is movably attached to the shaft, such that the seat of the lever is in contact with and rotatable on a surface at least partially defining the opening,
   wherein the tooth of the lever is engageable with internal teeth of a gear disposable about the shaft, and the foot of the lever is engageable with a cam disposable within the shaft,
   wherein the lever is movably attached to the shaft, such that the foot of the lever is biased away from the outer circumferential surface of the shaft, and
   wherein a distance between the seat of the lever and the foot of the lever is greater than a distance between the tooth of the lever and the seat of the lever.
Aspect 19. The torque transmission device of Aspect 18, wherein the pawl is movably attached to the jackshaft, such that the foot of the pawl is biased away from the outer circumferential surface of the jackshaft.
Aspect 20. A torque transmission device for a drive unit of a bicycle, the torque transmission device comprising:
   a shaft that is hollow and has an outer circumferential surface, an inner circumferential surface, and an opening extending from the outer circumferential surface, through a thickness of the shaft, to the inner circumferential surface; and
   a lever having a seat, a foot, and a tooth, wherein the lever is movably attached to the shaft, such that the seat of the lever is in contact with and rotatable on a surface at least partially defining the opening,
   wherein the tooth of the lever is engageable with internal teeth of a gear disposable about the shaft, and the foot of the lever is engageable with a cam disposable within the shaft,
   wherein the lever is movably attached to the shaft, such that the foot of the lever is biased away from the outer circumferential surface of the shaft, and
   wherein the lever is configured to rotate about an axis of the lever, and translate relative to the shaft and about an axis of the shaft.

## Claims

1. A torque transmission device for a drive unit of an electric bicycle, the torque transmission device comprising:
a first shaft that is hollow and has an outer circumferential surface, an inner circumferential surface, and an opening extending from the outer circumferential surface of the first shaft, through a portion of the first shaft, to the inner circumferential surface of the first shaft, at least one wall extending from the outer circumferential surface of the first shaft, through the portion of the first shaft, to the inner circumferential surface of the first shaft defining the opening;
a second shaft disposed within the first shaft, such that the first shaft and the second shaft are rotatable relative to each other, the second shaft having an outer circumferential surface;
a cam attached to and extending away from the outer circumferential surface of the second shaft;
a gear rotatably attached to the first shaft over the opening, the gear comprising internal teeth;
a lever having a seat, a foot, and a tooth, wherein the lever is movably attached to the first hollow shaft, such that the seat of the lever is received and rotatable within a recess within the at least one wall of the first hollow shaft,
wherein the tooth of the lever is engageable with the internal teeth of the gear, and the foot of the lever is configured to contact the cam extending away from the outer circumferential surface of the second shaft,
wherein the lever is movably attached to the first hollow shaft, such that the foot of the lever is biased away from the outer circumferential surface of the first shaft, and
wherein a distance between the seat of the lever and the foot of the lever is greater than a distance between the tooth of the lever and the seat of the lever.

2. The torque transmission device of claim 1, wherein a distance between the tooth of the lever and the foot of the lever is greater than the distance between the tooth of the lever and the seat of the lever.

3. The torque transmission device of claim 1 or 2, wherein the first shaft also has a groove extending away from the recess within the at least one wall of the first hollow shaft,
wherein the torque transmission device further comprises a spring disposed within the groove, the spring having a first end and a second end opposite the first end,
wherein the first end of the spring is attached to the first shaft at a position along the groove, and the second end of the spring is attached to the lever, such that the lever is biased away from the outer circumferential surface of the first shaft.

4. The torque transmission device of one of the preceding claims, wherein the opening is a first opening, the cam is a first cam, the gear is a first gear, the lever is a first lever, and the internal teeth are first internal teeth,
wherein the first shaft also has a second opening extending from the outer circumferential surface of the first shaft, through the portion of the first shaft, to the inner circumferential surface of the first shaft, the second opening being adjacent to the first opening along a length of the first shaft,
wherein the torque transmission device further comprises:
a second cam attached to and extending away from the outer circumferential surface of the second shaft;
a second gear rotatably attached to the first shaft over the second opening, the second gear comprising second internal teeth; and
a second lever disposed within the second opening, the second lever having a seat and a tooth, wherein the second lever is movably attached to the first hollow shaft, such that the seat of the second lever is received and rotatable within a recess partially forming the second opening through the portion of the first shaft, and
wherein the tooth of the second lever is engageable with the second internal teeth of the second gear,
wherein as optional features:
- the first gear has first external teeth, and the second gear has second external teeth,
- a number of the first internal teeth is the same as a number of the second internal teeth, and
- a number of the first external teeth is different than a number of the second external teeth.

5. The torque transmission device of claim 4, wherein the second shaft is a cam shaft, and
wherein the cam shaft comprises:
a first alignment feature at the outer circumferential surface of the cam shaft; and
a second alignment feature at the outer circumferential surface of the cam shaft, the second alignment feature being offset relative to the first alignment feature in a circumferential direction of the cam shaft, the second alignment feature being different than the first alignment feature.

6. The torque transmission device of claim 5, wherein each of the first cam and the second cam is annular and has an inner circumferential surface and an outer circumferential surface,
wherein each of the first cam and the second cam has a third alignment feature that corresponds to the first alignment feature of the cam shaft, and a fourth alignment feature that corresponds to the second alignment feature of the cam shaft, at the respective inner circumferential surface, and
wherein the third alignment features of the first cam and the second cam, respectively, engage with the first alignment feature of the cam shaft, and the fourth alignment features of the first cam and the second cam, respectively, engage with the second alignment feature of the cam shaft.

7. The torque transmission device of claim 6, wherein the first alignment feature is a first groove extending along a length of the cam shaft, the first groove having a first cross-sectional shape,
wherein the second alignment feature is a second groove extending along the length of the cam shaft, the second groove having a second cross-sectional shape, the second cross-sectional shape being different than the first cross-sectional shape,
wherein the third alignment feature is a first rib extending across a height of the respective cam of the first cam and the second cam, the first rib having the first cross-sectional shape, and
wherein the fourth alignment feature is a second rib extending across the height of the respective cam of the first cam and the second cam, the second rib having the second cross-sectional shape.

8. The torque transmission device of one of claims 4 to 7, wherein each of the first cam and the second cam is annular and has an inner circumferential surface and an outer circumferential surface,
wherein the first cam comprises a first cam lobe having a first raised surface, the first raised surface being at a first radial distance relative to the outer circumferential surface of the first cam,
wherein the second cam comprises a second cam lobe having a second raised surface, the second raised surface being at a second radial distance relative to the outer circumferential surface of the second cam,
wherein the first cam lobe and the second cam lobe are offset circumferentially relative to the second shaft, and
wherein the tooth of the first lever is configured to engage with the first internal teeth of the first gear when the foot of the first lever is in contact with the first raised surface of the first cam lobe, and the tooth of the second lever is configured to engage with the second internal teeth of the second gear when the foot of the second lever is in contact with the second raised surface of the second cam lobe.

9. The torque transmission device of one of the preceding claims, wherein the second shaft is hollow,
wherein the torque transmission device further comprises a shift motor assembly configured to rotate the second shaft relative to the first shaft, the shift motor assembly comprising:
a shift motor comprising a stator and a rotor;
a gear reducer engaged with the rotor of the shift motor;
a printed circuit board electrically and physically connected to the stator of the shift motor; and
an electrical transmitter configured to transmit electrical signals to and from the printed circuit board,
wherein at least two components of the group comprising the shift motor, the gear reducer, and the electrical transmitter are disposed within the hollow second shaft,
wherein as optional features:
- the electrical transmitter is a slipring, and
- the shift motor, the gear reducer, and the slipring are all disposed within the hollow second shaft.

10. The torque transmission device of one of the preceding claims, further comprising a plurality of additional cams attached to and extending away from the outer circumferential surface of the second shaft, the cam and the plurality of additional cams being positioned about and along the second shaft,
wherein a radially outermost surface of the cam and the plurality of additional cams is opposite and adjacent the inner circumferential surface of the first shaft, such that no cams of the cam and the plurality of additional cams contact the first shaft,
further comprising as optional features:
- an inner race attached to and extending away from the outer circumferential surface of the second shaft;
- a first bearing positioned between the inner race and the inner circumferential surface of the first shaft;
- a second bearing positioned between the second shaft and the inner circumferential surface of the first shaft, the second bearing being a distance away from the first bearing in a direction along a length of the second shaft,
- wherein the second shaft is rotatable relative to the first shaft via the first bearing and the second bearing.

11. The torque transmission device of one of the preceding claims, wherein the second shaft is hollow,
wherein the torque transmission device further comprises:
a shift motor assembly disposed within the second shaft, the shift motor assembly being configured to rotate the second shaft relative to the first shaft, the shift motor assembly comprising:
a shift motor comprising a stator and a rotor; and
a gear reducer comprising:
a housing attached to the second shaft;
a plurality of gears, wherein a first gear of the plurality of gears is engaged with the rotor of the shift motor; and
an output shaft engaged with a second gear of the plurality of gears, wherein the output shaft is rotatable relative to the housing; and
a spring connected to the output shaft of the gear reducer and the first shaft, such that rotation of the output shaft of the gear reducer in a first rotational direction acts on the first shaft and causes the housing of the gear reducer and the second shaft to rotate relative to the first shaft in a second rotational direction, the second rotational direction being opposite the first rotational direction.

12. The torque transmission device of claim 11, wherein the spring is a flat coil torsion spring having an enclosed opening, a first surface at a first end of the spring, and a second surface at a second end of the spring,
wherein the first shaft has a notch at least partially defined by a first surface and a second surface extending between the outer circumferential surface and the inner circumferential surface of the first shaft,
wherein the torque transmission device further comprises a drive arm attached to the output shaft of the gear reducer,
wherein the enclosed opening of the spring is disposed about the drive arm, such that rotation of the drive arm via the output shaft of the gear reducer acts on the spring, and
wherein a portion of the spring is disposed within the notch, such that the first surface of the spring is in contact with the first surface of the notch and the second surface of the spring is in contact with the second surface of the notch when the output shaft of the gear reducer is stationary relative to the second shaft.

13. The torque transmission device of one of the preceding claims, further comprising a shift motor assembly configured to rotate the second shaft relative to the first shaft, the shift motor assembly comprising:
a shift motor comprising a stator and a rotor, the stator of the shift motor being attached to the second shaft;
a printed circuit board (PCB) electrically and physically connected to the stator of the shift motor;
a first sensor supported by and electrically connected to the PCB, the first sensor being configured to generate first data, the first data representing a number of rotations of the rotor of the shift motor;
a second sensor electrically connected to the PCB, the second sensor being configured to generate second data, the second data representing an absolute rotational position of the second shaft relative to the first shaft; and
a processor configured to determine a relative position of the second shaft and the rotor of the shift motor based on the generated first data and the generated second data.

14. The torque transmission device of claim 16, further comprising:
an electrical transmitter configured to transmit electrical signals to and from the printed circuit board, the electrical transmitter comprising a stator and a rotor, the rotor of the electrical transmitter being attached to the printed circuit board, wherein the second sensor is attached to the rotor of the electrical transmitter;
a first magnet attached to the rotor of the shift motor, the first sensor being configured to generate the first data comprising the first sensor being configured to sense a rotational position of the first magnet; and
a second magnet attached to the first shaft adjacent to the second sensor, the second sensor being configured to generate the second data comprising the second sensor being configured to sense an absolute rotational position of the second sensor relative to the second magnet.

15. A torque transmission device for a drive unit of a bicycle, the torque transmission device comprising:
a shaft that is hollow and has an outer circumferential surface, an inner circumferential surface, and an opening extending from the outer circumferential surface, through a thickness of the shaft, to the inner circumferential surface; and
a lever having a seat, a foot, and a tooth, wherein the lever is movably attached to the shaft, such that the seat of the lever is in contact with and rotatable on a surface at least partially defining the opening,
wherein the tooth of the lever is engageable with internal teeth of a gear disposable about the shaft, and the foot of the lever is engageable with a cam disposable within the shaft,
wherein the lever is movably attached to the shaft, such that the foot of the lever is biased away from the outer circumferential surface of the shaft, and
wherein a distance between the seat of the lever and the foot of the lever is greater than a distance between the tooth of the lever and the seat of the lever, wherein as an optional feature:
- the pawl is movably attached to the jackshaft, such that the foot of the pawl is biased away from the outer circumferential surface of the jackshaft.

16. A torque transmission device for a drive unit of a bicycle, the torque transmission device comprising:
a shaft that is hollow and has an outer circumferential surface, an inner circumferential surface, and an opening extending from the outer circumferential surface, through a thickness of the shaft, to the inner circumferential surface; and
a lever having a seat, a foot, and a tooth, wherein the lever is movably attached to the shaft, such that the seat of the lever is in contact with and rotatable on a surface at least partially defining the opening,
wherein the tooth of the lever is engageable with internal teeth of a gear disposable about the shaft, and the foot of the lever is engageable with a cam disposable within the shaft,
wherein the lever is movably attached to the shaft, such that the foot of the lever is biased away from the outer circumferential surface of the shaft, and
wherein the lever is configured to rotate about an axis of the lever, and translate relative to the shaft and about an axis of the shaft.
